(19) Europäisches Patentamt
European Patent Office
Office européen des brevets

(11) **EP 4 568 124 A1**

(12) **EUROPEAN PATENT APPLICATION**
published in accordance with Art. 153(4) EPC

(43) Date of publication:
**11.06.2025 Bulletin 2025/24**

(21) Application number: **22953803.8**

(22) Date of filing: **30.09.2022**

(51) International Patent Classification (IPC):
*H04B 7/024* (2017.01)     *H04B 7/06* (2006.01)
*H04B 7/0456* (2017.01)

(52) Cooperative Patent Classification (CPC):
**H04B 7/024; H04B 7/0456; H04B 7/06; H04L 5/00**

(86) International application number:
**PCT/CN2022/123644**

(87) International publication number:
**WO 2024/027011 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.08.2022 PCT/CN2022/109543**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **COEFFICIENT INDICATION METHOD AND APPARATUS THEREOF**

(57)     Disclosed in embodiments of the present application are a coefficient indication method and an apparatus thereof, which may be applied to the technical field of communications. The method comprises: a terminal device receiving codebook parameter information sent by a network device, the codebook parameter information being used for determining the dimension of a combination coefficient matrix corresponding to a plurality of TRPs or a plurality of TRP groups; and sending coefficient position indication information to the network device, wherein the coefficient position indication information is used for indicating the position of a specific coefficient in the combination coefficient matrix. Thus, the network device can determine the coefficient on the basis of the position of the coefficient, and further perform subsequent processing, thereby reducing the feedback overhead of the terminal device in the scenario where the plurality of TRPs or the plurality of TRP groups provide data services for a terminal by means of coherent cooperative transmission.

receiving codebook parameter information sent by a network device, in which the codebook parameter information is used to determine a dimension of a combination coefficient matrix corresponding to multiple TRPs or multiple TRP groups — S301

sending coefficient position indication information to the network device, in which the coefficient position indication information is used to indicate a position of a specific coefficient in the combination coefficient matrix — S302

FIG. 3

**Description**

**CROSS-REFERENCE TO RELATED APPLICATIONS**

This application claims priority to International Application No. PCT/CN2022/109543, entitled with "METHOD AND APPARATUS FOR INDICATING COEFFICIENT" and filed August 1, 2022 by BEIJING XIAOMI MOBILE SOFTWARE CO., LTD.

**TECHNICAL FIELD**

The present disclosure generally relates to the field of communication technologies, and more particularly relates to a method and an apparatus for indicating a coefficient.

**BACKGROUND**

Multi-point coordinated transmission refers to multiple transmission reception points (mTRPs)/multi-panels providing data services for one user. In the scenario of multiple TRPs or multiple TRP groups, currently no method for indicating the position of a coefficient in a combination coefficient matrix exists.

**SUMMARY**

Embodiments of the present disclosure provide a method and an apparatus for indicating a coefficient, which can enable a terminal device to indicate the position of a coefficient in a combination coefficient matrix in the scenario of multiple TRPs or multiple TRP groups, so that a network device can determine the coefficient based on the position of the coefficient and then perform subsequent processing, thereby reducing the feedback overhead of the terminal device in the scenario of multiple TRPs or multiple TRP groups.

In a first aspect, embodiments of the present disclosure provide a method for indicating a coefficient, performed by a terminal device and including: receiving codebook parameter information sent by a network device, in which the codebook parameter information is used to determine a dimension of a combination coefficient matrix corresponding to multiple transmission reception points (TRPs) or multiple TRP groups; and sending coefficient position indication information to the network device, in which the coefficient position indication information is used to indicate a position of a specific coefficient in the combination coefficient matrix.

In embodiments of the present disclosure, the terminal device may receive codebook parameter information sent by the network device, in which the codebook parameter information is used to determine a dimension of a combination coefficient matrix corresponding to multiple TRPs or multiple TRP groups; and send coefficient position indication information to the network device, in which the coefficient position indication information is used to indicate a position of a coefficient in the combination coefficient matrix. Thus, the network device can determine the coefficient based on the position of the coefficient and then perform subsequent processing, thereby reducing the feedback overhead of the terminal device in the scenario of multiple TRPs or multiple TRP groups.

In a second aspect, embodiments of the present disclosure provide a method for indicating a coefficient, performed by a network device and including: sending codebook parameter information to a terminal device, in which the codebook parameter information is used to determine a dimension of a combination coefficient matrix corresponding to multiple TRPs or multiple TRP groups; and receiving coefficient position indication information sent by the terminal device, in which the coefficient position indication information is used to indicate a position of a specific coefficient in the combination coefficient matrix.

In embodiments of the present disclosure, the network device may send codebook parameter information to the terminal device, in which the codebook parameter information is used to determine a dimension of a combination coefficient matrix corresponding to multiple TRPs or multiple TRP groups; and receive coefficient position indication information sent by the terminal device, in which the coefficient position indication information is used to indicate a position of a specific coefficient in the combination coefficient matrix. Thus, the network device can determine the coefficient based on the position of the coefficient and then perform subsequent processing, thereby reducing the feedback overhead of the terminal device in the scenario of multiple TRPs or multiple TRP groups.

In a third aspect, embodiments of the present disclosure provide a communication device, which has some or all of the functions of the terminal device in the method described above in the first aspect. For example, the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In an implementation, the communication device may include a transceiver module and a processing module, and the processing module is configured to support the communication device to perform the corresponding functions in the above method. The transceiver module is used to support the communication between the communication device and other devices. The communication device may further include a storage module, which is used to couple with the transceiver module and the processing module, and store desired computer programs and data for the communication device.

As an example, the processing module may be a processor, the transceiver module may be a transceiver or a communication interface, and the storage module may be a memory.

In a fourth aspect, embodiments of the present disclosure provide another communication device, which has some or all of the functions of the network device in the method example described above in the second aspect. For example, the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In an implementation, the communication device may include a transceiver module and a processing module, and the processing module is configured to support the communication device to perform the corresponding functions in the above method. The transceiver module is used to support the communication between the communication device and other devices. The communication device may further include a storage module, which is used to couple with the transceiver module and the processing module, and store desired computer programs and data for the communication device.

In a fifth aspect, embodiments of the present disclosure provide a communication device, which includes a processor. When the processor calls a computer program in a memory, the method described above in the first aspect is performed.

In a sixth aspect, embodiments of the present disclosure provide a communication device, which includes a processor. When the processor calls a computer program in a memory, the method described above in the second aspect is performed.

In a seventh aspect, embodiments of the present disclosure provide a communication device, which includes a processor and a memory having stored therein a computer program. The processor executes the computer program stored in the memory, so that the communication device performs the method described above in the first aspect.

In an eighth aspect, embodiments of the present disclosure provide a communication device, which includes a processor and a memory having stored therein a computer program. The processor executes the computer program stored in the memory, so that the communication device performs the method described above in the second aspect.

In a ninth aspect, embodiments of the present disclosure provide a communication device, which includes a processor and an interface circuit, in which the interface circuit is configured to receive code instructions and transmit the code instructions to the processor, and the processor is configured to run the code instructions to enable the device to execute the method described above in the first aspect.

In a tenth aspect, embodiments of the present disclosure provide a communication device, which includes a processor and an interface circuit, in which the interface circuit is configured to receive code instructions and transmit the code instructions to the processor, and the processor is configured to run the code instructions to enable the device to execute the method described above in the second aspect.

In an eleventh aspect, embodiments of the present disclosure provide a communication system. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the present disclosure provide a computer-readable storage medium for storing instructions used by the above-mentioned terminal device, and when the instructions are executed, the terminal device performs the method described above in the first aspect.

In a thirteenth aspect, embodiments of the present disclosure provide a readable storage medium for storing instructions used by the above-mentioned network device, and when the instructions are executed, the network device performs the method described above in the second aspect.

In a fourteenth aspect, the present disclosure further provides a computer program product including a computer program, and when the computer program is run on a computer, the computer is enabled to execute the method described above in the first aspect.

In a fifteenth aspect, the present disclosure further provides a computer program product comprising a computer program, and when the computer program is run on a computer, the computer is enabled to execute the method described above in the second aspect.

In a sixteenth aspect, the present disclosure provides a chip system, which includes at least one processor and an interface, used to support a terminal device to implement the functions involved in the first aspect, for example, determining or processing at least one of the data and information involved in the above method. In a possible design, the chip system further includes a memory, which is used to store desired computer programs and data for the terminal device. The chip system may be composed of a chip, or may include a chip and other discrete devices.

In a seventeenth aspect, the present disclosure provides a chip system, which includes at least one processor and an interface, used to support a network device to implement the functions involved in the second aspect, for example, determining or processing at least one of the data and information involved in the above method. In a possible design, the chip system further includes a memory, and the memory is used to store desired computer programs and data for the network device. The chip system may be composed of a chip, or may include a chip and other discrete devices.

In an eighteenth aspect, the present disclosure provides a computer program, and when the computer program is run on a computer, the computer is enabled to perform the method described above in the first aspect.

In a nineteenth aspect, the present disclosure provides a computer program, and when the computer program is run on a computer, the computer is enabled to perform the method described above in the second aspect.

**BRIEF DESCRIPTION OF THE DRAWINGS**

In order to more clearly illustrate the technical solutions in the embodiments of the present disclosure or the background, the drawings used in the embodiments of the present disclosure or the background will be described below.

FIG. 1 is a schematic diagram of a multi-point coordinated transmission provided in an embodiment of the present disclosure.

FIG. 2 is a schematic diagram of an architecture of a communication system provided in an embodiment of the present disclosure.

FIG. 3 is a schematic flowchart of a method for indicating a coefficient provided in an embodiment of the present disclosure.

FIG. 4 is a schematic flowchart of another method for indicating a coefficient provided in an embodiment of the present disclosure.

FIG. 5 is a schematic flowchart of another method for indicating a coefficient provided in an embodiment of the present disclosure.

FIG. 5a is a schematic flowchart of another method for indicating a coefficient provided in an embodiment of the present disclosure.

FIG. 5b is a schematic flowchart of another method for indicating a coefficient provided in an embodiment of the present disclosure.

FIG. 6 is a schematic flowchart of another method for indicating a coefficient provided in an embodiment of the present disclosure.

FIG. 7 is a schematic flowchart of another method for indicating a coefficient provided in an embodiment of the present disclosure.

FIG. 7a is a schematic flowchart of another method for indicating a coefficient provided in an embodiment of the present disclosure.

FIG. 7b is a schematic flowchart of another method for indicating a coefficient provided in an embodiment of the present disclosure.

FIG. 8 is a schematic flowchart of another method for indicating a coefficient provided in an embodiment of the present disclosure.

FIG. 9 is a schematic flowchart of another method for indicating a coefficient provided in an embodiment of the present disclosure.

FIG. 10 is a schematic flowchart of another method for indicating a coefficient provided in an embodiment of the present disclosure.

FIG. 11 is a schematic flowchart of another method for indicating a coefficient provided in an embodiment of the present disclosure.

FIG. 12 is a schematic flowchart of another method for indicating a coefficient provided in an embodiment of the present disclosure.

FIG. 13 is a schematic flowchart of another method for indicating a coefficient provided in an embodiment of the present disclosure.

FIG. 14 is a schematic flowchart of another method for indicating a coefficient provided in an embodiment of the present disclosure.

FIG. 15 is a schematic flowchart of another method for indicating a coefficient provided in an embodiment of the present disclosure.

FIG. 16 is a schematic flowchart of another method for indicating a coefficient provided in an embodiment of the present disclosure.

FIG. 17 is a schematic block diagram of a communication device provided in an embodiment of the present disclosure.

FIG. 18 is a schematic block diagram of another communication device provided in an embodiment of the present disclosure.

FIG. 19 is a schematic block diagram of a chip provided in an embodiment of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit embodiments of the present disclosure. As used in the embodiments of the present disclosure and the appended claims, "a/an", and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly the second information may also be referred to as the first information, without departing from the scope of embodiments of the present disclosure. As used herein, the term "if" may be construed to mean "when" or "upon" or "in response to determining" depending on the context. For the purpose of brevity and ease of the understanding, the terms used in this document to represent size relationships are "greater than" or "less than", "higher than" or "lower than". However, it may be understood by those skilled in the art that the term "greater than" also covers the meaning of "greater than or equal to", and the term "less than" also covers the meaning of "less than or equal to"; the term "higher than" covers the meaning of "higher than or equal to", and the term "lower than" also covers the meaning of "lower than or equal to".

For the ease of the understanding, terms involved in the present disclosure are first introduced.

1. Spatial domain (SD) basis vector

In an embodiment of the present disclosure, the spatial domain may include a transmitting side spatial domain and a receiving side spatial domain, and the spatial domain basis vector may be determined based on the transmitting side spatial domain basis vector. Each transmitting side spatial domain basis vector may correspond to a transmitting beam of a transmitting device. Each receiving side spatial domain basis vector may correspond to a receiving beam of a receiving device.

The following description will be made using the transmitting side spatial basis vector as an example, and the receiving side spatial basis vector is similar to the transmitting side spatial basis vector. The transmitting side spatial basis vector is usually associated with the expression of the transmitting side antenna array. For example, many parameters involved in the transmitting side spatial basis vector may be understood as different properties used to represent the transmitting side antenna array. Therefore, in order to facilitate the understanding of the transmitting side spatial basis vector involved in an embodiment of the present disclosure, the transmitting side spatial basis vector will be described below in conjunction with the transmitting side antenna array. Nevertheless, those skilled in the art should understand that the transmitting side spatial basis vector involved in an embodiment of the present disclosure is not limited to a specific antenna array. In the specific implementation process, a suitable antenna array may be selected according to specific needs, and various parameters involved in the transmitting side spatial basis vector involved in an embodiment of the present disclosure are set based on the selected antenna array.

2. Frequency domain (FD) basis vector

The frequency domain basis vector is used to represent the variation rule of a channel in the frequency domain. The frequency domain basis vector may be used to specifically represent the variation rule of weighted coefficients of each spatial domain basis vector in each frequency domain unit. The change rule represented by the frequency domain basis vector is related to factors such as multipath delay. It is understandable that when a signal is transmitted through a wireless channel, there may be different transmission delays on different transmission paths. The variation rule of the channel in the frequency domain caused by different transmission delays may be represented by different frequency domain basis vectors.

3. Multi-point coordinated transmission technology

The multi-point coordinated transmission technology may be roughly divided into two types: a coherent joint transmission (CJT) and an incoherent joint transmission (NCJT). The so-called CJT means that each data stream will be mapped to the m-TRP/panel participating in the collaboration through a weighted vector. The CJT is equivalent to splicing multiple sub-arrays into a higher-dimensional virtual array to obtain a higher shaping or precoding gain.

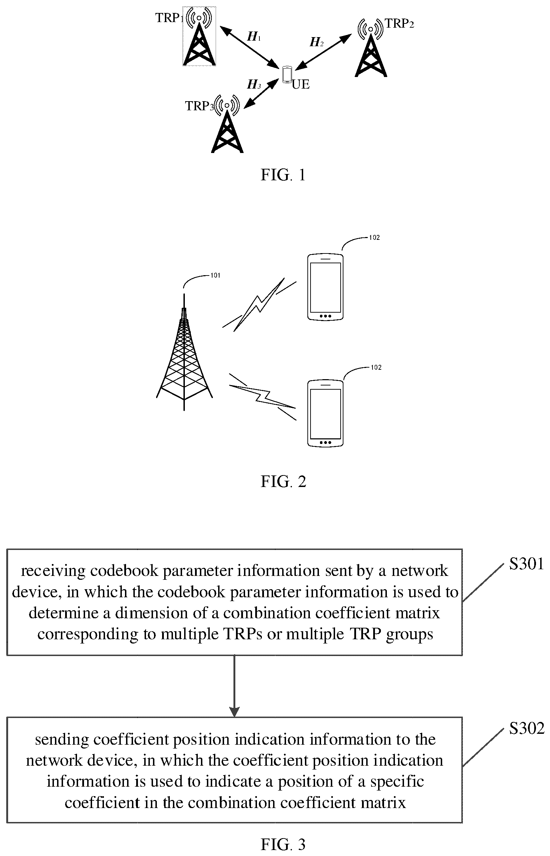

FIG. 1 shows a scenario in which three TRPs serve a terminal device (e.g., user equipment UE) through a CJT, and the channels from the terminal device to individual TRPs are represented as $H_1$, $H_2$, and $H_3$, respectively. When calculating the precoding of the terminal device, these channels may be combined together and regarded as a higher-dimensional channel, namely $H = [H_1^T, H_2^T, H_3^T]^T$, and then the downlink data transmission precoding of the terminal device is calculated based on H.

When multiple TRPs perform CJT, the following optional codebook structure may be used to calculate the downlink data transmission precoding for a user:

$$\text{Alt1A:} \begin{bmatrix} (a_1 p_1) \times W_{1,1} \widetilde{W}_{2,1} W_{f,1}^H \\ \vdots \\ (a_N p_N) \times W_{1,N} \widetilde{W}_{2,N} W_{f,N}^H \end{bmatrix}$$

$$\text{Alt1B:} \begin{bmatrix} (a_1 p_1) \times W_{SF,1} \widetilde{W}_{2,1} \\ \vdots \\ (a_N p_N) \times W_{SF,N} \widetilde{W}_{2,N} \end{bmatrix}$$

$$\text{Alt2:} \begin{bmatrix} W_{1,1} & 0 & 0 & 0 \\ 0 & \ddots & 0 & 0 \\ 0 & 0 & & W_{1,N} \\ 0 & 0 & & \end{bmatrix} \widetilde{W}_2 W_f^H$$

where $a_n$ and $p_n$ respectively represent a phase factor and an amplitude factor corresponding to an $n^{th}$ TRP. $W_{1,n}$ represents an SD basis vector corresponding to the $n^{th}$ TRP, $\widetilde{W}_{2,n}$ represents a combination coefficient matrix corresponding to the $n^{th}$ TRP, $W_{f,n}$ represents a FD basis vector corresponding to the $n^{th}$ TRP, $W_{SF,n}$ represents the combination of SD and FD basis vectors corresponding to the $n^{th}$ TRP, $\widetilde{W}_2$ represents the combination coefficient matrix corresponding to N TRPs, and $W_f$ represents the FD basis vectors corresponding to N TRPs.

For the combination coefficient matrix $\widetilde{W}_2$ in the Rel-16/17 Type II codebook structure, the quantization is performed using a differential method in a polarization direction to improve the quantization accuracy of the combination coefficient matrix. That is, each combination coefficient in the combination coefficient matrix may be expressed as the product of two elements, as shown in the following formula:

$$\widetilde{W}_2 = \begin{bmatrix} r_0 d_{1,1}^0 & \cdots & r_0 d_{1,M}^0 \\ \vdots & \ddots & \vdots \\ r_0 d_{L,1}^0 & \cdots & r_0 d_{L,M}^0 \\ r_1 d_{L+1,1}^1 & \cdots & r_1 d_{L+1,M}^1 \\ \vdots & \ddots & \vdots \\ r_1 d_{2L,1}^1 & \cdots & r_1 d_{2L,M}^1 \end{bmatrix}$$

In the above formula, $r_0$ and $r_1$ represent a reference amplitude in a first polarization direction and a reference amplitude in a second polarization direction, respectively, $d_{l,m}^p$ represents the coefficient at the first row and the $m^{th}$ column in a $p^{th}$ polarization direction in the combination coefficient matrix $\tilde{W}_2$, and the coefficient may be represented by the corresponding differential amplitude and differential phase. The reference amplitude is quantized with 4 bits, and the differential amplitude and differential phase are quantized with 3 bits and 4 bits, respectively.

Before performing differential quantization on $\tilde{W}_2$, the combination coefficients in the combination coefficient matrix need to be first normalized. The combination coefficient matrix after normalization of the combination coefficients contains a strongest combination coefficient with an amplitude of 1. The reference amplitude $r_0$ or $r_1$ corresponding to the polarization direction where the strongest combination coefficient is located is not reported. In order to reduce the feedback overhead of the terminal device, in the scenario of one TRP, the terminal device does not quantize and report the strongest combination coefficient, but only reports less indication information to indicate the position of the strongest combination coefficient in the combination coefficient matrix corresponding to one TRP. For the Rel-16 Type II codebook, the terminal device indicates the position of the strongest combination coefficient in the combination coefficient matrix corresponding to one TRP by reporting $\lceil \log_2 K^{NZ} \rceil$ or $\lceil \log_2(2L) \rceil$ bits, where $K^{NZ}$ represents the total number of non-zero coefficients in the combination coefficient matrix when rank = 1; and L represents the number of SD basis vectors. For Rel-17 Type II port selection, the terminal device indicates the position of the strongest combination coefficient in the combination coefficient matrix corresponding to one TRP by reporting $\lceil \log_2(K_1 M) \rceil$ bits.

In order to better understand a method for indicating a coefficient in an embodiment of the present disclosure, a communication system to which the embodiments of the present disclosure is applicable is first described below.

FIG. 2 is a schematic diagram of the architecture of a communication system provided in an embodiment of the present disclosure. The communication system may include, but is not limited to, one network device and one terminal device. The number and form of devices shown in FIG. 2 are only used as examples and do not constitute a limitation on the embodiments of the present disclosure. In actual applications, two or more network devices and two or more terminals may be included. The communication system shown in FIG. 2 includes, for example, a network device 101 and a terminal device 102.

It should be noted that the technical solution in the embodiments of the present disclosure may be applied to various communication systems, such as a long term evolution (LTE) system, a fifth generation (5G) mobile communication system, a 5G new radio (NR) system, or other future new mobile communication systems. It should also be noted that the sidelink in an embodiment of the present disclosure may also be called a side link or a direct link.

The network device 101 in an embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the network device are not limited in the embodiments of the present disclosure. The network device provided in the embodiments of the present disclosure may include a central unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of the remaining part or all of the protocol layers are distributed in the DU, and the DU is centrally controlled by the CU.

The terminal device 102 in an embodiment of the present disclosure is an entity on the user side for receiving or transmitting signals, such as a mobile phone. The terminal device may also be referred to as a terminal device (terminal), a user equipment (UE), a mobile station (MS), a mobile terminal (MT), etc. The terminal device may be a car with a communication function, a smart car, a mobile phone, a wearable device, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the present disclosure.

In sidelink communication, there are 4 sidelink transmission modes. Side link transmission mode 1 and side link transmission mode 2 are used for a device-to-device (D2D) communication of the terminal device. Sidelink transmission mode 3 and sidelink transmission mode 4 are used for a V2X communication. When sidelink transmission mode 3 is adopted, resource allocation is scheduled by the network device 101. Specifically, the network device 101 may send resource allocation information to the terminal device 102, and then the terminal device 102 allocates resources to a different terminal device, so that the different terminal device can send information to the network device 101 through the allocated resources. In the V2X communication, a terminal device with a better signal or higher reliability may be used as the terminal device 102. The first terminal device mentioned in the embodiments of the present disclosure may refer to the terminal device 102, and the second terminal device may refer to the different terminal device.

It may be understood that the communication system described in this embodiment of the present disclosure is for the purpose of more clearly illustrating the technical solution of the embodiments of the present disclosure, and does not constitute a limitation on the technical solution provided in the embodiments of the present disclosure. Those of ordinary skill in the art may know that with the evolution of the system architecture and the emergence of new business scenarios, the technical solution provided in the embodiments of the present disclosure is also applicable to similar technical problems.

It should be noted that the method for indicating the coefficient provided in any embodiment of the present disclosure may be executed alone, or may be executed in combination with possible implementation methods in other embodiments, or may be executed in combination with any technical solution in the related technology.

The method and the apparatus for indicating the coefficient provided in the present disclosure are described in detail below in conjunction with the accompanying drawings.

FIG. 3 is a schematic flowchart of a method for indicating a coefficient provided in an embodiment of the present disclosure. The method for indicating the coefficient is performed by a terminal device. As shown in FIG. 3, the method may include, but is not limited to, the following steps.

At step S301, codebook parameter information sent by a network device is received, in which the codebook parameter information is used to determine a dimension of a combination coefficient matrix corresponding to multiple TRPs or multiple TRP groups.

In an embodiment of the present disclosure, in one example, the codebook parameter information may be used to determine the dimension of the combination coefficient matrix corresponding to multiple TRPs. Among the multiple TRPs, each TRP corresponds to one combination coefficient matrix. In another example, the codebook parameter information may be used to determine the dimension of the combination coefficient matrix corresponding to multiple TRP groups. Among the multiple TRP groups, each TRP group corresponds to one combination coefficient matrix. A TRP group may include one or more TRPs.

In an embodiment of the present disclosure, the codebook parameter information includes the number of TRPs/TRP groups, and the number of basis vectors corresponding to one TRP/TRP group or multiple TRPs/TRP groups; and the number of basis vectors includes at least one of: the number of SD basis vectors, the number of FD basis vectors, the number of ports, or the number of SD-FD basis vector pairs. The number of ports herein refers to the number of channel state information reference signal (CSI-RS) ports.

In an embodiment of the present disclosure, in case that the codebook parameter information is used to determine the dimension of the combination coefficient matrix corresponding to multiple TRPs, the codebook parameter information may include the number of TRPs, and the number of basis vectors corresponding to one TRP or multiple TRPs. In one example, the codebook parameter information may include the number of TRPs, and the number of basis vectors corresponding to one TRP. In another example, the codebook parameter information may include the number of TRPs, and the number of basis vectors corresponding to multiple TRPs. The number of basis vectors corresponding to multiple TRPs refers to the total number of the respective basis vectors in all TRPs.

The multiple TRPs may be located in the same TRP group or in different TRP groups. The TRP groups to which any two TRPs belong may be the same or different, and there is no specific limitation on this here.

The terminal device can determine the dimension of the combination coefficient matrix corresponding to multiple TRPs based on the codebook parameter information configured by the network device, and thus determine the combination coefficient matrix corresponding to multiple TRPs.

In case that the codebook parameter information is used to determine the dimension of the combination coefficient matrix corresponding to multiple TRP groups, the codebook parameter information may include the number of TRP groups, and the number of basis vectors corresponding to one TRP group or multiple TRP groups. In one example, the codebook parameter information may include the number of TRP groups, and the number of basis vectors corresponding to one TRP. In another example, the codebook parameter information may include the number of TRP groups, and the number of basis vectors corresponding to multiple TRP groups. The number of basis vectors corresponding to multiple TRP groups refers to the total number of the respective basis vectors in all TRP groups.

The terminal device can determine the dimension of the combination coefficient matrix corresponding to multiple TRP groups based on the codebook parameter information configured by the network device, and thus determine the combination coefficient matrix corresponding to multiple TRP groups.

At step S302, coefficient position indication information is sent to the network device, in which the coefficient position indication information is used to indicate a position of a specific coefficient in the combination coefficient matrix.

In an embodiment of the present disclosure, the coefficient includes at least one of: a strongest combination coefficient, a strongest reference amplitude, or a strongest amplitude. For multiple TRPs or multiple TRP groups, the number of the strongest combination coefficients may be one or more.

In case that the codebook parameter information is used to determine the dimension of the combination coefficient matrix corresponding to multiple TRPs, the terminal device can determine the combination coefficient matrix corresponding to multiple TRPs, in which each TRP can correspond to one combination coefficient matrix. In one example, for the combination coefficient matrices corresponding to multiple TRPs, the multiple combination coefficient matrices may be combined into one combination coefficient matrix, combination coefficients in the combination coefficient matrix are normalized to obtain a processed combination coefficient matrix, and there is one strongest combination coefficient in the processed combination coefficient matrix. In another example, for the combination coefficient matrices corresponding to multiple TRPs, coefficient matrices in individual combination coefficient matrices may be normalized separately to obtain multiple processed combination coefficient matrices each having one strongest combination coefficient, that is, multiple strongest combination coefficients. There may be one strongest reference amplitude and/or one strongest amplitude in the multiple combination coefficient matrices.

In case that the codebook parameter information is used to determine the dimension of the combination coefficient matrix corresponding to multiple TRP groups, the terminal device can determine the combination coefficient matrix corresponding to multiple TRP groups, in which each TRP group can correspond to one combination coefficient matrix. In one example, for the combination coefficient matrices corresponding to multiple TRP groups, the multiple combination coefficient matrices may be combined into one combination coefficient matrix, combination coefficients in the combination coefficient matrix are normalized to obtain a processed combination coefficient matrix, and there is one strongest combination coefficient in the processed combination coefficient matrix. In another example, for the combination coefficient matrices corresponding to multiple TRP groups, coefficient matrices in individual combination coefficient matrices may be normalized separately to obtain multiple processed combination coefficient matrices each having one strongest combination coefficient, that is, multiple strongest combination coefficients. There may be one strongest reference amplitude and/or one strongest amplitude in the multiple combination coefficient matrices.

In an embodiment of the present disclosure, the position indication information of the strongest coefficient may be determined according to the codebook parameter information configured by the network device, or according to the number of coefficients in the combination coefficient matrix corresponding to multiple TRPs or multiple TRP groups, or according to the number of non-zero coefficients in the combination coefficient matrix corresponding to multiple TRPs or multiple TRP groups. This is not specifically limited here and may be selected according to actual needs.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs or multiple TRP groups; and the terminal device can send the coefficient position indication information to the network device, in which the coefficient position indication information is used to indicate the position of a specific coefficient in the combination coefficient matrix. Thus, the position of the coefficient in the combination coefficient matrix is indicated in the scenario of multiple TRPs or multiple TRP groups, so that the network device can determine the coefficient based on the position of the coefficient, and then perform subsequent processing, thereby reducing the feedback overhead of the terminal device while maintaining the performance of the system.

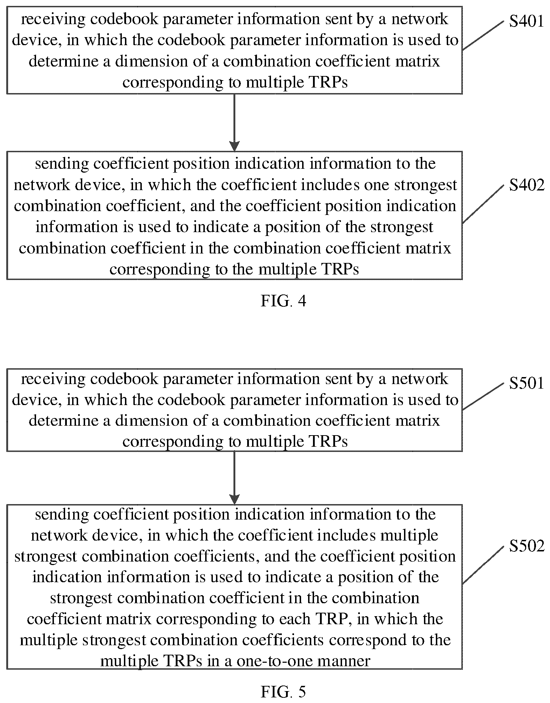

FIG. 4 is a schematic flowchart of another method for indicating a coefficient provided in an embodiment of the present disclosure. The method for indicating the coefficient is performed by a terminal device. As shown in FIG. 4, the method may include, but is not limited to, the following steps.

At step S401, codebook parameter information sent by a network device is received, in which the codebook parameter information is used to determine a dimension of a combination coefficient matrix corresponding to multiple TRPs.

At step S402, coefficient position indication information is sent to the network device, in which the coefficient includes one strongest combination coefficient, and the coefficient position indication information is used to indicate a position of the strongest combination coefficient in the combination coefficient matrix corresponding to the multiple TRPs.

In an embodiment of the present disclosure, each TRP can correspond to one combination coefficient matrix. For the combination coefficient matrices corresponding to multiple TRPs, the multiple combination coefficient matrices may be combined into one combination coefficient matrix, combination coefficients in the combination coefficient matrix are normalized to obtain a processed combination coefficient matrix, and there is one strongest combination coefficient in the processed combination coefficient matrix.

In one example, the coefficient position indication information may be directly used to indicate the position of the strongest combination coefficient in the combination coefficient matrix corresponding to multiple TRPs. In another example, the first TRP is not predefined and is not configured by the network device, and the coefficient position indication information includes first indication information for indicating the first TRP corresponding to the strongest combination coefficient, and second indication information for indicating the position of the strongest combination coefficient in the combination coefficient matrix corresponding to the first TRP. In another example, the coefficient position indication information includes second indication information for indicating the position of the strongest combination coefficient in the combination coefficient matrix corresponding to the first TRP, and the first TRP is predefined or configured by the network device.

In an embodiment of the present disclosure, in case that the coefficient position indication information is directly used to indicate the position of the strongest combination coefficient in the combination coefficient matrix corresponding to multiple TRPs, the coefficient position indication information may be indicated by at least one of:

$$\lceil \log_2(\sum_{n=1}^{N} 2L_n M_n)\rceil \text{ bits}, \quad \lceil \log_2(\sum_{n=1}^{N} 2L_n)\rceil \text{ bits}, \text{ or } \quad \lceil \log_2(K_{tot})\rceil,$$

where N represents the number of TRPs, $L_n$ represents the number of SD basis vectors or the number of ports of an $n^{th}$ TRP, $M_n$ represents the number of FD basis vectors of the $n^{th}$ TRP, and $K_{tot}$ represents the total number of non-zero coefficients in a combination coefficient matrix of one transmission layer corresponding to the multiple TRPs. The number of ports herein refers to the number of CSI-RS ports.

The method for indicating the coefficient position indication information in this embodiment may be applicable to any one of the following codebook structures: Alt1A, Alt1B and Alt2.

In an embodiment of the present disclosure, in case that the coefficient position indication information includes first indication information for indicating a first TRP corresponding to the strongest combination coefficient and second indication information for indicating the position of the strongest combination coefficient in the combination coefficient matrix corresponding to the first TRP, in one example, the first indication information may be indicated by $\lceil \log_2 N\rceil$ bits, and the second indication information may be indicated by $\lceil \log_2(2L_n M_n)\rceil \text{ bits}$, where N represents the number of TRPs, $L_n$ represents the number of SD basis vectors or the number of ports of an $n^{th}$ TRP, $M_n$ represents the number of FD basis vectors of the $n^{th}$ TRP, and the $n^{th}$ TRP is the first TRP.

It should be noted that, in the codebook parameter information configured by the network device, a different number of FD basis vectors may be configured for TRPs, or a different number of SD basis vectors may be configured for TRPs. The method for indicating the first indication information and the second indication information in this embodiment may be applicable to any one of the following codebook structures: Alt1A, Alt1B and Alt2. $\lceil \log_2 N\rceil$ means rounding up of $\log_2 N$ to an integer. For example, in the case where $\log_2 N$ is 0.8, $\lceil \log_2 N\rceil$ may be 1. The number 2 in front of $L_n$ in the formula of the second indication information indicates that there are two polarization directions. If the number of polarization directions is another number, 2 may be replaced by the actual number of polarization directions.

In an embodiment of the present disclosure, in case that the coefficient position indication information includes first indication information for indicating a first TRP corresponding to the strongest combination coefficient and second indication information for indicating the position of the strongest combination coefficient in the combination coefficient matrix corresponding to the first TRP, in another example, the first indication information may be indicated by $\lceil \log_2 N\rceil \text{ bits}$, and the second indication information may be indicated by any one of $\lceil \log_2(2L_n)\rceil \text{ bits}$, and $\lceil \log_2(K_n^{NZ})\rceil \text{ bits}$, where N represents the number of TRPs, $L_n$ represents the number of SD basis vectors or the number of ports of an $n^{th}$ TRP, $K_n^{NZ}$ represents the number of non-zero coefficients in a combination coefficient matrix of one transmission layer corresponding to the $n^{th}$ TRP, and the $n^{th}$ TRP is the first TRP.

The method for indicating the first indication information and the second indication information in this embodiment may be applicable to the Alt1A codebook structure.

Optionally, in case that the combination coefficient matrices corresponding to multiple TRPs are combined into one combination coefficient matrix, and combination coefficients in the combination coefficient matrix are normalized to obtain a processed combination coefficient matrix, if the processed combination coefficient matrix is column-permuted to permute the column where the strongest combination coefficient is located to the first column, the second indication information may be indicated by $\lceil \log_2(2L_n)\rceil \text{ bits}$. If the processed combination coefficient matrix is not subjected to column permutation to permute the column where the strongest combination coefficient is located to the first column, the second indication information may be indicated by $\lceil \log_2(K_n^{NZ})\rceil \text{ bits}$.

In an embodiment of the present disclosure, in case that the coefficient position indication information includes second indication information for indicating the position of the strongest combination coefficient in the combination coefficient matrix corresponding to the first TRP, in one example, the second indication information may be indicated by $\lceil \log_2(2L_n M_n)\rceil \text{ bits}$. The method for indicating the second indication information in this example may be applicable to any one of the following codebook structures: Alt1A, Alt1B and Alt2.

In another example, the second indication information may be indicated by any one of: $\lceil \log_2(2L_n) \rceil$ bits and $\lceil \log_2(K_n^{NZ}) \rceil$ bits. The method for indicating the second indication information in this example may be applicable to the Alt1A codebook structure.

This will be illustrated below by way of example. Assuming that the number of TRPs is 2, that is, there are 2 TRPs providing services to a terminal device located at the edge of a cell through CJT, the network device configures the number of FD basis vectors corresponding to two TRPs for the terminal device as $M_n = 4$, the number of SD basis vectors corresponding to each TRP in one polarization direction is $L_n = 2$, and the number of polarization directions is 2, then the terminal device calculates the combination coefficient matrices corresponding to the two TRPs according to downlink channel information from the two TRPs to the terminal device, and combines the two combination coefficient matrices to obtain one combination coefficient matrix:

$$\widetilde{W}_2 = \begin{bmatrix} c_{1,1}^{0,1} & c_{1,2}^{0,1} & c_{1,3}^{0,1} & c_{1,4}^{0,1} \\ c_{2,1}^{0,1} & c_{2,2}^{0,1} & c_{2,3}^{0,1} & c_{2,4}^{0,1} \\ c_{3,1}^{1,1} & c_{3,2}^{1,1} & c_{3,3}^{1,1} & c_{3,4}^{1,1} \\ c_{4,1}^{1,1} & c_{4,2}^{1,1} & c_{4,3}^{1,1} & c_{4,4}^{1,1} \\ c_{1,1}^{0,2} & c_{1,2}^{0,2} & c_{1,3}^{0,2} & c_{1,4}^{0,2} \\ c_{2,1}^{0,2} & c_{2,2}^{0,2} & c_{2,3}^{0,2} & c_{2,4}^{0,2} \\ c_{3,1}^{1,2} & c_{3,2}^{1,2} & c_{3,3}^{1,2} & c_{3,4}^{1,2} \\ c_{4,1}^{1,2} & c_{4,2}^{1,2} & c_{4,3}^{1,2} & c_{4,4}^{1,2} \end{bmatrix}$$

Assuming that the combination coefficient including the maximum coefficient is $c_{2,2}^{0,1}$, after normalizing the combination coefficients in the combination coefficient matrix $\tilde{W}_2$, the following combination coefficient matrix is obtained:

$$\widetilde{W'}_2 = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & 1 & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \\ r_0 d_{1,1}^{0,2} & r_0 d_{1,2}^{0,2} & r_0 d_{1,3}^{0,2} & r_0 d_{1,4}^{0,2} \\ r_0 d_{2,1}^{0,2} & r_0 d_{2,2}^{0,2} & r_0 d_{2,3}^{0,2} & r_0 d_{2,4}^{0,2} \\ r_1 d_{3,1}^{1,2} & r_1 d_{3,2}^{1,2} & r_1 d_{3,3}^{1,2} & r_1 d_{3,4}^{1,2} \\ r_1 d_{4,1}^{1,2} & r_1 d_{4,2}^{1,2} & r_1 d_{4,3}^{1,2} & r_1 d_{4,4}^{1,2} \end{bmatrix}$$

Assuming that the first TRP and the second TRP use the same reference amplitude in the same polarization direction, there are reference amplitudes $r_0$ and $r_1$ in two polarization directions, the strongest combination coefficient is 1 and is located in the first polarization direction, so the reference amplitude corresponding to the first polarization direction where the strongest combination coefficient is located is $r_0 = 1$. $r_0 = 1$ and the strongest combination coefficient 1 are not reported. The terminal device reports $\lceil \log_2 N \rceil = 1$ bit to indicate which TRP corresponding to the combination coefficient matrix where the strongest combination coefficient is located, for example, the first TRP; and then reports $\lceil \log_2(2L_n M_n) \rceil = 3$ bits to indicate the position of the strongest combination coefficient in the combination coefficient matrix corresponding to the first TRP.

Optionally, the terminal device may perform column permutation on the combination coefficient matrix corresponding to the two TRPs, and permute the column where the strongest combination coefficient is located to the first column in the combination coefficient matrix, so as to obtain the following combination coefficient matrix:

$$\widetilde{W}_2'' = \begin{bmatrix} r_0 d_{1,2}^{0,1} & r_0 d_{1,1}^{0,1} & r_0 d_{1,3}^{0,1} & r_0 d_{1,4}^{0,1} \\ 1 & r_0 d_{2,1}^{0,1} & r_0 d_{2,3}^{0,1} & r_0 d_{2,4}^{0,1} \\ r_1 d_{3,2}^{1,1} & r_1 d_{3,1}^{1,1} & r_1 d_{3,3}^{1,1} & r_1 d_{3,4}^{1,1} \\ r_1 d_{4,2}^{1,1} & r_1 d_{4,1}^{1,1} & r_1 d_{4,3}^{1,1} & r_1 d_{4,4}^{1,1} \\ r_0 d_{1,2}^{0,2} & r_0 d_{1,1}^{0,2} & r_0 d_{1,3}^{0,2} & r_0 d_{1,4}^{0,2} \\ r_0 d_{2,2}^{0,2} & r_0 d_{2,1}^{0,2} & r_0 d_{2,3}^{0,2} & r_0 d_{2,4}^{0,2} \\ r_1 d_{3,2}^{1,2} & r_1 d_{3,1}^{1,2} & r_1 d_{3,3}^{1,2} & r_1 d_{3,4}^{1,2} \\ r_1 d_{4,2}^{1,2} & r_1 d_{4,1}^{1,2} & r_1 d_{4,3}^{1,2} & r_1 d_{4,4}^{1,2} \end{bmatrix}$$

At this time, the terminal device can report $\lceil \log_2 2L_n \rceil = 2$ bits to indicate the position of the strongest combination coefficient in the combination coefficient matrix corresponding to the first TRP.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; and the terminal device can send the coefficient position indication information to the network device, in which the coefficient includes one strongest combination coefficient, and the coefficient position indication information is used to indicate the position of the strongest combination coefficient in the combination coefficient matrix corresponding to the multiple TRPs. Thus, the position of the coefficient in the combination coefficient matrix is indicated in the scenario of multiple TRPs, so that the network device can determine the coefficient based on the position of the coefficient, and then perform subsequent processing, thereby reducing the feedback overhead of the terminal device while maintaining the performance of the system.

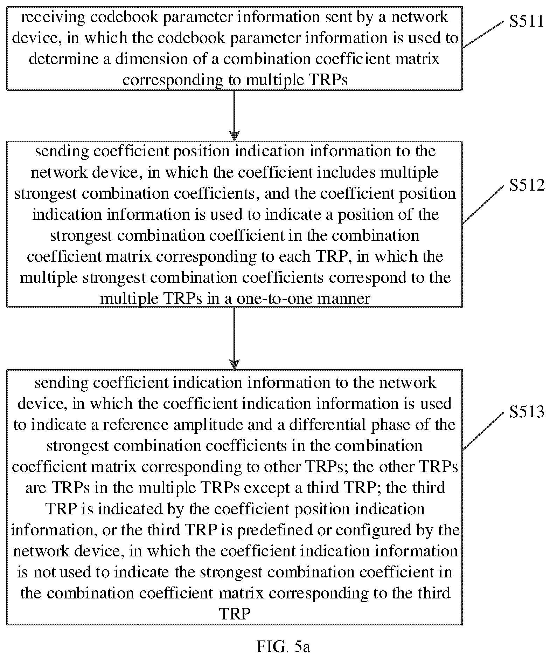

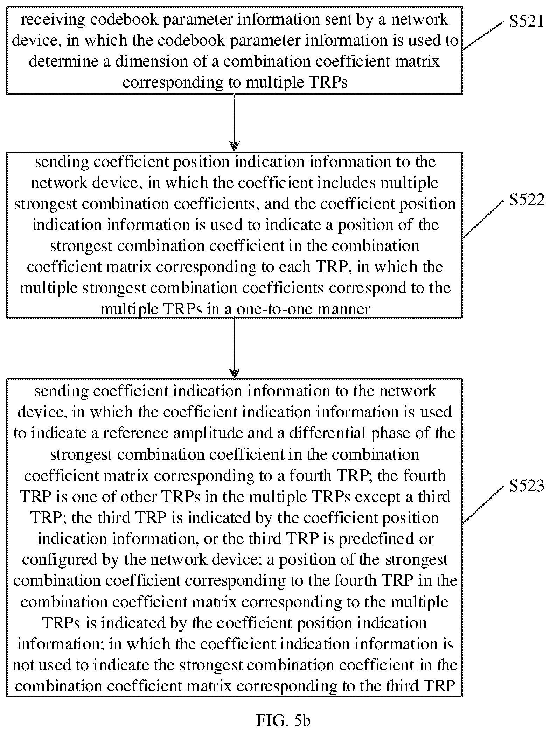

FIG. 5 is a schematic flowchart of another method for indicating a coefficient provided in an embodiment of the present disclosure. The method for indicating the coefficient is performed by a terminal device. As shown in FIG. 5, the method may include, but is not limited to, the following steps.

At step S501, codebook parameter information sent by a network device is received, in which the codebook parameter information is used to determine a dimension of a combination coefficient matrix corresponding to multiple TRPs.

At step S502, coefficient position indication information is sent to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

In an embodiment of the present disclosure, the coefficient position indication information includes indication information for indicating the position of the strongest combination coefficient in the combination coefficient matrix corresponding to each TRP. The indication information for indicating the position of the strongest combination coefficient corresponding to an $n^{th}$ TRP is indicated by any one of: $\lceil \log_2(2L_n M_n) \rceil \text{bits}$, $\lceil \log_2(2L_n) \rceil \text{bits}$, $\lceil \log_2(K_n^{NZ}) \rceil \text{bits}$, and $\lceil \log_2 K_{n,0} \rceil \text{bits}$, where $L_n$ represents the number of SD basis vectors or the number of ports of the $n^{th}$ TRP, $M_n$ represents the number of FD basis vectors of the $n^{th}$ TRP, $K_n^{NZ}$ represents the number of non-zero coefficients in a combination coefficient matrix of one transmission layer corresponding to the $n^{th}$ TRP, and $K_{n,0}$ represents a maximum number of non-zero coefficients of each transmission layer corresponding to the $n^{th}$ TRP. The number of ports herein refers to the number of CSI-RS ports.

The method for indicating the coefficient position indication information in this embodiment may be applicable to any one of the following codebook structures: Alt1A, Alt1B and Alt2.

Optionally, in case that combination coefficients in the combination coefficient matrix corresponding to each TRP are normalized to obtain a processed combination coefficient matrix, if the processed combination coefficient matrix is column-permuted to permute the column where the strongest combination coefficient is located to the first column, the indication information for indicating the position of the strongest combination coefficient in the combination coefficient matrix corresponding to the TRP may be indicated by any one of: $\lceil \log_2(2L_nM_n) \rceil \text{bits}$, $\lceil \log_2(2L_n) \rceil \text{bits}$, $\lceil \log_2(K_n^{NZ}) \rceil \text{bits}$, and $\lceil \log_2 K_{n,0} \rceil \text{bits}$.

Optionally, in case that combination coefficients in the combination coefficient matrix corresponding to each TRP are normalized to obtain a processed combination coefficient matrix, if the processed combination coefficient matrix is not column-permuted to permute the column where the strongest combination coefficient is located to the first column, the indication information for indicating the position of the strongest combination coefficient in the combination coefficient matrix corresponding to the TRP may be indicated by $\lceil \log_2(2L_nM_n) \rceil \text{bits}$.

This will be illustrated below by way of example. Assuming that the number of TRPs is 2, that is, there are 2 TRPs providing services to a terminal device located at the edge of a cell through CJT, the network device configures the number of FD basis vectors corresponding to two TRPs for the terminal device as $M_n = 4$, the number of SD basis vectors corresponding to each TRP in one polarization direction is $L_n = 2$, and the number of polarization directions is 2, then the terminal device calculates the combination coefficient matrices corresponding to the two TRPs according to downlink channel information from the two TRPs to the terminal device, and combines the two combination coefficient matrices to obtain one combination coefficient matrix $\tilde{W}_2$. Combination coefficients in the combination coefficient matrix $\tilde{W}_2$ are normalized to obtain the following combination coefficient matrix:

$$\widetilde{\widetilde{W}}_2 = \begin{bmatrix} W_{2,1} \\ W_{2,2} \end{bmatrix}$$

where

$$W_{2,1} = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \end{bmatrix}$$

$$W_{2,2} = \begin{bmatrix} r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

and $W_{2,1}$ represents the combination coefficient matrix corresponding to the first TRP after the normalization of the combination coefficients, and $W_{2,2}$ represents the combination coefficient matrix corresponding to the second TRP after the normalization of the combination coefficients.

$r_0$ and $r_1$ respectively represent the reference amplitudes in the first polarization direction and the second polarization direction corresponding to the first TRP, $r_2$ and $r_3$ respectively represent the reference amplitudes in the first polarization direction and the second polarization direction corresponding to the second TRP. Assuming that $r_0$ is the largest value among $r_0$, $r_1$, $r_2$ and $r_3$, and then $r_0$, $r_1$, $r_2$ and $r_3$ are normalized, the reference amplitudes are $r_0' = 1$, $r_1', r_2'$ and $r_3'$, that is,

$$W'_{2,1} = \begin{bmatrix} r_0' * 1 & r_0' d_{1,2}^{0,1} & r_0' d_{1,3}^{0,1} & r_0' d_{1,4}^{0,1} \\ r_0' d_{2,1}^{0,1} & r_0' d_{2,2}^{0,1} & r_0' d_{2,3}^{0,1} & r_0' d_{2,4}^{0,1} \\ r_1' d_{3,1}^{1,1} & r_1' d_{3,2}^{1,1} & r_1' d_{3,3}^{1,1} & r_1' d_{3,4}^{1,1} \\ r_1' d_{4,1}^{1,1} & r_1' d_{4,2}^{1,1} & r_1' d_{4,3}^{1,1} & r_1' d_{4,4}^{1,1} \end{bmatrix}$$

$$W'_{2,2} = \begin{bmatrix} r'_2 d^{0,2}_{1,1} & r'_2 d^{0,2}_{1,2} & r'_2 d^{0,2}_{1,3} & r'_2 d^{0,2}_{1,4} \\ r'_2 d^{0,2}_{2,1} & r'_2 d^{0,2}_{2,2} & r'_2 d^{0,2}_{2,3} & r'_2 d^{0,2}_{2,4} \\ r'_3 d^{1,2}_{3,1} & r'_3 d^{1,2}_{3,2} & r'_3 d^{1,2}_{3,3} & r'_3 d^{1,2}_{3,4} \\ r'_3 * 1 & r'_3 d^{1,2}_{4,2} & r'_3 d^{1,2}_{4,3} & r'_3 d^{1,2}_{4,4} \end{bmatrix}$$

The terminal device reports $\lceil \log_2 2L_n \rceil = 2$ bits to indicate the position of the strongest combination coefficient in the combination coefficient matrix corresponding to the first TRP, and indicate the position of the strongest combination coefficient in the combination coefficient matrix corresponding to the second TRP. Then, the terminal device can report $\lceil \log_2 N \rceil = 1$ bit to indicate the TRP including the strongest amplitude in the two combination coefficient matrices, or the terminal device can report $\lceil \log_2 N \rceil = 1$ bit to indicate the position of the strongest reference amplitude in the two combination coefficient matrices.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; and the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP, in which the multiple strongest combination coefficients correspond to the multiple TRPs in a one-to-one manner. Thus, the position of the coefficient in the combination coefficient matrix is indicated in the scenario of multiple TRPs, so that the network device can determine the coefficient based on the position of the coefficient, and then perform subsequent processing, thereby reducing the feedback overhead of the terminal device while maintaining the performance of the system.

FIG. 5a is a schematic flowchart of another method for indicating a coefficient provided in an embodiment of the present disclosure. The method for indicating the coefficient is performed by a terminal device. As shown in FIG. 5a, the method may include, but is not limited to, the following steps.

At step S511, codebook parameter information sent by a network device is received, in which the codebook parameter information is used to determine a dimension of a combination coefficient matrix corresponding to multiple TRPs.

At step S512, coefficient position indication information is sent to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

In an embodiment of the present disclosure, the coefficient position indication information includes indication information for indicating the position of the strongest combination coefficient in the combination coefficient matrix corresponding to each TRP. The indication information for indicating the position of the strongest combination coefficient corresponding to an $n^{th}$ TRP is indicated by any one of: $\lceil \log_2(2L_n M_n) \rceil$ bits , $\lceil \log_2(2L_n) \rceil$ bits , $\lceil \log_2(K_n^{NZ}) \rceil$ bits , and $\lceil \log_2 K_{n,0} \rceil$ bits , where $L_n$ represents the number of SD basis vectors or the number of ports of the $n^{th}$ TRP, $M_n$ represents the number of FD basis vectors of the $n^{th}$ TRP, $K_n^{NZ}$ represents the number of non-zero coefficients in a combination coefficient matrix of one transmission layer corresponding to the $n^{th}$ TRP, and $K_{n,0}$ represents a maximum number of non-zero coefficients of each transmission layer corresponding to the $n^{th}$ TRP. The number of ports herein refers to the number of CSI-RS ports.

The method for indicating the coefficient position indication information in this embodiment may be applicable to any one of the following codebook structures: Alt1A, Alt1B and Alt2.

Optionally, in case that combination coefficients in the combination coefficient matrix corresponding to each TRP are normalized to obtain a processed combination coefficient matrix, if the processed combination coefficient matrix is column-permuted to permute the column where the strongest combination coefficient is located to the first column, the indication information for indicating the position of the strongest combination coefficient corresponding to the TRP may be indicated by any one of: $\lceil\log_2(2L_nM_n)\rceil \text{bits}$, $\lceil\log_2(2L_n)\rceil\text{bits}$, $\lceil\log_2(K_n^{NZ})\rceil\text{bits}$, and $\lceil\log_2 K_{n,0}\rceil\text{bits}$.

Optionally, in case that combination coefficients in the combination coefficient matrix corresponding to each TRP are normalized to obtain a processed combination coefficient matrix, if the processed combination coefficient matrix is not column-permuted to permute the column where the strongest combination coefficient is located to the first column, the indication information for indicating the position of the strongest combination coefficient in the combination coefficient matrix corresponding to the TRP may be indicated by $\lceil\log_2(2L_nM_n)\rceil\text{bits}$.

At step S513, coefficient indication information is sent to the network device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

In an embodiment of the present disclosure, in one example, the third TRP may be indicated by the coefficient position indication information. For example, in one way, the coefficient position indication information may further include indication information, and the indication information may indicate the third TRP. In another way, bits in the coefficient position indication information used to indicate the position of other coefficients may be reused to indicate the third TRP. It should be noted that the third TRP may be any one of the multiple TRPs.

In the coefficient position indication information, the third TRP may be indicated by $\lceil\log_2 N\rceil\text{bits}$, where N represents the number of TRPs.

In an embodiment of the present disclosure, in another example, the third TRP may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP is a TRP corresponding to the smallest resource identifier among multiple resource identifiers, or the third TRP is a TRP corresponding to the largest resource identifier among multiple resource identifiers.

It should be noted that, in other embodiments, regarding the manner for predefining TRPs or configuring TRPs by the network device, reference may be made to the manner for predefining the third TRP or configuring the third TRP by the network device here. The manner for predefining TRPs or configuring TRPs by the network device will not be described in detail in other embodiments.

In an embodiment of the present disclosure, the coefficient may further include the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

It should be noted that the amplitude of the strongest combination coefficient in the combination coefficient matrix corresponding to each TRP is the largest, and the strongest amplitude is the maximum value among multiple maximum amplitudes.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP, in which the multiple strongest combination coefficients correspond to the multiple TRPs in a one-to-one manner; and the terminal device can send coefficient indication information to the network device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP. Thus, the position of the coefficient in the combination coefficient matrix is indicated in the scenario of multiple TRPs, so that the network device can determine the coefficient based on the position of the coefficient so as to determine the reference amplitude, the differential phase and the like, and then perform subsequent processing, thereby reducing the feedback overhead of the terminal device while maintaining the performance of the system.

FIG. 5b is a schematic flowchart of another method for indicating a coefficient provided in an embodiment of the present disclosure. The method for indicating the coefficient is performed by a terminal device. As shown in FIG. 5b, the method may include, but is not limited to, the following steps.

At step S521, codebook parameter information sent by a network device is received, in which the codebook parameter information is used to determine a dimension of a combination coefficient matrix corresponding to multiple TRPs.

At step S522, coefficient position indication information is sent to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

In an embodiment of the present disclosure, the coefficient position indication information includes indication information for indicating the position of the strongest combination coefficient in the combination coefficient matrix corresponding to each TRP. The indication information for indicating the position of the strongest combination coefficient corresponding to an $n^{th}$ TRP is indicated by any one of: $\lceil \log_2(2L_n M_n) \rceil \text{bits}$, $\lceil \log_2(2L_n) \rceil \text{bits}$, $\lceil \log_2(K_n^{NZ}) \rceil \text{bits}$, and $\lceil \log_2 K_{n,0} \rceil \text{bits}$, where $L_n$ represents the number of SD basis vectors or the number of ports of the $n^{th}$ TRP, $M_n$ represents the number of FD basis vectors of the $n^{th}$ TRP, $K_n^{NZ}$ represents the number of non-zero coefficients in a combination coefficient matrix of one transmission layer corresponding to the $n^{th}$ TRP, and $K_{n,0}$ represents a maximum number of non-zero coefficients of each transmission layer corresponding to the $n^{th}$ TRP. The number of ports herein refers to the number of CSI-RS ports.

The method for indicating the coefficient position indication information in this embodiment may be applicable to any one of the following codebook structures: Alt1A, Alt1B and Alt2.

Optionally, in case that combination coefficients in the combination coefficient matrix corresponding to each TRP are normalized to obtain a processed combination coefficient matrix, if the processed combination coefficient matrix is column-permuted to permute the column where the strongest combination coefficient is located to the first column, the indication information for indicating the position of the strongest combination coefficient corresponding to the TRP may be indicated by any one of: $\lceil \log_2(2L_n M_n) \rceil \text{bits}$, $\lceil \log_2(2L_n) \rceil \text{bits}$, $\lceil \log_2(K_n^{NZ}) \rceil \text{bits}$, and $\lceil \log_2 K_{n,0} \rceil \text{bits}$.

Optionally, in case that combination coefficients in the combination coefficient matrix corresponding to each TRP are normalized to obtain a processed combination coefficient matrix, if the processed combination coefficient matrix is not column-permuted to permute the column where the strongest combination coefficient is located to the first column, the indication information for indicating the position of the strongest combination coefficient in the combination coefficient matrix corresponding to the TRP may be indicated by $\lceil \log_2(2L_n M_n) \rceil \text{bits}$.

At step S523, coefficient indication information is sent to the network device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information; in which the coefficient indication information is not used to indicate the strongest combination coefficient in the combination coefficient matrix corresponding to the third TRP.

In an embodiment of the present disclosure, in one example, the third TRP may be indicated by the coefficient position indication information. For example, in one way, the coefficient position indication information may further include indication information, and the indication information may indicate the third TRP. In another way, bits in the coefficient position indication information used to indicate the position of other coefficients may be reused to indicate the third TRP. It should be noted that the third TRP may be any one of the multiple TRPs.

In the coefficient position indication information, the third TRP may be indicated by $\lceil \log_2 N \rceil \text{bits}$, where N represents the number of TRPs.

In an embodiment of the present disclosure, in another example, the third TRP may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP is a TRP corresponding to the smallest resource identifier among multiple resource identifiers, or the third TRP is a TRP corresponding to the largest resource identifier among multiple resource identifiers.

It should be noted that, in other embodiments, regarding the manner for predefining TRPs or configuring TRPs by the network device, reference may be made to the manner for predefining the third TRP or configuring the third TRP by the network device here. The manner for predefining TRPs or configuring TRPs by the network device will not be described in detail in other embodiments.

In an embodiment of the present disclosure, in the coefficient position indication information, the position of the strongest combination coefficient corresponding to the fourth TRP in the combination coefficient matrix corresponding to the multiple TRPs is indicated by $\left\lceil \log_2 \left( \sum_{n=1, n \neq j}^{N} 2 L_n M_n \right) \right\rceil \text{bits}$ or $\left\lceil \log_2 \sum_{n=1, n \neq j}^{N} K_n^{NZ} \right\rceil \text{bits}$, where N represents the number of TRPs; $L_n$ represents the number of SD basis vectors or the number of ports of an nth TRP; $M_n$ represents the number of FD basis vectors of the nth TRP; $K_n^{NZ}$ represents the number of non-zero coefficients in a combination coefficient matrix of one transmission layer corresponding to the nth TRP; and a jth TRP is the third TRP.

In an embodiment of the present disclosure, in one example, the position of the strongest combination coefficient corresponding to the fourth TRP in the combination coefficient matrix corresponding to the multiple TRPs may be indicated by the coefficient position indication information. For example, in one way, the coefficient position indication information may further include indication information, and the indication information may indicate the position of the strongest combination coefficient corresponding to the fourth TRP in the combination coefficient matrix corresponding to the multiple TRPs. In another way, bits in the coefficient position indication information used to indicate the position of other coefficients may be reused to indicate the position of the strongest combination coefficient corresponding to the fourth TRP in the combination coefficient matrix corresponding to the multiple TRPs.

In an embodiment of the present disclosure, the coefficient may further include the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

It should be noted that the amplitude of the strongest combination coefficient in the combination coefficient matrix corresponding to each TRP is the largest, and the strongest amplitude is the maximum value among multiple maximum amplitudes.

This will be illustrated below by way of example. Assuming that the number of TRPs is 2, that is, there are 2 TRPs providing services to a terminal device located at the edge of a cell through CJT, the network device configures the number of FD basis vectors corresponding to two TRPs for the terminal device as $M_n = 4$, the number of SD basis vectors corresponding to each TRP in one polarization direction is $L_n = 2$, and the number of polarization directions is 2, then the terminal device calculates the combination coefficient matrices corresponding to the two TRPs according to downlink channel information from the two TRPs to the terminal device, and combines the two combination coefficient matrices to obtain one combination coefficient matrix $\tilde{W}_2$. Combination coefficients in the combination coefficient matrix $\tilde{W}_2$ are normalized to obtain the following combination coefficient matrix:

$$\widetilde{\widetilde{W}}_2 = \begin{bmatrix} W_{2,1} \\ W_{2,2} \end{bmatrix}$$

where

$$W_{2,1} = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \end{bmatrix}$$

$$W_{2,2} = \begin{bmatrix} r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

and $W_{2,1}$ represents the combination coefficient matrix corresponding to the first TRP after the normalization of the combination coefficients, and $W_{2,2}$ represents the combination coefficient matrix corresponding to the second TRP after the normalization of the combination coefficients.

$r_0$ and $r_1$ respectively represent the reference amplitudes in the first polarization direction and the second polarization direction corresponding to the first TRP, $r_2$ and $r_3$ respectively represent the reference amplitudes in the first polarization direction and the second polarization direction corresponding to the second TRP. Assuming that $r_0$ is the largest value among $r_0$, $r_1$, $r_2$ and $r_3$, and then $r_0$, $r_1$, $r_2$ and $r_3$ are normalized, the reference amplitudes are $r_0' = 1,\ r_1', r_2'$ and $r_3'$, that is,

$$W'_{2,1} = \begin{bmatrix} r_0' * 1 & r_0' d_{1,2}^{0,1} & r_0' d_{1,3}^{0,1} & r_0' d_{1,4}^{0,1} \\ r_0' d_{2,1}^{0,1} & r_0' d_{2,2}^{0,1} & r_0' d_{2,3}^{0,1} & r_0' d_{2,4}^{0,1} \\ r_1' d_{3,1}^{1,1} & r_1' d_{3,2}^{1,1} & r_1' d_{3,3}^{1,1} & r_1' d_{3,4}^{1,1} \\ r_1' d_{4,1}^{1,1} & r_1' d_{4,2}^{1,1} & r_1' d_{4,3}^{1,1} & r_1' d_{4,4}^{1,1} \end{bmatrix}$$

$$W'_{2,2} = \begin{bmatrix} r_2' d_{1,1}^{0,2} & r_2' d_{1,2}^{0,2} & r_2' d_{1,3}^{0,2} & r_2' d_{1,4}^{0,2} \\ r_2' d_{2,1}^{0,2} & r_2' d_{2,2}^{0,2} & r_2' d_{2,3}^{0,2} & r_2' d_{2,4}^{0,2} \\ r_3' d_{3,1}^{1,2} & r_3' d_{3,2}^{1,2} & r_3' d_{3,3}^{1,2} & r_3' d_{3,4}^{1,2} \\ r_3' * 1 & r_3' d_{4,2}^{1,2} & r_3' d_{4,3}^{1,2} & r_3' d_{4,4}^{1,2} \end{bmatrix}$$

In one example, the terminal device reports $\lceil \log_2 2L_n \rceil = 2$ bits to indicate the position of the strongest combination coefficient in the combination coefficient matrix corresponding to the first TRP, and indicate the position of the strongest combination coefficient in the combination coefficient matrix corresponding to the second TRP. Then, the terminal device can indicate the position of the strongest combination coefficient in the combination coefficient matrix corresponding to the first TRP through $\lceil \log_2 2L_1 M_1 \rceil = 4\text{bits}$ or $\lceil \log_2 2L_1 \rceil = 2$ bits. The reference amplitude $r_0'$, differential amplitude and differential phase of the strongest combination coefficient corresponding to the first TRP are not reported. The terminal device can also indicate the position of the strongest combination coefficient in the combination coefficient matrix corresponding to the second TRP through $\lceil \log_2 2L_2 M_2 \rceil = 4$ bits. The reference amplitude and differential phase of the strongest combination coefficient corresponding to the second TRP need to be quantized and reported, but the differential amplitude of the strongest combination coefficient corresponding to the second TRP does not need to be reported.

In another example, the terminal device can specify one of the TRPs, for example, indicating the first TRP through $\lceil \log_2 N \rceil = 1$ bit. For the first TRP, the terminal device can determine $K_1^{NZ} = 8$ non-zero coefficients contained in the first TRP and $\sum_{n=1}^{N} K_n^{NZ} = 8$ non-zero coefficients contained in all remaining TRPs according to the codebook parameters configured by the network; the terminal device indicates the position of the strongest combination coefficient corresponding to the first TRP and the position of the strongest combination coefficient corresponding to the remaining TRP (i.e., the second TRP) in the combination coefficient matrix corresponding to all TRPs through $\lceil \log_2 K_1^{NZ} \rceil = 3$ bits and $\lceil \log_2 \sum_{n=1}^{N} K_n^{NZ} \rceil = 3$ bits, respectively.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP, in which the multiple strongest combination coefficients correspond to the multiple TRPs in a one-to-one manner; and the terminal device can send coefficient indication information to the network device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information. Thus, the position of the coefficient in the combination coefficient matrix is indicated in the scenario of multiple TRPs, so that the network device can determine the coefficient based on the position of the coefficient so as to determine the reference amplitude, the differential phase and the like, and then perform subsequent processing, thereby reducing the feedback overhead of the terminal device while maintaining the performance of the system.

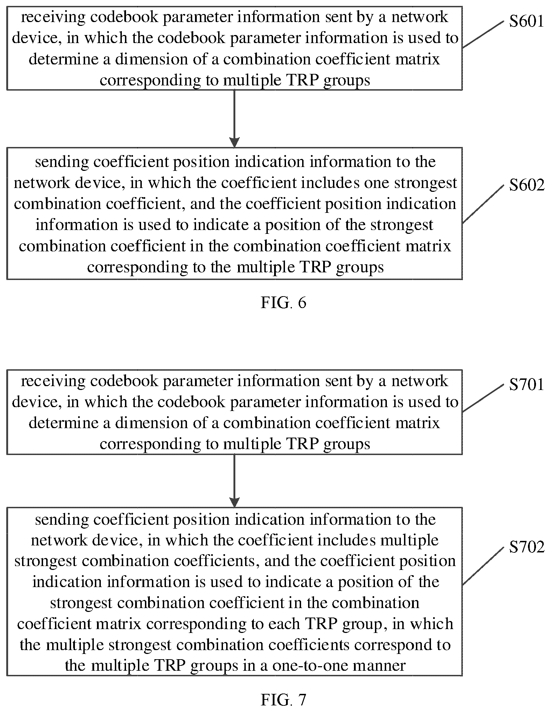

FIG. 6 is a schematic flowchart of another method for indicating a coefficient provided in an embodiment of the present disclosure. The method for indicating the coefficient is performed by a terminal device. As shown in FIG. 6, the method may include, but is not limited to, the following steps.

At step S601, codebook parameter information sent by a network device is received, in which the codebook parameter information is used to determine a dimension of a combination coefficient matrix corresponding to multiple TRP groups.

At step S602, coefficient position indication information is sent to the network device, in which the coefficient includes one strongest combination coefficient, and the coefficient position indication information is used to indicate a position of the strongest combination coefficient in the combination coefficient matrix corresponding to the multiple TRP groups.

In an embodiment of the present disclosure, each TRP group can correspond to one combination coefficient matrix. For the combination coefficient matrices corresponding to multiple TRP groups, the multiple combination coefficient matrices may be combined into one combination coefficient matrix, combination coefficients in the combination coefficient matrix are normalized to obtain a processed combination coefficient matrix, and there is one strongest combination coefficient in the processed combination coefficient matrix.

In one example, the first TRP group is not predefined and is not configured by the network device, and the coefficient position indication information includes third indication information for indicating a first TRP group corresponding to the strongest combination coefficient, and fourth indication information for indicating the position of the strongest combination coefficient in the combination coefficient matrix corresponding to the first TRP group. In another example, the coefficient position indication information includes fourth indication information for indicating the position of the strongest combination coefficient in the combination coefficient matrix corresponding to the first TRP group, and the first TRP group is predefined or configured by the network device.

In an embodiment of the present disclosure, in case that the coefficient position indication information includes the third indication information for indicating the first TRP group corresponding to the strongest combination coefficient and the fourth indication information for indicating the position of the strongest combination coefficient in the combination coefficient matrix corresponding to the first TRP group, in one example, the third indication information may be indicated by $\lceil \log_2 G \rceil$ bits, and the fourth indication information may be indicated by $\lceil \log_2 (\sum_{i=1}^{I_g} 2 L_{g,i} M_{g,i}) \rceil$ bits, where G represents the number of TRP groups, $I_g$ represents the number of TRPs in a $g^{th}$ TRP group, $L_{g,i}$ represents the number of SD basis vectors or the number of ports of an $i^{th}$ TRP in the $g^{th}$ TRP group, and $M_{g,i}$ represents the number of FD basis vectors of the $i^{th}$ TRP in the $g^{th}$ TRP group. The number of ports herein refers to the number of CSI-RS ports.

The method for indicating the third indication information and the fourth indication information in this embodiment may be applicable to any one of the following codebook structures: Alt1A, Alt1B and Alt2. The number 2 in front of $L_n$ in the formula of the fourth indication information indicates that there are two polarization directions. If the number of polarization directions is another number, 2 may be replaced by the actual number of polarization directions.

In an embodiment of the present disclosure, in case that the coefficient position indication information includes the third indication information for indicating the first TRP group corresponding to the strongest combination coefficient and the fourth indication information for indicating the position of the strongest combination coefficient in the combination coefficient matrix corresponding to the first TRP group, in another example, the third indication information may be

indicated by $\lceil \log_2 G \rceil$ bits, and the fourth indication information may be indicated by any one of: $\left\lceil \log_2 (\sum_{i=1}^{I_g} 2L_{g,i}) \right\rceil$

bits, and $\left\lceil \log_2 (\sum_{i=1}^{I_g} K_{g,i}^{NZ}) \right\rceil$ bits, where G represents the number of TRP groups, $I_g$ represents the number of TRPs in a $g^{\text{th}}$ TRP group, $L_{g,i}$ represents the number of SD basis vectors or the number of ports of an $i^{\text{th}}$ TRP in the $g^{\text{th}}$ TRP group, and $K_{g,i}^{NZ}$ represents the number of non-zero coefficients in a combination coefficient matrix of one transmission layer corresponding to the $i^{\text{th}}$ TRP in the $g^{\text{th}}$ TRP group.

The method for indicating the third indication information and the fourth indication information in this embodiment may be applicable to the Alt1A codebook structure.

Optionally, in case that the combination coefficient matrices corresponding to multiple TRP groups are combined into one combination coefficient matrix, and combination coefficients in the combination coefficient matrix are normalized to obtain a processed combination coefficient matrix, if the processed combination coefficient matrix is column-permuted to permute the column where the strongest combination coefficient is located to the first column, the fourth indication information may be indicated by $\left\lceil \log_2 (\sum_{i=1}^{I_g} 2L_{g,i}) \right\rceil$ bits. If the processed combination coefficient matrix is not subjected to column permutation to permute the column where the strongest combination coefficient is located to the first column, the second indication information may be indicated by $\left\lceil \log_2 (\sum_{i=1}^{I_g} K_{g,i}^{NZ}) \right\rceil$ bits.

In an embodiment of the present disclosure, in case that the coefficient position indication information includes the fourth indication information for indicating the position of the strongest combination coefficient in the combination coefficient matrix corresponding to the first TRP group, in one example, the fourth indication information may be indicated by $\left\lceil \log_2 (\sum_{i=1}^{I_g} 2L_{g,i} M_{g,i}) \right\rceil$ bits. The method for indicating the fourth indication information in this embodiment may be applicable to any one of the following codebook structures: Alt1A, Alt1B and Alt2.

In another example, the fourth indication information may be indicated by any one of $\left\lceil \log_2 (\sum_{i=1}^{I_g} 2L_{g,i}) \right\rceil$ bits and $\left\lceil \log_2 (\sum_{i=1}^{I_g} K_{g,i}^{NZ}) \right\rceil$ bits. The method for indicating the fourth indication information in this embodiment may be applicable to the Alt1A codebook structure.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; and the terminal device can send the coefficient position indication information to the network device, in which the coefficient includes one strongest combination coefficient, and the coefficient position indication information is used to indicate the position of the strongest combination coefficient in the combination coefficient matrix corresponding to the multiple TRP groups. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

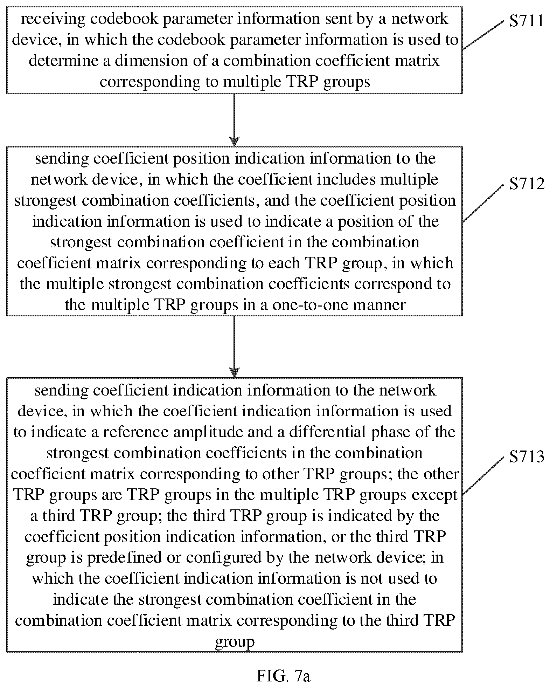

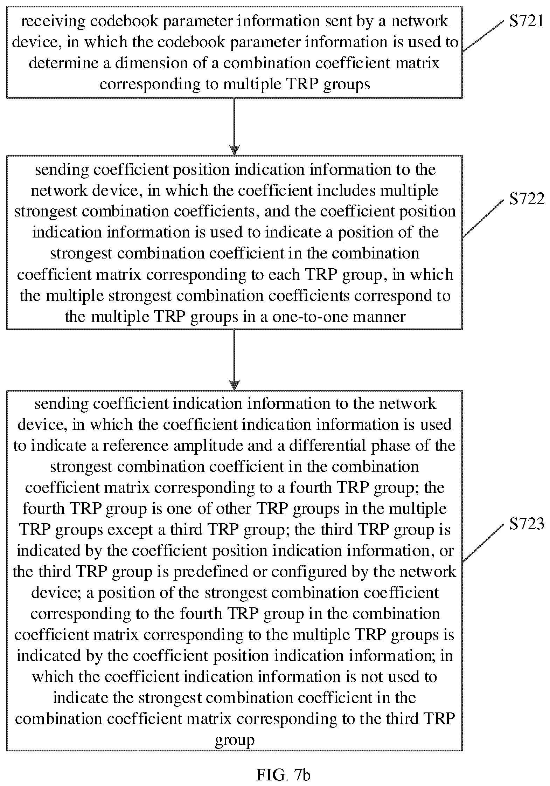

FIG. 7 is a schematic flowchart of another method for indicating a coefficient provided in an embodiment of the present disclosure. The method for indicating the coefficient is performed by a terminal device. As shown in FIG. 7, the method may include, but is not limited to, the following steps.

At step S701, codebook parameter information sent by a network device is received, in which the codebook parameter information is used to determine a dimension of a combination coefficient matrix corresponding to multiple TRP groups.

At step S702, coefficient position indication information is sent to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

In an embodiment of the present disclosure, the coefficient position indication information includes indication information for indicating the position of the strongest combination coefficient in the combination coefficient matrix corresponding to each TRP group. The indication information for indicating the position of the strongest combination coefficient corresponding to a $g^{th}$ TRP group may be indicated by $\left\lceil \log_2(\sum_{i=1}^{I_g} 2L_{g,i}) \right\rceil \text{bits}$, or $\left\lceil \log_2 K_{g,0} \right\rceil \text{bits}$, where $I_g$ represents the number of TRPs in the $g^{th}$ TRP group, $L_{g,i}$ represents the number of SD basis vectors or the number of ports of an $i^{th}$ TRP in the $g^{th}$ TRP group, and $K_{g,0}$ represents a maximum number of non-zero coefficients of each transmission layer of the $g^{th}$ TRP group. The number of ports herein refers to the number of CSI-RS ports.

The method for indicating the coefficient position indication information in this embodiment may be applicable to any one of the following codebook structures: Alt1A, Alt1B and Alt2.

In case that combination coefficients in the combination coefficient matrix corresponding to each TRP group are normalized to obtain a processed combination coefficient matrix, if the processed combination coefficient matrix is column-permuted to permute the column where the strongest combination coefficient is located to the first column, the indication information for indicating the position of the strongest combination coefficient in the combination coefficient matrix corresponding to the TRP group may be indicated by $\left\lceil \log_2(\sum_{i=1}^{I_g} 2L_{g,i}) \right\rceil \text{bits}$, or $\left\lceil \log_2 K_{g,0} \right\rceil \text{bits}$.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; and the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP group, in which the multiple strongest combination coefficients correspond to the multiple TRP groups in a one-to-one manner. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

FIG. 7a is a schematic flowchart of another method for indicating a coefficient provided in an embodiment of the present disclosure. The method for indicating the coefficient is performed by a terminal device. As shown in FIG. 7a, the method may include, but is not limited to, the following steps.

At step S711, codebook parameter information sent by a network device is received, in which the codebook parameter information is used to determine a dimension of a combination coefficient matrix corresponding to multiple TRP groups.

At step S712, coefficient position indication information is sent to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

In an embodiment of the present disclosure, the coefficient position indication information includes indication information for indicating the position of the strongest combination coefficient in the combination coefficient matrix corresponding to each TRP group. The indication information for indicating the position of the strongest combination coefficient corresponding to a $g^{th}$ TRP group may be indicated by $\left\lceil \log_2(\sum_{i=1}^{I_g} 2L_{g,i}) \right\rceil \text{bits}$, or $\left\lceil \log_2 K_{g,0} \right\rceil \text{bits}$, where $I_g$ represents the number of TRPs in the $g^{th}$ TRP group, $L_{g,i}$ represents the number of SD basis vectors or the number of ports of an $i^{th}$ TRP in the $g^{th}$ TRP group, and $K_{g,0}$ represents a maximum number of non-zero coefficients of each transmission layer of the $g^{th}$ TRP group. The number of ports herein refers to the number of CSI-RS ports.

The method for indicating the coefficient position indication information in this embodiment may be applicable to any one of the following codebook structures: Alt1A, Alt1B and Alt2.

In case that combination coefficients in the combination coefficient matrix corresponding to each TRP group are normalized to obtain a processed combination coefficient matrix, if the processed combination coefficient matrix is column-permuted to permute the column where the strongest combination coefficient is located to the first column, the indication information for indicating the position of the strongest combination coefficient in the combination coefficient matrix corresponding to the TRP group may be indicated by $\left\lceil \log_2(\sum_{i=1}^{l_g} 2L_{g,i}) \right\rceil \text{bits}$, or $\left\lceil \log_2 K_{g,0} \right\rceil \text{bits}$.

At step S713, coefficient indication information is sent to the network device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device; in which the coefficient indication information is not used to indicate the strongest combination coefficient in the combination coefficient matrix corresponding to the third TRP group.

In an embodiment of the present disclosure, in one example, the third TRP group may be indicated by the coefficient position indication information. For example, in one way, the coefficient position indication information may further include indication information, and the indication information may indicate the third TRP group. In another way, bits in the coefficient position indication information used to indicate the position of other coefficients may be reused to indicate the third TRP group. It should be noted that the third TRP group may be any one of the multiple TRP groups.

In the coefficient position indication information, the third TRP group may be indicated by $\left\lceil \log_2 G \right\rceil \text{bits}$, where G represents the number of TRP groups.

In an embodiment of the present disclosure, in another example, the third TRP group may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP group is a TRP group corresponding to the smallest resource identifier among multiple resource identifiers, or the third TRP group is a TRP group corresponding to the largest resource identifier among multiple resource identifiers.

It should be noted that, in other embodiments, regarding the manner for predefining TRP groups or configuring TRP groups by the network device, reference may be made to the manner for predefining the third TRP group or configuring the third TRP group by the network device here. The manner for predefining TRP groups or configuring TRP groups by the network device will not be described in detail in other embodiments.

In an embodiment of the present disclosure, the coefficient may further include the strongest amplitude and/or the strongest reference amplitude; in which the coefficient position indication information is further used to indicate a position of the strongest amplitude in the combination coefficient matrix corresponding to the multiple TRP groups, in which the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP group, in which the multiple strongest combination coefficients correspond to the multiple TRP groups in a one-to-one manner; and the terminal device can send coefficient indication information to the network device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

FIG. 7b is a schematic flowchart of another method for indicating a coefficient provided in an embodiment of the present disclosure. The method for indicating the coefficient is performed by a terminal device. As shown in FIG. 7b, the method may include, but is not limited to, the following steps.

At step S721, codebook parameter information sent by a network device is received, in which the codebook parameter information is used to determine a dimension of a combination coefficient matrix corresponding to multiple TRP groups.

At step S722, coefficient position indication information is sent to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

In an embodiment of the present disclosure, the coefficient position indication information includes indication information for indicating the position of the strongest combination coefficient in the combination coefficient matrix corresponding to each TRP group. The indication information for indicating the position of the strongest combination coefficient corresponding to a g$^{th}$ TRP group may be indicated by $\left\lceil \log_2(\sum_{i=1}^{I_g} 2L_{g,i}) \right\rceil \text{bits}$, or $\left\lceil \log_2 K_{g,0} \right\rceil \text{bits}$, where $I_g$ represents the number of TRPs in the g$^{th}$ TRP group, $L_{g,i}$ represents the number of SD basis vectors or the number of ports of an i$^{th}$ TRP in the g$^{th}$ TRP group, and $K_{g,0}$ represents a maximum number of non-zero coefficients of each transmission layer of the g$^{th}$ TRP group. The number of ports herein refers to the number of CSI-RS ports.

The method for indicating the coefficient position indication information in this embodiment may be applicable to any one of the following codebook structures: Alt1A, Alt1B and Alt2.

In case that combination coefficients in the combination coefficient matrix corresponding to each TRP group are normalized to obtain a processed combination coefficient matrix, if the processed combination coefficient matrix is column-permuted to permute the column where the strongest combination coefficient is located to the first column, the indication information for indicating the position of the strongest combination coefficient in the combination coefficient matrix corresponding to the TRP group may be indicated by $\left\lceil \log_2(\sum_{i=1}^{I_g} 2L_{g,i}) \right\rceil \text{bits}$, or $\left\lceil \log_2 K_{g,0} \right\rceil \text{bits}$.

At step S723, coefficient indication information is sent to the network device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information; in which the coefficient indication information is not used to indicate the strongest combination coefficient in the combination coefficient matrix corresponding to the third TRP group.

In an embodiment of the present disclosure, in one example, the third TRP group may be indicated by the coefficient position indication information. For example, in one way, the coefficient position indication information may further include indication information, and the indication information may indicate the third TRP group. In another way, bits in the coefficient position indication information used to indicate the position of other coefficients may be reused to indicate the third TRP group. It should be noted that the third TRP group may be any one of the multiple TRP groups.

In the coefficient position indication information, the third TRP group may be indicated by $\left\lceil \log_2 G \right\rceil \text{bits}$, where G represents the number of TRP groups.

In an embodiment of the present disclosure, in another example, the third TRP group may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP group is a TRP group corresponding to the smallest resource identifier among multiple resource identifiers, or the third TRP group is a TRP group corresponding to the largest resource identifier among multiple resource identifiers.

It should be noted that, in other embodiments, regarding the manner for predefining TRP groups or configuring TRP groups by the network device, reference may be made to the manner for predefining the third TRP group or configuring the third TRP group by the network device here. The manner for predefining TRP groups or configuring TRP groups by the network device will not be described in detail in other embodiments.

In an embodiment of the present disclosure, in the coefficient position indication information, the position of the strongest combination coefficient corresponding to the fourth TRP group in the combination coefficient matrix corresponding to the multiple TRP groups is indicated by $\left\lceil \log_2(\sum_{i=1,i\neq j}^{G} 2L_{g,i}) \right\rceil \text{bits}$, where G represents the number of TRP groups, $L_{g,i}$ represents the number of SD basis vectors or the number of ports of an i$^{th}$ TRP group, and a j$^{th}$ TRP group is the third TRP group.

In an embodiment of the present disclosure, in one example, the position of the strongest combination coefficient corresponding to the fourth TRP group in the combination coefficient matrix corresponding to the multiple TRP groups may be indicated by the coefficient position indication information. For example, in one way, the coefficient position indication information may further include indication information, and the indication information may indicate the position of the strongest combination coefficient corresponding to the fourth TRP group in the combination coefficient matrix corresponding to the multiple TRP groups. In another way, bits in the coefficient position indication information used to indicate the position of other coefficients may be reused to indicate the position of the strongest combination coefficient corresponding to the fourth TRP group in the combination coefficient matrix corresponding to the multiple TRP groups.

In an embodiment of the present disclosure, the coefficient may further include the strongest amplitude and/or the strongest reference amplitude; in which the coefficient position indication information is further used to indicate a position of the strongest amplitude in the combination coefficient matrix corresponding to the multiple TRP groups, in which the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; the terminal device can send the coefficient position indication information to the network device, in which the coefficient includes multiple strongest combination coefficients, and the coefficient position indication information is used to indicate the position of the strongest combination coefficient in the combination coefficient matrix corresponding to each TRP group, in which the multiple strongest combination coefficients correspond to the multiple TRP groups in a one-to-one manner; and the terminal device can send coefficient indication information to the network device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

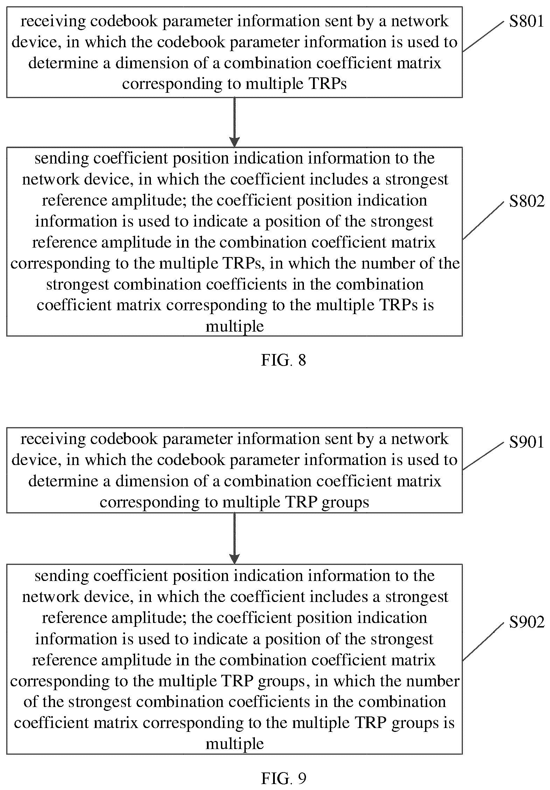

FIG. 8 is a schematic flowchart of another method for indicating a coefficient provided in an embodiment of the present disclosure. The method for indicating the coefficient is performed by a terminal device. As shown in FIG. 8, the method may include, but is not limited to, the following steps.

At step S801, codebook parameter information sent by a network device is received, in which the codebook parameter information is used to determine a dimension of a combination coefficient matrix corresponding to multiple TRPs.

At step S802, coefficient position indication information is sent to the network device, in which the coefficient includes a strongest reference amplitude; the coefficient position indication information is used to indicate a position of the strongest reference amplitude in the combination coefficient matrix corresponding to the multiple TRPs, in which the number of the strongest combination coefficients in the combination coefficient matrix corresponding to the multiple TRPs is multiple.

In an embodiment of the present disclosure, the coefficient position indication information may be indicated by $\lceil \log_2 N \rceil$ bits, or by a bitmap of N bits, where N represents the number of TRPs.

In this embodiment of the present disclosure, the strongest reference amplitude is not configured by the network device and is not predefined. In the case where the strongest reference amplitude is configured by the network device or predefined, the terminal device does not need to send indication information for indicating the position of the strongest reference amplitude to the network device.

Regarding the indication information for indicating the position of the strongest combination coefficient in the combination coefficient matrix corresponding to each TRP, reference may be made to the method for indicating the position of the strongest combination coefficient in FIG. 5, and no detailed description thereof is given here.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; and the terminal device can send the coefficient position indication information to the network device, in which the coefficient includes a strongest reference amplitude; the coefficient position indication information is used to indicate a position of the strongest reference amplitude in the combination coefficient matrix corresponding to the multiple TRPs, in which the number of the strongest combination coefficients in the combination coefficient matrix corresponding to the multiple TRPs is multiple. Thus, the position of the coefficient in the combination coefficient matrix is indicated in the scenario of multiple TRPs, so that the network device can determine the coefficient based on the position of the coefficient, and then perform subsequent processing, thereby reducing the feedback overhead of the terminal device while maintaining the performance of the system.

FIG. 9 is a schematic flowchart of another method for indicating a coefficient provided in an embodiment of the present disclosure. The method for indicating the coefficient is performed by a terminal device. As shown in FIG. 9, the method may include, but is not limited to, the following steps.

At step S901, codebook parameter information sent by a network device is received, in which the codebook parameter information is used to determine a dimension of a combination coefficient matrix corresponding to multiple TRP groups.

At step S902, coefficient position indication information is sent to the network device, in which the coefficient includes a strongest reference amplitude; the coefficient position indication information is used to indicate a position of the strongest reference amplitude in the combination coefficient matrix corresponding to the multiple TRP groups, in which the number of the strongest combination coefficients in the combination coefficient matrix corresponding to the multiple TRP groups is multiple.

In an embodiment of the present disclosure, the coefficient position indication information may be indicated by

$\lceil \log_2 G \rceil \text{bits}$, or by a bitmap of G bits, where G represents the number of TRP groups.

In this embodiment of the present disclosure, the strongest reference amplitude is not configured by the network device and is not predefined. In the case where the strongest reference amplitude is configured by the network device or predefined, the terminal device does not need to send indication information for indicating the position of the strongest reference amplitude to the network device.

Regarding the indication information for indicating the position of the strongest combination coefficient in the combination coefficient matrix corresponding to each TRP group, reference may be made to the method for indicating the position of the strongest combination coefficient in FIG. 7, and no detailed description thereof is given here.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; and the terminal device can send the coefficient position indication information to the network device, in which the coefficient includes a strongest reference amplitude; the coefficient position indication information is used to indicate a position of the strongest reference amplitude in the combination coefficient matrix corresponding to the multiple TRP groups, in which the number of the strongest combination coefficients in the combination coefficient matrix corresponding to the multiple TRP groups is multiple. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

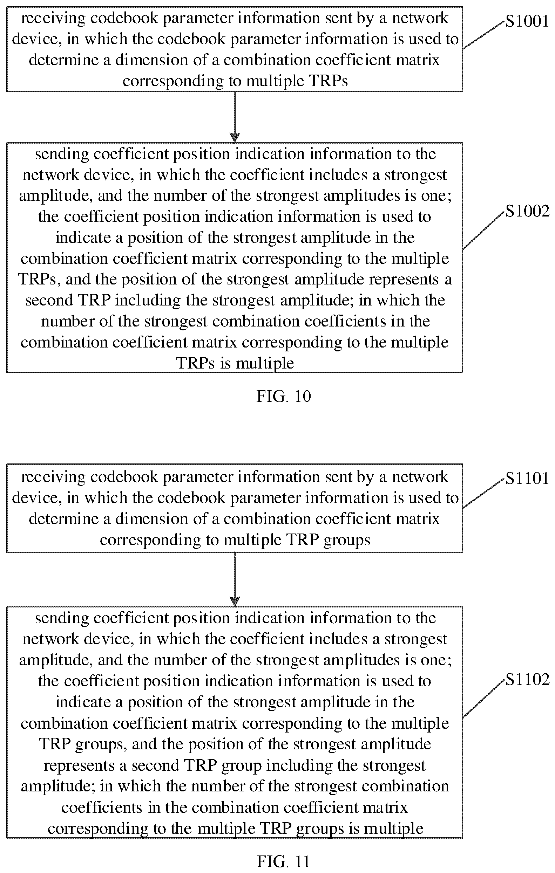

FIG. 10 is a schematic flowchart of another method for indicating a coefficient provided in an embodiment of the present disclosure. The method for indicating the coefficient is performed by a terminal device. As shown in FIG. 10, the method may include, but is not limited to, the following steps.

At step S1001, codebook parameter information sent by a network device is received, in which the codebook parameter information is used to determine a dimension of a combination coefficient matrix corresponding to multiple TRPs.

At step S1002, coefficient position indication information is sent to the network device, in which the coefficient includes a strongest amplitude, and the number of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude; in which the number of the strongest combination coefficients in the combination coefficient matrix corresponding to the multiple TRPs is multiple.

In an embodiment of the present disclosure, the coefficient position indication information may be indicated by

$\lceil \log_2 N \rceil \text{bits}$, where N represents the number of TRPs.

It should be noted that, in case that there are multiple strongest combination coefficients in the combination coefficient matrix corresponding to multiple TRPs, for one TRP, the amplitude of the strongest combination coefficient in the combination coefficient matrix corresponding to the TRP is the largest, that is, the position of the maximum amplitude in the TRP may be determined based on the position of the strongest combination coefficient therein. The strongest amplitude is the maximum value among multiple maximum amplitudes. Therefore, by indicating the TRP including the strongest amplitude and indicating the position of the strongest combination coefficient in the TRP, the position of the strongest amplitude may be determined. Therefore, the coefficient position indication information may be used to indicate the second TRP including the strongest amplitude among multiple TRPs.

Regarding the indication information for indicating the position of the strongest combination coefficient in the combination coefficient matrix corresponding to each TRP, reference may be made to the method for indicating the position of the strongest combination coefficient in FIG. 5, and no detailed description thereof is given here.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRPs; and the terminal device can send the coefficient position indication information to the network device, in which the coefficient includes the strongest amplitude, and the number of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude; in which the number of the strongest combination coefficients in the combination coefficient matrix corresponding to the multiple TRPs is multiple. Thus, the position of the coefficient in the combination coefficient matrix is indicated in the scenario of multiple TRPs, so that the network device can determine the coefficient based on the position of the coefficient, and then perform subsequent processing, thereby reducing the feedback overhead of the terminal device while maintaining the performance of the system.

FIG. 11 is a schematic flowchart of another method for indicating a coefficient provided in an embodiment of the present disclosure. The method for indicating the coefficient is performed by a terminal device. As shown in FIG. 11, the method may include, but is not limited to, the following steps.

At step S1101, codebook parameter information sent by a network device is received, in which the codebook parameter information is used to determine a dimension of a combination coefficient matrix corresponding to multiple TRP groups.

At step S1102, coefficient position indication information is sent to the network device, in which the coefficient includes a strongest amplitude, and the number of the strongest amplitudes is one; the coefficient position indication information is used to indicate a position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRP groups is multiple.

In an embodiment of the present disclosure, the coefficient position indication information may be indicated by $\lceil \log_2 G \rceil \text{bits}$, where G represents the number of TRP groups.

It should be noted that, in case that there are multiple strongest combination coefficients in the combination coefficient matrix corresponding to multiple TRP groups, for one TRP group, the amplitude of the strongest combination coefficient in the combination coefficient matrix corresponding to the TRP group is the largest, that is, the position of the maximum amplitude in the TRP group may be determined based on the position of the strongest combination coefficient therein. The strongest amplitude is the maximum value among multiple maximum amplitudes. Therefore, by indicating the TRP group including the strongest amplitude and indicating the position of the strongest combination coefficient in the TRP group, the position of the strongest amplitude may be determined. Therefore, the coefficient position indication information may be used to indicate the second TRP group including the strongest amplitude among multiple TRP groups.

Regarding the indication information for indicating the position of the strongest combination coefficient in the combination coefficient matrix corresponding to each TRP group, reference may be made to the method for indicating the position of the strongest combination coefficient in FIG. 7, and no detailed description thereof is given here.

In the method for indicating the coefficient provided in this embodiment of the present disclosure, the terminal device can receive the codebook parameter information sent by the network device, in which the codebook parameter information is used to determine the dimension of the combination coefficient matrix corresponding to multiple TRP groups; and the terminal device can send the coefficient position indication information to the network device, in which the coefficient includes the strongest amplitude, and the number of the strongest amplitudes is one; the coefficient position indication information is used to indicate a position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRP groups is multiple. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

It should be noted that the aforementioned multiple embodiments executed by the terminal device may be implemented independently or combined together in any manner.

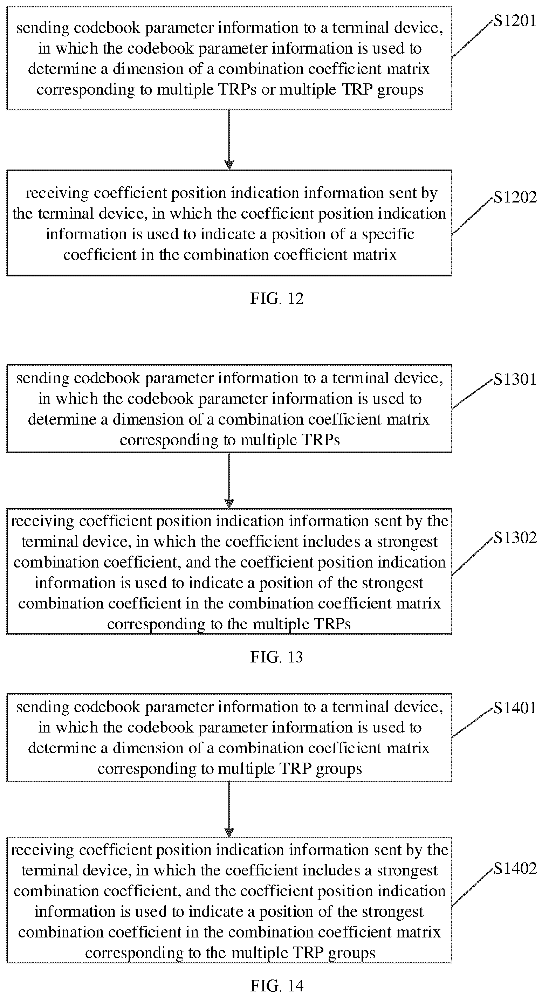

FIG. 12 is a schematic flowchart of a method for indicating a coefficient provided in an embodiment of the present disclosure. The method for indicating the coefficient is performed by a network device. As shown in FIG. 12, the method may include, but is not limited to, the following steps.

At step S1201, codebook parameter information is sent to a terminal device, in which the codebook parameter information is used to determine a dimension of a combination coefficient matrix corresponding to multiple TRPs or multiple TRP groups.

In an embodiment of the present disclosure, in one example, the codebook parameter information may be used to determine the dimension of the combination coefficient matrix corresponding to multiple TRPs. Among the multiple TRPs, each TRP corresponds to one combination coefficient matrix. In another example, the codebook parameter information may be used to determine the dimension of the combination coefficient matrix corresponding to multiple TRP groups. Among the multiple TRP groups, each TRP group corresponds to one combination coefficient matrix. A TRP group may include one or more TRPs.

In an embodiment of the present disclosure, the codebook parameter information includes the number of TRPs/TRP groups, and the number of basis vectors corresponding to one TRP/TRP group or multiple TRPs/TRP groups; and the number of basis vectors includes at least one of: the number of SD basis vectors, the number of FD basis vectors, the number of ports, or the number of SD-FD basis vector pairs. The number of ports herein refers to the number of CSI-RS ports.

In an embodiment of the present disclosure, in case that the codebook parameter information is used to determine the dimension of the combination coefficient matrix corresponding to multiple TRPs, the codebook parameter information may include the number of TRPs, and the number of basis vectors corresponding to one TRP or multiple TRPs. In one example, the codebook parameter information may include the number of TRPs, and the number of basis vectors corresponding to one TRP. In another example, the codebook parameter information may include the number of TRPs, and the number of basis vectors corresponding to multiple TRPs. The number of basis vectors corresponding to multiple TRPs refers to the total number of the respective basis vectors in all TRPs.

The multiple TRPs may be located in the same TRP group or in different TRP groups. The TRP groups to which any two TRPs belong may be the same or different, and there is no specific limitation on this here.

The terminal device can determine the dimension of the combination coefficient matrix corresponding to multiple TRPs based on the codebook parameter information configured by the network device, and thus determine the combination coefficient matrix corresponding to multiple TRPs.

In case that the codebook parameter information is used to determine the dimension of the combination coefficient matrix corresponding to multiple TRP groups, the codebook parameter information may include the number of TRP groups, and the number of basis vectors corresponding to one TRP group or multiple TRP groups. In one example, the codebook parameter information may include the number of TRP groups, and the number of basis vectors corresponding to one TRP. In another example, the codebook parameter information may include the number of TRP groups, and the number of basis vectors corresponding to multiple TRP groups. The number of basis vectors corresponding to multiple TRP groups refers to the total number of the respective basis vectors in all TRP groups.

The terminal device can determine the dimension of the combination coefficient matrix corresponding to multiple TRP groups based on the codebook parameter information configured by the network device, and thus determine the combination coefficient matrix corresponding to multiple TRP groups.

At step S1202, coefficient position indication information sent by the terminal device is received, in which the coefficient position indication information is used to indicate a position of a specific coefficient in the combination coefficient matrix.

In an embodiment of the present disclosure, the coefficient includes at least one of: a strongest combination coefficient, a strongest reference amplitude, or a strongest amplitude. For multiple TRPs or multiple TRP groups, the number of the strongest combination coefficients may be one or more.

In case that the codebook parameter information is used to determine the dimension of the combination coefficient matrix corresponding to multiple TRPs, the terminal device can determine the combination coefficient matrix corresponding to multiple TRPs, in which each TRP can correspond to one combination coefficient matrix. In case that the codebook parameter information is used to determine the dimension of the combination coefficient matrix corresponding to multiple TRP groups, the terminal device can determine the combination coefficient matrix corresponding to multiple TRP groups, in which each TRP group can correspond to one combination coefficient matrix.

In the method for indicating the coefficient provided in this embodiment of the present disclosure, the network device can send the codebook parameter information to the terminal device, in which the codebook parameter information is used to determine the dimension of the combination coefficient matrix corresponding to multiple TRPs or multiple TRP groups; and the network device can receive the coefficient position indication information sent by the terminal device, in which the coefficient position indication information is used to indicate the position of a specific coefficient in the combination coefficient matrix. Thus, the position of the coefficient in the combination coefficient matrix is indicated in the scenario of multiple TRPs or multiple TRP groups, so that the network device can determine the coefficient based on the position of the coefficient, and then perform subsequent processing, thereby reducing the feedback overhead of the terminal device while maintaining the performance of the system.

FIG. 13 is a schematic flowchart of a method for indicating a coefficient provided in an embodiment of the present disclosure. The method for indicating the coefficient is performed by a network device. As shown in FIG. 13, the method may include, but is not limited to, the following steps.

At step S1301, codebook parameter information is sent to a terminal device, in which the codebook parameter information is used to determine a dimension of a combination coefficient matrix corresponding to multiple TRPs.

At step S1302, coefficient position indication information sent by the terminal device is received, in which the coefficient includes a strongest combination coefficient, and the coefficient position indication information is used to indicate a position of the strongest combination coefficient in the combination coefficient matrix corresponding to the multiple TRPs.

In one example, the number of the strongest combination coefficients is one. In another example, the number of the strongest combination coefficients is multiple.

In case that the number of the strongest combination coefficients is one, in one example, the coefficient position indication information includes first indication information for indicating the first TRP corresponding to the strongest combination coefficient, and second indication information for indicating the position of the strongest combination coefficient in the combination coefficient matrix corresponding to the first TRP; or the coefficient position indication information includes second indication information for indicating the position of the strongest combination coefficient in the combination coefficient matrix corresponding to the first TRP, and the first TRP is predefined or configured by the network device.

In one situation, the first indication information may be indicated by $\lceil \log_2 N \rceil \text{bits}$, and the second indication information may be indicated by $\lceil \log_2 (2L_n M_n) \rceil \text{ bits}$, where N represents the number of TRPs, $L_n$ represents the number of SD basis vectors or the number of ports of an $n^{th}$ TRP, $M_n$ represents the number of FD basis vectors of the $n^{th}$ TRP, and the $n^{th}$ TRP is the first TRP. The number of ports herein refers to the number of CSI-RS ports.

In another situation, the first indication information may be indicated by $\lceil \log_2 N \rceil \text{ bits}$, and the second indication information may be indicated by any one of $\lceil \log_2 (2L_n) \rceil \text{bits}$, and $\lceil \log_2 (K_n^{NZ}) \rceil \text{bits}$, where N represents the number of TRPs, $L_n$ represents the number of SD basis vectors or the number of ports of an $n^{th}$ TRP, $K_n^{NZ}$ represents the number of non-zero coefficients in a combination coefficient matrix of one transmission layer corresponding to the $n^{th}$ TRP, and the $n^{th}$ TRP is the first TRP.

In another example, the coefficient position indication information may be indicated by at least one of:

$$\lceil \log_2 (\textstyle\sum_{n=1}^N 2L_n M_n) \rceil \text{bits,} \quad \lceil \log_2 (\textstyle\sum_{n=1}^N 2L_n) \rceil \text{bits}, \quad \text{or} \quad \lceil \log_2 (K_{tot}) \rceil,$$

where N represents the number of TRPs, $L_n$ represents the number of SD basis vectors or the number of ports of an $n^{th}$ TRP, $M_n$ represents the number of FD basis vectors of the $n^{th}$ TRP, and $K_{tot}$ represents the total number of non-zero coefficients in a combination coefficient matrix of one transmission layer corresponding to the multiple TRPs.

In case that the number of the strongest combination coefficients is multiple, the coefficient position indication information is used to indicate a position of the strongest combination coefficient in the combination coefficient matrix corresponding to each TRP, in which the multiple strongest combination coefficients correspond to the multiple TRPs in a one-to-one manner.

In this case, the indication information for indicating the position of the strongest combination coefficient corresponding to an $n^{th}$ TRP may be indicated by any one of:

$$\lceil \log_2 (2L_n M_n) \rceil \text{ bits,} \quad \lceil \log_2 (2L_n) \rceil \text{ bits,} \quad \lceil \log_2 (K_n^{NZ}) \rceil \text{ bits}, \quad \text{and} \quad \lceil \log_2 K_{n,0} \rceil \text{ bits},$$

where $L_n$ represents the number of SD basis vectors or the number of ports of the $n^{th}$ TRP, $M_n$ represents the number of FD basis vectors of the $n^{th}$ TRP, $K_n^{NZ}$ represents the number of non-zero coefficients in a combination coefficient matrix of one transmission layer corresponding to the $n^{th}$ TRP, and $K_{n,0}$ represents a maximum number of non-zero coefficients of each transmission layer corresponding to the $n^{th}$ TRP.

In an embodiment of the present disclosure, in case that the number of the strongest combination coefficients is multiple, in one example, the network device may further receive coefficient indication information sent by the terminal device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

In an embodiment of the present disclosure, in case that the number of the strongest combination coefficients is multiple, in another example, the network device may further receive coefficient indication information sent by the terminal device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information; in which the coefficient indication information is not used to indicate the strongest combination coefficient in the combination coefficient matrix corresponding to the third TRP.

In one example, the third TRP may be indicated by the coefficient position indication information. For example, in one way, the coefficient position indication information may further include indication information, and the indication information may indicate the third TRP. In another way, bits in the coefficient position indication information used to indicate the position of other coefficients may be reused to indicate the third TRP. It should be noted that the third TRP may be any one of the multiple TRPs.

In the coefficient position indication information, the third TRP may be indicated by $\lceil \log_2 N \rceil$ bits, where N represents the number of TRPs.

In another example, the third TRP may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP is a TRP corresponding to the smallest resource identifier among multiple resource identifiers, or the third TRP is a TRP corresponding to the largest resource identifier among multiple resource identifiers.

It should be noted that, in other embodiments, regarding the manner for predefining TRPs or configuring TRPs by the network device, reference may be made to the manner for predefining the third TRP or configuring the third TRP by the network device here. The manner for predefining TRPs or configuring TRPs by the network device will not be described in detail in other embodiments.

In an embodiment of the present disclosure, in the coefficient position indication information, the position of the strongest combination coefficient corresponding to the fourth TRP in the combination coefficient matrix corresponding to the multiple TRPs is indicated by $\left\lceil \log_2 \left( \sum_{n=1, n \neq j}^{N} 2L_n M_n \right) \right\rceil$ bits or $\left\lceil \log_2 \sum_{n=1, n \neq j}^{N} K_n^{NZ} \right\rceil$ bits, where N represents the number of TRPs; $L_n$ represents the number of SD basis vectors or the number of ports of an n$^{th}$ TRP; $M_n$ represents the number of FD basis vectors of the n$^{th}$ TRP; $K_n^{NZ}$ represents the number of non-zero coefficients in a combination coefficient matrix of one transmission layer corresponding to the n$^{th}$ TRP; and a j$^{th}$ TRP is the third TRP.

In an embodiment of the present disclosure, in one example, the position of the strongest combination coefficient corresponding to the fourth TRP in the combination coefficient matrix corresponding to the multiple TRPs may be indicated by the coefficient position indication information. For example, in one way, the coefficient position indication information may further include indication information, and the indication information may indicate the position of the strongest combination coefficient corresponding to the fourth TRP in the combination coefficient matrix corresponding to the multiple TRPs. In another way, bits in the coefficient position indication information used to indicate the position of other coefficients may be reused to indicate the position of the strongest combination coefficient corresponding to the fourth TRP in the combination coefficient matrix corresponding to the multiple TRPs.

In an embodiment of the present disclosure, the coefficient may further include a strongest amplitude and/or a strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

It should be noted that the amplitude of the strongest combination coefficient in the combination coefficient matrix corresponding to each TRP is the largest, and the strongest amplitude is the maximum value among multiple maximum amplitudes.

In the method for indicating the coefficient provided in this embodiment of the present disclosure, the network device can send the codebook parameter information to the terminal device, in which the codebook parameter information is used to determine the dimension of the combination coefficient matrix corresponding to multiple TRPs; and the network device can receive the coefficient position indication information sent by the terminal device, in which the coefficient includes the strongest combination coefficient, and the coefficient position indication information is used to indicate a position of the strongest combination coefficient in the combination coefficient matrix corresponding to the multiple TRPs.

Thus, the position of the coefficient in the combination coefficient matrix is indicated in the scenario of multiple TRPs, so that the network device can determine the coefficient based on the position of the coefficient, and then perform subsequent processing, thereby reducing the feedback overhead of the terminal device while maintaining the performance of the system.

FIG. 14 is a schematic flowchart of a method for indicating a coefficient provided in an embodiment of the present disclosure. The method for indicating the coefficient is performed by a network device. As shown in FIG. 14, the method may include, but is not limited to, the following steps.

At step S1401, codebook parameter information is sent to a terminal device, in which the codebook parameter information is used to determine a dimension of a combination coefficient matrix corresponding to multiple TRP groups.

At step S1402, coefficient position indication information sent by the terminal device is received, in which the coefficient includes a strongest combination coefficient, and the coefficient position indication information is used to indicate a position of the strongest combination coefficient in the combination coefficient matrix corresponding to the multiple TRP groups.

In one example, the number of the strongest combination coefficients is one. In another example, the number of the strongest combination coefficients is multiple.

In case that the number of the strongest combination coefficients is one, in one example, the coefficient position indication information includes third indication information for indicating a first TRP group corresponding to the strongest combination coefficient, and fourth indication information for indicating the position of the strongest combination coefficient in the combination coefficient matrix corresponding to the first TRP group; or the coefficient position indication information includes fourth indication information for indicating the position of the strongest combination coefficient in the combination coefficient matrix corresponding to the first TRP group, and the first TRP group is predefined or configured by the network device.

In one situation, the third indication information may be indicated by $\lceil \log_2 G \rceil \text{bits}$, and the fourth indication information may be indicated by $\left\lceil \log_2 (\sum_{i=1}^{I_g} 2L_{g,i} M_{g,i}) \right\rceil \text{bits}$, where G represents the number of TRP groups, $I_g$ represents the number of TRPs in a $g^{th}$ TRP group, $L_{g,i}$ represents the number of SD basis vectors or the number of ports of an $i^{th}$ TRP in the $g^{th}$ TRP group, and $M_{g,i}$ represents the number of FD basis vectors of the $i^{th}$ TRP in the $g^{th}$ TRP group. The number of ports herein refers to the number of CSI-RS ports.

In another situation, the third indication information may be indicated by $\lceil \log_2 G \rceil \text{ bits}$, and the fourth indication information may be indicated by any one of: $\left\lceil \log_2 (\sum_{i=1}^{I_g} 2L_{g,i}) \right\rceil \text{ bits}$, and $\left\lceil \log_2 (\sum_{i=1}^{I_g} K_{g,i}^{NZ}) \right\rceil \text{bits}$, where G represents the number of TRP groups, $I_g$ represents the number of TRPs in a $g^{th}$ TRP group, $L_{g,i}$ represents the number of SD basis vectors or the number of ports of an $i^{th}$ TRP in the $g^{th}$ TRP group, and $K_{g,i}^{NZ}$ represents the number of non-zero coefficients in a combination coefficient matrix of one transmission layer corresponding to the $i^{th}$ TRP in the $g^{th}$ TRP group.

In case that the number of the strongest combination coefficients is multiple, the coefficient includes a strongest combination coefficient, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

In this case, the indication information for indicating the position of the strongest combination coefficient corresponding to a $g^{th}$ TRP group may be indicated by $\left\lceil \log_2 (\sum_{i=1}^{I_g} 2L_{g,i}) \right\rceil \text{bits}$, or $\lceil \log_2 K_{g,0} \rceil \text{bits}$, where $I_g$ represents the number of TRPs in the $g^{th}$ TRP group, $L_{g,i}$ represents the number of SD basis vectors or the number of ports of an $i^{th}$ TRP in the $g^{th}$ TRP group, and $K_{g,0}$ represents a maximum number of non-zero coefficients of each transmission layer of the $g^{th}$ TRP group.

In an embodiment of the present disclosure, in case that the number of the strongest combination coefficients is multiple, in one example, the network device may further receive coefficient indication information sent by the terminal device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device, in which the coefficient indication information is not used to indicate the strongest combination coefficient in the combination coefficient matrix corresponding to the third TRP group.

In an embodiment of the present disclosure, in case that the number of the strongest combination coefficients is multiple, in another example, the network device may further receive coefficient indication information sent by the terminal device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information; in which the coefficient indication information is not used to indicate the strongest combination coefficient in the combination coefficient matrix corresponding to the third TRP group.

In an embodiment of the present disclosure, in one example, the third TRP group may be indicated by the coefficient position indication information. For example, in one way, the coefficient position indication information may further include indication information, and the indication information may indicate the third TRP group. In another way, bits in the coefficient position indication information used to indicate the position of other coefficients may be reused to indicate the third TRP group. It should be noted that the third TRP group may be any one of the multiple TRP groups.

In the coefficient position indication information, the third TRP group may be indicated by $\lceil \log_2 G \rceil \text{bits}$, where G represents the number of TRP groups.

In an embodiment of the present disclosure, in another example, the third TRP group may be predefined or configured by the network device. Specifically, the network device may configure a resource identifier of a CSI-RS resource associated with each TRP, or the network device may configure a resource identifier of a CSI-RS resource associated with each TRP group. The network device and the terminal device may specify or predefine the content as follows: the third TRP group is a TRP group corresponding to the smallest resource identifier among multiple resource identifiers, or the third TRP group is a TRP group corresponding to the largest resource identifier among multiple resource identifiers.

It should be noted that, in other embodiments, regarding the manner for predefining TRP groups or configuring TRP groups by the network device, reference may be made to the manner for predefining the third TRP group or configuring the third TRP group by the network device here. The manner for predefining TRP groups or configuring TRP groups by the network device will not be described in detail in other embodiments.

In an embodiment of the present disclosure, in the coefficient position indication information, the position of the strongest combination coefficient corresponding to the fourth TRP group in the combination coefficient matrix corresponding to the multiple TRP groups is indicated by $\lceil \log_2 (\sum_{i=1, i \neq j}^{G} 2L_{g,i}) \rceil \text{bits}$, where G represents the number of TRP groups, $L_{g,i}$ represents the number of SD basis vectors or the number of ports of an $i^{th}$ TRP group, and a $j^{th}$ TRP group is the third TRP group.

In an embodiment of the present disclosure, in one example, the position of the strongest combination coefficient corresponding to the fourth TRP group in the combination coefficient matrix corresponding to the multiple TRP groups may be indicated by the coefficient position indication information. For example, in one way, the coefficient position indication information may further include indication information, and the indication information may indicate the position of the strongest combination coefficient corresponding to the fourth TRP group in the combination coefficient matrix corresponding to the multiple TRP groups. In another way, bits in the coefficient position indication information used to indicate the position of other coefficients may be reused to indicate the position of the strongest combination coefficient corresponding to the fourth TRP group in the combination coefficient matrix corresponding to the multiple TRP groups.

In an embodiment of the present disclosure, the coefficient may further include a strongest amplitude and/or a strongest reference amplitude; in which the coefficient position indication information is further used to indicate a position of the strongest amplitude in the combination coefficient matrix corresponding to the multiple TRP groups, in which the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

In the method for indicating the coefficient provided in this embodiment of the present disclosure, the network device can send the codebook parameter information to the terminal device, in which the codebook parameter information is used to determine the dimension of the combination coefficient matrix corresponding to multiple TRP groups; and the network device can receive the coefficient position indication information sent by the terminal device, in which the coefficient includes the strongest combination coefficient, and the coefficient position indication information is used to indicate a position of the strongest combination coefficient in the combination coefficient matrix corresponding to the multiple TRP groups. Thus, the position of the coefficient in the combination coefficient matrix is indicated in the scenario of multiple TRP groups, so that the network device can determine the coefficient based on the position of the coefficient, and then perform subsequent processing, thereby reducing the feedback overhead of the terminal device while maintaining the performance of the system.

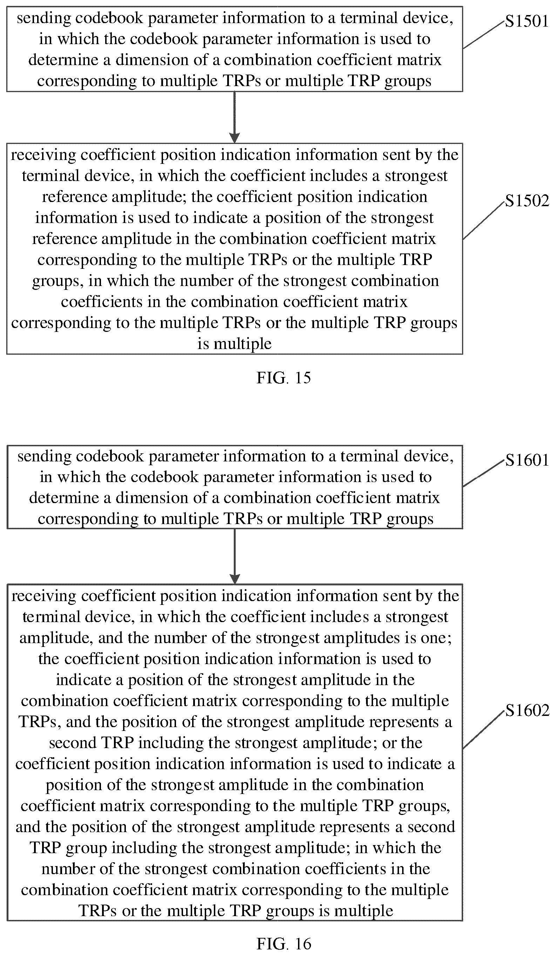

FIG. 15 is a schematic flowchart of a method for indicating a coefficient provided in an embodiment of the present disclosure. The method for indicating the coefficient is performed by a network device. As shown in FIG. 15, the method may include, but is not limited to, the following steps.

At step S1501, codebook parameter information is sent to a terminal device, in which the codebook parameter information is used to determine a dimension of a combination coefficient matrix corresponding to multiple TRPs or multiple TRP groups.

In one example, the codebook parameter information is used to determine the dimension of the combination coefficient matrix corresponding to multiple TRPs. In another example, the codebook parameter information is used to determine the dimension of the combination coefficient matrix corresponding to multiple TRP groups.

At step S1502, coefficient position indication information sent by the terminal device is received, in which the coefficient includes a strongest reference amplitude; the coefficient position indication information is used to indicate a position of the strongest reference amplitude in the combination coefficient matrix corresponding to the multiple TRPs or the multiple TRP groups, in which the number of the strongest combination coefficients in the combination coefficient matrix corresponding to the multiple TRPs or the multiple TRP groups is multiple.

In one example, the coefficient position indication information is used to indicate the position of the strongest reference amplitude in the combination coefficient matrix corresponding to the multiple TRPs. The coefficient position indication information may be indicated by $\lceil \log_2 N \rceil \text{bits}$, or by a bitmap of N bits, where N represents the number of TRPs.

In another example, the coefficient position indication information is used to indicate the position of the strongest reference amplitude in the combination coefficient matrix corresponding to the multiple TRP groups. The coefficient position indication information may be indicated by $\lceil \log_2 G \rceil \text{bits}$, or by a bitmap of G bits, where G represents the number of TRP groups.

In an embodiment of the present disclosure, the strongest reference amplitude is not configured by the network device and is not predefined. In the case where the strongest reference amplitude is configured by the network device or predefined, the terminal device does not need to send indication information for indicating the position of the strongest reference amplitude to the network device.

In the method for indicating the coefficient provided in this embodiment of the present disclosure, the network device can send the codebook parameter information to the terminal device, in which the codebook parameter information is used to determine the dimension of the combination coefficient matrix corresponding to multiple TRPs or multiple TRP groups; and the network device can receive the coefficient position indication information sent by the terminal device, in which the coefficient includes the strongest reference amplitude; the coefficient position indication information is used to indicate the position of the strongest reference amplitude in the combination coefficient matrix corresponding to the multiple TRPs or the multiple TRP groups, in which the number of the strongest combination coefficients in the combination coefficient matrix corresponding to the multiple TRPs or the multiple TRP groups is multiple. Thus, the position of the coefficient in the combination coefficient matrix is indicated in the scenario of multiple TRPs or multiple TRP groups, so that the network device can determine the coefficient based on the position of the coefficient, and then perform subsequent processing, thereby reducing the feedback overhead of the terminal device while maintaining the performance of the system.

FIG. 16 is a schematic flowchart of a method for indicating a coefficient provided in an embodiment of the present disclosure. The method for indicating the coefficient is performed by a network device. As shown in FIG. 16, the method may include, but is not limited to, the following steps.

At step S1601, codebook parameter information is sent to a terminal device, in which the codebook parameter information is used to determine a dimension of a combination coefficient matrix corresponding to multiple TRPs or multiple TRP groups.

In one example, the codebook parameter information is used to determine the dimension of the combination coefficient matrix corresponding to multiple TRPs. In another example, the codebook parameter information is used to determine the dimension of the combination coefficient matrix corresponding to multiple TRP groups.

At step S1602, coefficient position indication information sent by the terminal device is received, in which the coefficient includes a strongest amplitude, and the number of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude; or the coefficient position indication information is used to indicate a position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRPs or the multiple TRP groups is multiple.

In one example, the coefficient position indication information is used to indicate the position of the strongest amplitude in the combination coefficient matrix corresponding to the multiple TRPs, and the position of the strongest amplitude represents the second TRP including the strongest amplitude. The coefficient position indication information may be indicated by $\lceil \log_2 N \rceil \text{bits}$, where N represents the number of TRPs.

It should be noted that, in case that there are multiple strongest combination coefficients in the combination coefficient matrix corresponding to multiple TRPs, for one TRP, the amplitude of the strongest combination coefficient in the combination coefficient matrix corresponding to the TRP is the largest, that is, the position of the maximum amplitude in the TRP may be determined based on the position of the strongest combination coefficient therein. The strongest amplitude is the maximum value among multiple maximum amplitudes. Therefore, by indicating the TRP including the strongest amplitude and indicating the position of the strongest combination coefficient in the TRP, the position of the strongest amplitude may be determined. Therefore, the coefficient position indication information may be used to indicate the second TRP including the strongest amplitude among multiple TRPs.

In another example, the coefficient position indication information is used to indicate the position of the strongest amplitude in the combination coefficient matrix corresponding to the multiple TRP groups, and the position of the strongest amplitude represents the second TRP group including the strongest amplitude. The coefficient position indication information may be indicated by $\lceil \log_2 G \rceil \text{bits}$, where G represents the number of TRP groups.

It should be noted that, in case that there are multiple strongest combination coefficients in the combination coefficient matrix corresponding to multiple TRP groups, for one TRP group, the amplitude of the strongest combination coefficient in the combination coefficient matrix corresponding to the TRP group is the largest, that is, the position of the maximum amplitude in the TRP group may be determined based on the position of the strongest combination coefficient therein. The strongest amplitude is the maximum value among multiple maximum amplitudes. Therefore, by indicating the TRP group including the strongest amplitude and indicating the position of the strongest combination coefficient in the TRP group, the position of the strongest amplitude may be determined. Therefore, the coefficient position indication information may be used to indicate the second TRP group including the strongest amplitude among multiple TRP groups.

In the method for indicating the coefficient provided in this embodiment of the present disclosure, the network device can send the codebook parameter information to the terminal device, in which the codebook parameter information is used to determine the dimension of the combination coefficient matrix corresponding to multiple TRPs or multiple TRP groups; and the network device can receive the coefficient position indication information sent by the terminal device, in which the coefficient includes the strongest amplitude, and the number of the strongest amplitudes is one; the coefficient position indication information is used to indicate the position of the strongest amplitude in the combination coefficient matrix corresponding to the multiple TRPs, and the position of the strongest amplitude represents a second TRP including the strongest amplitude; or the coefficient position indication information is used to indicate the position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRPs or the multiple TRP groups is multiple. Thus, the position of the coefficient in the combination coefficient matrix is indicated in the scenario of multiple TRPs or multiple TRP groups, so that the network device can determine the coefficient based on the position of the coefficient, and then perform subsequent processing, thereby reducing the feedback overhead of the terminal device while maintaining the performance of the system.

It should be noted that the aforementioned multiple embodiments executed by the network device may be implemented independently or combined together in any manner.

In the above-mentioned embodiments provided in the present disclosure, the methods provided in the embodiments of the present disclosure are introduced from the perspectives of the network device and the terminal device, respectively. In order to implement various functions in the methods provided in the above-mentioned embodiments of the present disclosure, the network device and the first terminal device may include a hardware structure and a software module to implement the above-mentioned functions in the form of a hardware structure, a software module, or a hardware structure plus a software module. Any one of the above functions may be implemented in the form of a hardware structure, a software module, or a hardware structure plus a software module.

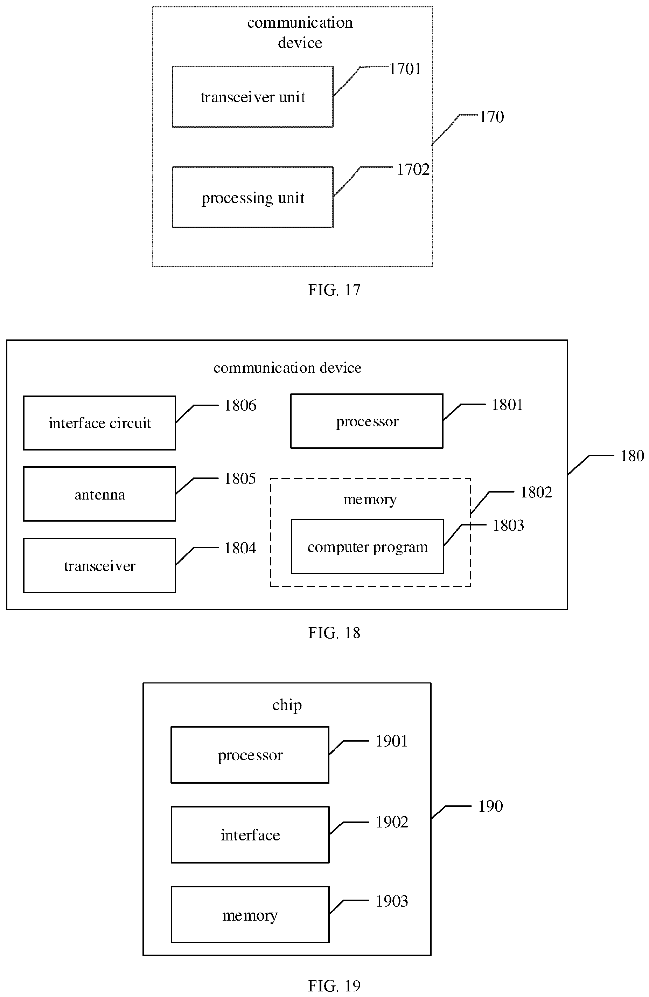

FIG. 17 is a schematic block diagram of a communication device 170 provided in an embodiment of the present disclosure. The communication device 170 shown in FIG. 17 may include a transceiver unit 1701 and a processing unit 1702. The transceiver unit 1701 may include a sending module and/or a receiving module. The sending module is configured to implement a sending function, and the receiving module is configured to implement a receiving function. The transceiver unit 1701 may implement a sending function and/or a receiving function.

The communication device 170 may be a terminal device, or an apparatus in a terminal device, or an apparatus that may be used in conjunction with a terminal device. Alternatively, the communication device 170 may be a network device, or an apparatus in a network device, or an apparatus that may be used in conjunction with a network device.

The communication device 170 is a terminal device.

The transceiver unit 1701 is configured to receive codebook parameter information sent by a network device, in which the codebook parameter information is used to determine a dimension of a combination coefficient matrix corresponding to multiple TRPs or multiple TRP groups.

The transceiver unit 1701 is further configured to send coefficient position indication information to the network device, in which the coefficient position indication information is used to indicate a position of a specific coefficient in the combination coefficient matrix.

Optionally, the codebook parameter information includes a numeric count of TRPs/TRP groups, and a numeric count of basis vectors corresponding to one TRP/TRP group or multiple TRPs/TRP groups; the number of basis vectors includes at least one of: a numeric count of SD basis vectors, a numeric count of FD basis vectors, a numeric count of ports, or a numeric count of SD-FD basis vector pairs.

Optionally, the coefficient includes at least one of: a strongest combination coefficient, a strongest reference amplitude, or a strongest amplitude.

Optionally, the coefficient includes one strongest combination coefficient, and the coefficient position indication information is used to indicate a position of the strongest combination coefficient in the combination coefficient matrix corresponding to the multiple TRPs.

Optionally, the coefficient position indication information includes first indication information for indicating a first TRP corresponding to the strongest combination coefficient, and second indication information for indicating the position of the strongest combination coefficient in the combination coefficient matrix corresponding to the first TRP; or the coefficient position indication information includes second indication information for indicating the position of the strongest combination coefficient in the combination coefficient matrix corresponding to the first TRP, and the first TRP is predefined or configured by the network device.

Optionally, the first indication information is indicated by $\lceil \log_2 N \rceil \text{bits}$; the second indication information is indicated by $\lceil \log_2(2L_n M_n) \rceil \text{bits}$, where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, and the n$^{th}$ TRP is the first TRP.

Optionally, the first indication information is indicated by $\lceil \log_2 N \rceil \text{bits}$; the second indication information is indicated by any one of $\lceil \log_2(2L_n) \rceil \text{bits}$, and $\lceil \log_2(K_n^{NZ}) \rceil \text{bits}$, where N represents a numeric count of TRPs, $L_n$ represents a numeric count of SD basis vectors or a numeric count of ports of an n$^{th}$ TRP, $K_n^{NZ}$ represents a numeric count of non-zero coefficients in a combination coefficient matrix of one transmission layer corresponding to the n$^{th}$ TRP, and the n$^{th}$ TRP is the first TRP.

Optionally, the coefficient position indication information is indicated by at least one of: $\lceil \log_2(\sum_{n=1}^{N} 2L_n M_n) \rceil \text{bits},$ $\lceil \log_2(\sum_{n=1}^{N} 2L_n) \rceil \text{bits},$ or $\lceil \log_2(K_{tot}) \rceil$, where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, and $K_{tot}$ represents a total number of non-zero coefficients in a combination coefficient matrix of one transmission layer corresponding to the multiple TRPs.

Optionally, the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

Optionally, the coefficient position indication information includes indication information for indicating the position of the strongest combination coefficient in the combination coefficient matrix corresponding to each TRP; in which the indication information for indicating the position of the strongest combination coefficient corresponding to an n$^{th}$ TRP is indicated by any one of: $\lceil \log_2(2L_n M_n) \rceil \text{bits},$ $\lceil \log_2(2L_n) \rceil \text{bits},$ $\lceil \log_2(K_n^{NZ}) \rceil \text{bits},$ and $\lceil \log_2 K_{n,0} \rceil \text{bits}$, where $L_n$ represents a numeric count of SD basis vectors or a numeric count of ports of the n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and $K_{n,0}$ represents a maximum number of non-zero coefficients of each transmission layer corresponding to the n$^{th}$ TRP.

Optionally, the method further includes sending coefficient indication information to the network device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

Optionally, the method further includes sending coefficient indication information to the network device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information, in which the coefficient indication information is not used to indicate the strongest combination coefficient in the combination coefficient matrix corresponding to the third TRP.

Optionally, in the coefficient position indication information, the third TRP is indicated by $\lceil \log_2 N \rceil$ bits, where N represents a numeric count of TRPs.

Optionally, in the coefficient position indication information, the position of the strongest combination coefficient corresponding to the fourth TRP in the combination coefficient matrix corresponding to the multiple TRPs is indicated by $\lceil \log_2 (\sum_{n=1,n\neq j}^{N} 2L_n M_n) \rceil$ bits or $\lceil \log_2 \sum_{n=1,n\neq j}^{N} K_n^{NZ} \rceil$ bits, , where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, $K_n^{NZ}$ represents a numeric count of non-zero coefficients in a combination coefficient matrix of one transmission layer corresponding to the $n^{th}$ TRP, and a $j^{th}$ TRP is the third TRP.

Optionally, the coefficient further includes the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

Optionally, the coefficient includes one strongest combination coefficient, and the coefficient position indication information is used to indicate a position of the strongest combination coefficient in the combination coefficient matrix corresponding to multiple TRP groups.

Optionally, the coefficient position indication information includes third indication information for indicating a first TRP group corresponding to the strongest combination coefficient, and fourth indication information for indicating the position of the strongest combination coefficient in the combination coefficient matrix corresponding to the first TRP group; or the coefficient position indication information includes fourth indication information for indicating the position of the strongest combination coefficient in the combination coefficient matrix corresponding to the first TRP group, and the first TRP group is predefined or configured by the network device.

Optionally, the third indication information is indicated by $\lceil \log_2 G \rceil$ bits; and the fourth indication information is indicated by $\lceil \log_2 (\sum_{i=1}^{I_g} 2L_{g,i} M_{g,i}) \rceil$ bits, where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $M_{g,i}$ represents a numeric count of FD basis vectors of the $i^{th}$ TRP in the $g^{th}$ TRP group.

Optionally, the third indication information is indicated by $\lceil \log_2 G \rceil$ bits; and the fourth indication information is indicated by any one of: $\lceil \log_2 (\sum_{i=1}^{I_g} 2L_{g,i}) \rceil$ bits, and $\lceil \log_2 (\sum_{i=1}^{I_g} K_{g,i}^{NZ}) \rceil$ bits, where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $K_{g,i}^{NZ}$ represents a numeric count of non-zero coefficients in a combination coefficient matrix of one transmission layer corresponding to the $i^{th}$ TRP in the $g^{th}$ TRP group.

Optionally, the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

Optionally, the coefficient position indication information includes indication information for indicating the position of the strongest combination coefficient in the combination coefficient matrix corresponding to each TRP group; the indication information for indicating the position of the strongest combination coefficient corresponding to a $g^{th}$ TRP group is indicated by $\left\lceil \log_2(\sum_{i=1}^{I_g} 2L_{g,i}) \right\rceil \text{bits}$, or $\left\lceil \log_2 K_{g,0} \right\rceil \text{bits}$, where $I_g$ represents a numeric count of TRPs in the g$^{th}$ TRP group, $L_{g,i}$ represents a numeric count of SD basis vectors or a numeric count of ports of an i$^{th}$ TRP in the g$^{th}$ TRP group, and $K_{g,0}$ represents a maximum number of non-zero coefficients of each transmission layer of the g$^{th}$ TRP group.

Optionally, the method further includes sending coefficient indication information to the network device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device, in which the coefficient indication information is not used to indicate the strongest combination coefficient in the combination coefficient matrix corresponding to the third TRP group.

Optionally, the method further includes sending coefficient indication information to the network device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information, in which the coefficient indication information is not used to indicate the strongest combination coefficient in the combination coefficient matrix corresponding to the third TRP group.

Optionally, in the coefficient position indication information, the third TRP group is indicated by $\left\lceil \log_2 G \right\rceil \text{bits}$, where G represents a numeric count of TRP groups.

Optionally, in the coefficient position indication information, the position of the strongest combination coefficient corresponding to the fourth TRP group in the combination coefficient matrix corresponding to the multiple TRP groups is indicated by $\left\lceil \log_2(\sum_{i=1,i\neq j}^{G} 2L_{g,i}) \right\rceil \text{bits}$, where G represents a numeric count of TRP groups, $L_{g,i}$ represents a numeric count of SD basis vectors or a numeric count of ports of an i$^{th}$ TRP group, and a j$^{th}$ TRP group is the third TRP group.

Optionally, the coefficient further includes the strongest amplitude and/or the strongest reference amplitude; in which the coefficient position indication information is further used to indicate a position of the strongest amplitude in the combination coefficient matrix corresponding to the multiple TRP groups, and the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

Optionally, the coefficient includes the strongest reference amplitude; the coefficient position indication information is used to indicate a position of the strongest reference amplitude in the combination coefficient matrix corresponding to the multiple TRPs, in which a numeric count of the strongest combination coefficients in the combination coefficient matrix corresponding to the multiple TRPs is multiple.

Optionally, the coefficient position indication information is indicated by $\left\lceil \log_2 N \right\rceil \text{bits}$, or by a bitmap of N bits, where N represents a numeric count of TRPs.

Optionally, the coefficient includes the strongest reference amplitude; and the coefficient position indication information is used to indicate a position of the strongest reference amplitude in the combination coefficient matrix corresponding to the multiple TRP groups, in which a numeric count of the strongest combination coefficients in the combination coefficient matrix corresponding to the multiple TRP groups is multiple.

Optionally, the coefficient position indication information is indicated by $\left\lceil \log_2 G \right\rceil \text{bits}$, or by a bitmap of G bits, where G represents a numeric count of TRP groups.

Optionally, the coefficient includes the strongest amplitude, and a numeric count of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude, in which a numeric count of the strongest combination coefficients in the combination coefficient matrix corresponding to the multiple TRPs is multiple.

Optionally, the coefficient position indication information is indicated by $\left\lceil \log_2 N \right\rceil \text{bits}$, where N represents a numeric count of TRPs.

Optionally, the coefficient includes the strongest amplitude, and a numeric count of the strongest amplitude is one; the coefficient position indication information is used to indicate a position of the strongest amplitude in the combination coefficient matrix corresponding to the multiple TRP groups, in which the position of the strongest amplitude represents a second TRP group including the strongest amplitude, in which a numeric count of the strongest combination coefficients in the combination coefficient matrix corresponding to multiple TRP groups is multiple.

Optionally, the coefficient position indication information is indicated by $\lceil \log_2 G \rceil$ bits, where G represents a numeric count of TRP groups.

The communication device 170 is a network device.

The transceiver unit 1701 is configured to send codebook parameter information to a terminal device, in which the codebook parameter information is used to determine a dimension of a combination coefficient matrix corresponding to multiple TRPs or multiple TRP groups; and receive coefficient position indication information sent by the terminal device, in which the coefficient position indication information is used to indicate a position of a specific coefficient in the combination coefficient matrix.

Optionally, the codebook parameter information includes a numeric count of TRPs/TRP groups, and a numeric count of basis vectors corresponding to one TRP/TRP group or multiple TRPs/TRP groups; the number of basis vectors includes at least one of: a numeric count of SD basis vectors, a numeric count of FD basis vectors, a numeric count of ports, or a numeric count of SD-FD basis vector pairs.

Optionally, the coefficient includes at least one of: a strongest combination coefficient, a strongest reference amplitude, or a strongest amplitude.

Optionally, the coefficient includes one strongest combination coefficient, and the coefficient position indication information is used to indicate a position of the strongest combination coefficient in the combination coefficient matrix corresponding to the multiple TRPs.

Optionally, the coefficient position indication information includes first indication information for indicating a first TRP corresponding to the strongest combination coefficient, and second indication information for indicating the position of the strongest combination coefficient in the combination coefficient matrix corresponding to the first TRP; or the coefficient position indication information includes second indication information for indicating the position of the strongest combination coefficient in the combination coefficient matrix corresponding to the first TRP, and the first TRP is predefined or configured by the network device.

Optionally, the first indication information is indicated by $\lceil \log_2 N \rceil \text{bits}$ ; the second indication information is indicated by $\lceil \log_2 (2L_n M_n) \rceil \text{bits}$ , where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and the $n^{th}$ TRP is the first TRP.

Optionally, the first indication information is indicated by $\lceil \log_2 N \rceil \text{bits}$ ; the second indication information is indicated by any one of $\lceil \log_2 (2L_n) \rceil \text{bits}$ , and $\lceil \log_2 (K_n^{NZ}) \rceil \text{bits}$ , where N represents a numeric count of TRPs, $L_n$ represents a numeric count of SD basis vectors or a numeric count of ports of an $n^{th}$ TRP, $K_n^{NZ}$ represents a numeric count of non-zero coefficients in a combination coefficient matrix of one transmission layer corresponding to the $n^{th}$ TRP, and the $n^{th}$ TRP is the first TRP.

Optionally, the coefficient position indication information is indicated by at least one of: $\lceil \log_2 (\sum_{n=1}^{N} 2L_n M_n) \rceil \text{bits}, \ \lceil \log_2 (\sum_{n=1}^{N} 2L_n) \rceil \text{bits}$ , or $\lceil \log_2 (K_{tot}) \rceil$ , where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and $K_{tot}$ represents a total number of non-zero coefficients in a combination coefficient matrix of one transmission layer corresponding to the multiple TRPs.

Optionally, the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

Optionally, the coefficient position indication information includes indication information for indicating the position of the strongest combination coefficient in the combination coefficient matrix corresponding to each TRP; in which the indication information for indicating the position of the strongest combination coefficient corresponding to an $n^{th}$ TRP is indicated by any one of: $\lceil \log_2 (2L_n M_n) \rceil \text{bits}, \ \lceil \log_2 (2L_n) \rceil \text{bits}, \ \lceil \log_2 (K_n^{NZ}) \rceil \text{bits}$ , and $\lceil \log_2 K_{n,0} \rceil \text{bits}$ , where $L_n$ represents a numeric count of SD basis vectors or a numeric count of ports of the $n^{th}$ TRP, $M_n$ represents a

numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and $K_{n,0}$ represents a maximum number of non-zero coefficients of each transmission layer corresponding to the n$^{th}$ TRP.

Optionally, the method further includes receiving coefficient indication information sent by the terminal device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

Optionally, the method further includes receiving coefficient indication information sent by the terminal device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information, in which the coefficient indication information is not used to indicate the strongest combination coefficient in the combination coefficient matrix corresponding to the third TRP.

Optionally, in the coefficient position indication information, the third TRP is indicated by $\lceil \log_2 N \rceil$ bits, where N represents a numeric count of TRPs.

Optionally, in the coefficient position indication information, the position of the strongest combination coefficient corresponding to the fourth TRP in the combination coefficient matrix corresponding to the multiple TRPs is indicated by

$$\lceil \log_2 (\sum_{n=1, n \neq j}^{N} 2L_n M_n) \rceil \text{ bits}$$ or $$\lceil \log_2 \sum_{n=1, n \neq j}^{N} K_n^{NZ} \rceil \text{ bits}$$, where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and a j$^{th}$ TRP is the third TRP.

Optionally, the coefficient further includes the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

Optionally, the coefficient includes one strongest combination coefficient, and the coefficient position indication information is used to indicate a position of the strongest combination coefficient in the combination coefficient matrix corresponding to multiple TRP groups.

Optionally, the coefficient position indication information includes third indication information for indicating a first TRP group corresponding to the strongest combination coefficient, and fourth indication information for indicating the position of the strongest combination coefficient in the combination coefficient matrix corresponding to the first TRP group; or the coefficient position indication information includes fourth indication information for indicating the position of the strongest combination coefficient in the combination coefficient matrix corresponding to the first TRP group, and the first TRP group is predefined or configured by the network device.

Optionally, the third indication information is indicated by $\lceil \log_2 G \rceil$ bits; and the fourth indication information is indicated by $$\lceil \log_2 (\sum_{i=1}^{I_g} 2L_{g,i} M_{g,i}) \rceil \text{ bits}$$, where G represents a numeric count of TRP groups, $I_g$ represents a numeric count of TRPs in a g$^{th}$ TRP group, $L_{g,i}$ represents a numeric count of SD basis vectors or a numeric count of ports of an i$^{th}$ TRP in the g$^{th}$ TRP group, and $M_{g,i}$ represents a numeric count of FD basis vectors of the i$^{th}$ TRP in the g$^{th}$ TRP group.

Optionally, the third indication information is indicated by $\lceil \log_2 G \rceil$ bits; and the fourth indication information is indicated by any one of: $$\lceil \log_2 (\sum_{i=1}^{I_g} 2L_{g,i}) \rceil \text{ bits}$$, and $$\lceil \log_2 (\sum_{i=1}^{I_g} K_{g,i}^{NZ}) \rceil \text{ bits}$$, where G represents a numeric count of TRP groups, $I_g$ represents a numeric count of TRPs in a g$^{th}$ TRP group, $L_{g,i}$ represents a numeric count of SD basis vectors or a numeric count of ports of an i$^{th}$ TRP in the g$^{th}$ TRP group, and $K_{g,i}^{NZ}$ represents a numeric count of non-zero coefficients in a combination coefficient matrix of one transmission layer corresponding to the $i^{th}$ TRP in the $g^{th}$ TRP group.

Optionally, the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

Optionally, the coefficient position indication information includes indication information for indicating the position of the strongest combination coefficient in the combination coefficient matrix corresponding to each TRP group; the indication information for indicating the position of the strongest combination coefficient corresponding to a $g^{th}$ TRP group is indicated by $\left\lceil \log_2(\sum_{i=1}^{I_g} 2L_{g,i}) \right\rceil \text{bits}$, or $\left\lceil \log_2 K_{g,0} \right\rceil \text{bits}$, where $I_g$ represents a numeric count of TRPs in the $g^{th}$ TRP group, $L_{g,i}$ represents a numeric count of SD basis vectors or a numeric count of ports of an $i^{th}$ TRP in the $g^{th}$ TRP group, and $K_{g,0}$ represents a maximum number of non-zero coefficients of each transmission layer of the $g^{th}$ TRP group.

Optionally, the method further includes receiving coefficient indication information sent by the terminal device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device, in which the coefficient indication information is not used to indicate the strongest combination coefficient in the combination coefficient matrix corresponding to the third TRP group.

Optionally, the method further includes receiving coefficient indication information sent by the terminal device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information, in which the coefficient indication information is not used to indicate the strongest combination coefficient in the combination coefficient matrix corresponding to the third TRP group.

Optionally, in the coefficient position indication information, the third TRP group is indicated by $\left\lceil \log_2 G \right\rceil \text{bits}$, where G represents a numeric count of TRP groups.

Optionally, in the coefficient position indication information, the position of the strongest combination coefficient corresponding to the fourth TRP group in the combination coefficient matrix corresponding to the multiple TRP groups is indicated by $\left\lceil \log_2(\sum_{i=1, i \neq j}^{G} 2L_{g,i}) \right\rceil \text{bits}$, where G represents a numeric count of TRP groups, $L_{g,i}$ represents a numeric count of SD basis vectors or a numeric count of ports of an $i^{th}$ TRP group, and a $j^{th}$ TRP group is the third TRP group.

Optionally, the coefficient further includes the strongest amplitude and/or the strongest reference amplitude; in which the coefficient position indication information is further used to indicate a position of the strongest amplitude in the combination coefficient matrix corresponding to the multiple TRP groups, and the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

Optionally, the coefficient includes the strongest reference amplitude; the coefficient position indication information is used to indicate a position of the strongest reference amplitude in the combination coefficient matrix corresponding to the multiple TRPs, in which a numeric count of the strongest combination coefficients in the combination coefficient matrix corresponding to the multiple TRPs is multiple.

Optionally, the coefficient position indication information is indicated by $\left\lceil \log_2 N \right\rceil \text{bits}$, or by a bitmap of N bits, where N represents a numeric count of TRPs.

Optionally, the coefficient includes the strongest reference amplitude; the coefficient position indication information is used to indicate a position of the strongest reference amplitude in the combination coefficient matrix corresponding to the multiple TRP groups, in which a numeric count of the strongest combination coefficients in the combination coefficient matrix corresponding to the multiple TRP groups is multiple.

Optionally, the coefficient position indication information is indicated by $\left\lceil \log_2 G \right\rceil \text{bits}$, or by a bitmap of G bits, where G represents a numeric count of TRP groups.

Optionally, the coefficient includes the strongest amplitude, and a numeric count of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude, in which a numeric count of the strongest combination coefficients in the combination coefficient matrix corresponding to the multiple TRPs is multiple.

Optionally, the coefficient position indication information is indicated by $\lceil \log_2 N \rceil \text{bits}$, where N represents a numeric count of TRPs.

Optionally, the coefficient includes the strongest amplitude, and a numeric count of the strongest amplitude is one; the coefficient position indication information is used to indicate a position of the strongest amplitude in the combination coefficient matrix corresponding to the multiple TRP groups, in which the position of the strongest amplitude represents a second TRP group including the strongest amplitude, in which a numeric count of the strongest combination coefficients in the combination coefficient matrix corresponding to multiple TRP groups is multiple.

Optionally, the coefficient position indication information is indicated by $\lceil \log_2 G \rceil$ bits, where G represents a numeric count of TRP groups.

FIG. 18 is a schematic block diagram of another communication device 180 provided in an embodiment of the present disclosure. The communication device 180 may be a network device, or may be a terminal device, or may be a chip, a chip system, or a processor supporting the network device to implement the above-mentioned methods, or may be a chip, a chip system or a processor supporting the terminal device to implement the above-mentioned methods. The communication device 180 may be configured to implement the methods as described in the above-mentioned method embodiments. For details, reference may be made to the description in the above-mentioned method embodiments.

The communication device 180 may include one or more processors 1801. The processor 1801 may be a general-purpose processor, a special-purpose processor, or the like. The processor 1801 may be, for example, a baseband processor or a central processor. The baseband processor may be configured to process a communication protocol and communication data, and the central processor may be configured to control a communication device (such as a base station, a baseband chip, a terminal device, a terminal device chip, a DU, a CU, or the like), execute a computer program, and process data of the computer program.

Optionally, the communication device 180 may further include one or more memories 1802 on which a computer program 1803 may be stored, and the processor 1801 is configured to execute the computer program 1803 to cause the communication device 180 to perform the methods as described in the above-mentioned method embodiments. Optionally, the memory 1802 may also have data stored therein. The communication device 180 and the memory 1802 may be provided independently or integrated together.

Optionally, the communication device 180 may further include a transceiver 1804 and an antenna 1805. The transceiver 1804 may be referred to as a transceiving unit, a transceiving device, a transceiving circuit or the like for implementing a transceiving function. The transceiver 1804 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 180 may further include one or more interface circuits 1806. The interface circuit 1806 is configured to receive and transmit code instructions to the processor 1801. The processor 1801 is configured to run the code instructions to enable the communication device 80 to perform the methods described in the above-mentioned method embodiments.

The communication device 180 is a terminal device, and the transceiver 1804 is configured to execute steps S301 and S302 in FIG. 3, steps S401 and S402 in FIG. 4, steps S501 and S502 in FIG. 5, steps S601 and S602 in FIG. 6, steps S701 and S702 in FIG. 7, steps S801 and S802 in FIG. 8, steps S901 and S902 in FIG. 9, steps S1001 and S1002 in FIG. 10, or steps S1101 and S1201 in FIG. 11.

The communication device 180 is a network device, and the transceiver 1804 is configured to execute steps S1201 and S1202 in FIG. 12, steps S1301 and S1302 in FIG. 13, steps S1401 and S1402 in FIG. 14, steps S1501 and S1502 in FIG. 15, or steps S1601 and S1602 in FIG. 16.

In an implementation, the processor 1801 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1801 may have stored therein the computer program 1803 that, when running on the processor 1801, enables the communication device 180 to perform the methods described in the above-mentioned method embodiments. The computer program 1803 may be embedded in the processor 1801, in which case the processor 1801 may be implemented by hardware.

In an implementation, the communication device 180 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal device, but the scope of the communication device described in the present disclosure is not limited thereto. The structure of the communication device may not be limited by FIG. 18. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

For the case where the communication device may be a chip or a chip system, reference may be made to the schematic block diagram of the chip shown in FIG. 19. The chip shown in FIG. 19 includes a processor 1901 and an interface 1902. The number of processors 1901 may be one or more, and the number of interfaces 1902 may be multiple.

For the case where the chip is configured to implement the functions of the terminal device in embodiments of the present disclosure:

The interface 1902 is configured to receive codebook parameter information sent by a network device, in which the codebook parameter information is used to determine a dimension of a combination coefficient matrix corresponding to multiple TRPs or multiple TRP groups; and send coefficient position indication information to the network device, in which the coefficient position indication information is used to indicate a position of a specific coefficient in the combination coefficient matrix.

Optionally, the codebook parameter information includes a numeric count of TRPs/TRP groups, and a numeric count of basis vectors corresponding to one TRP/TRP group or multiple TRPs/TRP groups; the number of basis vectors includes at least one of: a numeric count of SD basis vectors, a numeric count of FD basis vectors, a numeric count of ports, or a numeric count of SD-FD basis vector pairs.

Optionally, the coefficient includes at least one of: a strongest combination coefficient, a strongest reference amplitude, or a strongest amplitude.

Optionally, the coefficient includes one strongest combination coefficient, and the coefficient position indication information is used to indicate a position of the strongest combination coefficient in the combination coefficient matrix corresponding to the multiple TRPs.

Optionally, the coefficient position indication information includes first indication information for indicating a first TRP corresponding to the strongest combination coefficient, and second indication information for indicating the position of the strongest combination coefficient in the combination coefficient matrix corresponding to the first TRP; or the coefficient position indication information includes second indication information for indicating the position of the strongest combination coefficient in the combination coefficient matrix corresponding to the first TRP, and the first TRP is predefined or configured by the network device.

Optionally, the first indication information is indicated by $\lceil \log_2 N \rceil \text{bits}$; the second indication information is indicated by $\lceil \log_2(2L_n M_n) \rceil \text{bits}$, where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, and the n$^{th}$ TRP is the first TRP.

Optionally, the first indication information is indicated by $\lceil \log_2 N \rceil \text{bits}$; the second indication information is indicated by any one of $\lceil \log_2(2L_n) \rceil \text{bits}$, and $\lceil \log_2(K_n^{NZ}) \rceil \text{bits}$, where N represents a numeric count of TRPs, $L_n$ represents a numeric count of SD basis vectors or a numeric count of ports of an n$^{th}$ TRP, $K_n^{NZ}$ represents a numeric count of non-zero coefficients in a combination coefficient matrix of one transmission layer corresponding to the n$^{th}$ TRP, and the n$^{th}$ TRP is the first TRP.

Optionally, the coefficient position indication information is indicated by at least one of: $\lceil \log_2(\sum_{n=1}^{N} 2L_n M_n) \rceil \text{bits}, \lceil \log_2(\sum_{n=1}^{N} 2L_n) \rceil \text{bits}$, or $\lceil \log_2(K_{tot}) \rceil$, where N represents a numeric count of TRPs, $L_n$ represents a numeric count of SD basis vectors or a numeric count of ports of an n$^{th}$ TRP, $M_n$ represents a

numeric count of FD basis vectors of the n$^{th}$ TRP, and $K_{tot}$ represents a total number of non-zero coefficients in a combination coefficient matrix of one transmission layer corresponding to the multiple TRPs.

Optionally, the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

Optionally, the coefficient position indication information includes indication information for indicating the position of the strongest combination coefficient in the combination coefficient matrix corresponding to each TRP; in which the indication information for indicating the position of the strongest combination coefficient corresponding to an n$^{th}$ TRP is indicated by any one of: $\lceil \log_2(2L_n M_n) \rceil \text{bits}$, $\lceil \log_2(2L_n) \rceil \text{bits}$, and $\lceil \log_2(K_n^{NZ}) \rceil \text{bits}$, where $L_n$ represents a numeric count of SD basis vectors or a numeric count of ports of the n$^{th}$ TRP, $M_n$ represents a numeric count of FD basis vectors of the n$^{th}$ TRP, and $K_n^{NZ}$ represents a numeric count of non-zero coefficients in a combination coefficient matrix of one transmission layer corresponding to the n$^{th}$ TRP.

Optionally, the interface 1902 is further configured to send coefficient indication information to the network device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

Optionally, the interface 1902 is further configured to send coefficient indication information to the network device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information, in which the coefficient indication information is not used to indicate the strongest combination coefficient in the combination coefficient matrix corresponding to the third TRP.

Optionally, in the coefficient position indication information, the third TRP is indicated by $\lceil \log_2 N \rceil \text{bits}$, where N represents a numeric count of TRPs.

Optionally, in the coefficient position indication information, the position of the strongest combination coefficient corresponding to the fourth TRP in the combination coefficient matrix corresponding to the multiple TRPs is indicated by $\lceil \log_2(\sum_{n=1,n\neq j}^{N} 2L_n M_n) \rceil \text{bits}$ or $\lceil \log_2 \sum_{n=1,n\neq j}^{N} K_n^{NZ} \rceil \text{bits}$, where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and a j$^{th}$ TRP is the third TRP.

Optionally, the coefficient further includes the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

Optionally, the coefficient includes one strongest combination coefficient, and the coefficient position indication information is used to indicate a position of the strongest combination coefficient in the combination coefficient matrix corresponding to multiple TRP groups.

Optionally, the coefficient position indication information includes third indication information for indicating a first TRP group corresponding to the strongest combination coefficient, and fourth indication information for indicating the position of the strongest combination coefficient in the combination coefficient matrix corresponding to the first TRP group; or the coefficient position indication information includes fourth indication information for indicating the position of the strongest combination coefficient in the combination coefficient matrix corresponding to the first TRP group, and the first TRP group is predefined or configured by the network device.

Optionally, the third indication information is indicated by $\lceil \log_2 G \rceil \text{bits}$; and the fourth indication information is

indicated by $\left\lceil \log_2 (\Sigma_{i=1}^{I_g} 2L_{g,i} M_{g,i}) \right\rceil$ bits , where G represents a numeric count of TRP groups, $I_g$ represents a numeric count of TRPs in a g<sup>th</sup> TRP group, $L_{g,i}$ represents a numeric count of SD basis vectors or a numeric count of ports of an i<sup>th</sup> TRP in the g<sup>th</sup> TRP group, and $M_{g,i}$ represents a numeric count of FD basis vectors of the i<sup>th</sup> TRP in the g<sup>th</sup> TRP group.

Optionally, the third indication information is indicated by $\lceil \log_2 G \rceil$ bits; and the fourth indication information is indicated by any one of: $\left\lceil \log_2 (\Sigma_{i=1}^{I_g} 2L_{g,i}) \right\rceil$ bits , and $\left\lceil \log_2 (\Sigma_{i=1}^{I_g} K_{g,i}^{NZ}) \right\rceil$ bits , where G represents a numeric count of TRP groups, $I_g$ represents a numeric count of TRPs in a g<sup>th</sup> TRP group, $L_{g,i}$ represents a numeric count of SD basis vectors or a numeric count of ports of an i<sup>th</sup> TRP in the g<sup>th</sup> TRP group, and $K_{g,i}^{NZ}$ represents a numeric count of non-zero coefficients in a combination coefficient matrix of one transmission layer corresponding to the i<sup>th</sup> TRP in the g<sup>th</sup> TRP group.

Optionally, the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

Optionally, the coefficient position indication information includes indication information for indicating the position of the strongest combination coefficient in the combination coefficient matrix corresponding to each TRP group; the indication information for indicating the position of the strongest combination coefficient corresponding to a g<sup>th</sup> TRP group is indicated by $\left\lceil \log_2 (\Sigma_{i=1}^{I_g} 2L_{g,i}) \right\rceil$ bits , where $I_g$ represents a numeric count of TRPs in the g<sup>th</sup> TRP group, and $L_{g,i}$ represents a numeric count of SD basis vectors or a numeric count of ports of an i<sup>th</sup> TRP in the g<sup>th</sup> TRP group.

Optionally, the interface 1902 is further configured to send coefficient indication information to the network device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device, in which the coefficient indication information is not used to indicate the strongest combination coefficient in the combination coefficient matrix corresponding to the third TRP group.

Optionally, the interface 1902 is further configured to send coefficient indication information to the network device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information, in which the coefficient indication information is not used to indicate the strongest combination coefficient in the combination coefficient matrix corresponding to the third TRP group.

Optionally, in the coefficient position indication information, the third TRP group is indicated by $\lceil \log_2 G \rceil$ bits , where G represents a numeric count of TRP groups.

Optionally, in the coefficient position indication information, the position of the strongest combination coefficient corresponding to the fourth TRP group in the combination coefficient matrix corresponding to the multiple TRP groups is indicated by $\left\lceil \log_2 (\Sigma_{i=1, i \neq j}^{G} 2L_{g,i}) \right\rceil$ bits , where G represents a numeric count of TRP groups, $L_{g,i}$ represents a numeric count of SD basis vectors or a numeric count of ports of an i<sup>th</sup> TRP group, and a j<sup>th</sup> TRP group is the third TRP group.

Optionally, the coefficient further includes the strongest amplitude and/or the strongest reference amplitude; in which the coefficient position indication information is further used to indicate a position of the strongest amplitude in the combination coefficient matrix corresponding to the multiple TRP groups, and the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

Optionally, the coefficient includes the strongest reference amplitude; the coefficient position indication information is used to indicate a position of the strongest reference amplitude in the combination coefficient matrix corresponding to the multiple TRPs, in which a numeric count of the strongest combination coefficients in the combination coefficient matrix corresponding to the multiple TRPs is multiple.

Optionally, the coefficient position indication information is indicated by $\lceil \log_2 N \rceil \text{bits}$ , or by a bitmap of N bits, where N represents a numeric count of TRPs.

Optionally, the coefficient includes the strongest reference amplitude; and the coefficient position indication information is used to indicate a position of the strongest reference amplitude in the combination coefficient matrix corresponding to the multiple TRP groups, in which a numeric count of the strongest combination coefficients in the combination coefficient matrix corresponding to the multiple TRP groups is multiple.

Optionally, the coefficient position indication information is indicated by $\lceil \log_2 G \rceil \text{bits}$ , or by a bitmap of G bits, where G represents a numeric count of TRP groups.

Optionally, the coefficient includes the strongest amplitude, and a numeric count of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude, in which a numeric count of the strongest combination coefficients in the combination coefficient matrix corresponding to the multiple TRPs is multiple.

Optionally, the coefficient position indication information is indicated by $\lceil \log_2 N \rceil \text{bits}$ , where N represents a numeric count of TRPs.

Optionally, the coefficient includes the strongest amplitude, and a numeric count of the strongest amplitude is one; the coefficient position indication information is used to indicate a position of the strongest amplitude in the combination coefficient matrix corresponding to the multiple TRP groups, in which the position of the strongest amplitude represents a second TRP group including the strongest amplitude, in which a numeric count of the strongest combination coefficients in the combination coefficient matrix corresponding to multiple TRP groups is multiple.

Optionally, the coefficient position indication information is indicated by $\lceil \log_2 G \rceil$ bits, where G represents a numeric count of TRP groups.

For the case where the chip is configured to implement the functions of the network device in embodiments of the present disclosure:

The interface 1902 is configured to send codebook parameter information to a terminal device, in which the codebook parameter information is used to determine a dimension of a combination coefficient matrix corresponding to multiple TRPs or multiple TRP groups; and receive coefficient position indication information sent by the terminal device, in which the coefficient position indication information is used to indicate a position of a specific coefficient in the combination coefficient matrix.

Optionally, the codebook parameter information includes a numeric count of TRPs/TRP groups, and a numeric count of basis vectors corresponding to one TRP/TRP group or multiple TRPs/TRP groups; the number of basis vectors includes at least one of: a numeric count of SD basis vectors, a numeric count of FD basis vectors, a numeric count of ports, or a numeric count of SD-FD basis vector pairs.

Optionally, the coefficient includes at least one of: a strongest combination coefficient, a strongest reference amplitude, or a strongest amplitude.

Optionally, the coefficient includes one strongest combination coefficient, and the coefficient position indication information is used to indicate a position of the strongest combination coefficient in the combination coefficient matrix corresponding to the multiple TRPs.

Optionally, the coefficient position indication information includes first indication information for indicating a first TRP corresponding to the strongest combination coefficient, and second indication information for indicating the position of the strongest combination coefficient in the combination coefficient matrix corresponding to the first TRP; or the coefficient position indication information includes second indication information for indicating the position of the strongest combination coefficient in the combination coefficient matrix corresponding to the first TRP, and the first TRP is predefined or configured by the network device.

Optionally, the first indication information is indicated by $\lceil \log_2 N \rceil \text{bits}$ ; the second indication information is indicated by $\lceil \log_2 (2L_n M_n) \rceil \text{bits}$ , where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and the $n^{th}$ TRP is the first TRP.

Optionally, the first indication information is indicated by $\lceil \log_2 N \rceil \text{bits}$ ; the second indication information is indicated by any one of $\lceil \log_2 (2L_n) \rceil \text{bits}$ , and $\lceil \log_2 (K_n^{NZ}) \rceil \text{bits}$ , where N represents a numeric count of TRPs, $L_n$

represents a numeric count of SD basis vectors or a numeric count of ports of an $n^{th}$ TRP, $K_n^{NZ}$ represents a numeric count of non-zero coefficients in a combination coefficient matrix of one transmission layer corresponding to the $n^{th}$ TRP, and the $n^{th}$ TRP is the first TRP.

Optionally, the coefficient position indication information is indicated by at least one of: $\lceil \log_2(\sum_{n=1}^{N} 2L_n M_n) \rceil$ bits, $\lceil \log_2(\sum_{n=1}^{N} 2L_n) \rceil$ bits, or $\lceil \log_2(K_{tot}) \rceil$, where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and $K_{tot}$ represents a total number of non-zero coefficients in a combination coefficient matrix of one transmission layer corresponding to the multiple TRPs.

Optionally, the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner.

Optionally, the coefficient position indication information includes indication information for indicating the position of the strongest combination coefficient in the combination coefficient matrix corresponding to each TRP; in which the indication information for indicating the position of the strongest combination coefficient corresponding to an $n^{th}$ TRP is indicated by any one of: $\lceil \log_2(2L_n M_n) \rceil$ bits, $\lceil \log_2(2L_n) \rceil$ bits, and $\lceil \log_2(K_n^{NZ}) \rceil$ bits, where $L_n$ represents a numeric count of SD basis vectors or a numeric count of ports of the $n^{th}$ TRP, $M_n$ represents a numeric count of FD basis vectors of the $n^{th}$ TRP, and $K_n^{NZ}$ represents a numeric count of non-zero coefficients in a combination coefficient matrix of one transmission layer corresponding to the $n^{th}$ TRP.

Optionally, the interface 1902 is further configured to receive coefficient indication information sent by the terminal device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP.

Optionally, the interface 1902 is further configured to receive coefficient indication information sent by the terminal device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information, in which the coefficient indication information is not used to indicate the strongest combination coefficient in the combination coefficient matrix corresponding to the third TRP.

Optionally, in the coefficient position indication information, the third TRP is indicated by $\lceil \log_2 N \rceil$ bits, where N represents a numeric count of TRPs.

Optionally, in the coefficient position indication information, the position of the strongest combination coefficient corresponding to the fourth TRP in the combination coefficient matrix corresponding to the multiple TRPs is indicated by $\lceil \log_2(\sum_{n=1,n\neq j}^{N} 2L_n M_n) \rceil$ bits or $\lceil \log_2 \sum_{n=1,n\neq j}^{N} K_n^{NZ} \rceil$ bits, where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, $K_n^{NZ}$ represents a numeric count of non-zero coefficients in a combination coefficient matrix of one transmission layer corresponding to the $n^{th}$ TRP, and a $j^{th}$ TRP is the third TRP.

Optionally, the coefficient further includes the strongest amplitude and/or the strongest reference amplitude; in which the coefficient position indication information is further used to indicate a position of the strongest amplitude in the combination coefficient matrix corresponding to the multiple TRPs, in which the position of the strongest amplitude represents a TRP including the strongest amplitude; and/or the coefficient position indication information is further used to indicate a position of the strongest reference amplitude in the combination coefficient matrix corresponding to the multiple TRPs, and the position of the strongest reference amplitude represents a TRP including the strongest reference amplitude.

Optionally, the coefficient includes one strongest combination coefficient, and the coefficient position indication information is used to indicate a position of the strongest combination coefficient in the combination coefficient matrix corresponding to multiple TRP groups.

Optionally, the coefficient position indication information includes third indication information for indicating a first TRP group corresponding to the strongest combination coefficient, and fourth indication information for indicating the position of the strongest combination coefficient in the combination coefficient matrix corresponding to the first TRP group; or the coefficient position indication information includes fourth indication information for indicating the position of the strongest combination coefficient in the combination coefficient matrix corresponding to the first TRP group, and the first TRP group is predefined or configured by the network device.

Optionally, the third indication information is indicated by $\lceil \log_2 G \rceil \text{bits}$; and the fourth indication information is indicated by $\left\lceil \log_2 (\sum_{i=1}^{I_g} 2L_{g,i} M_{g,i}) \right\rceil \text{bits}$, where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $M_{g,i}$ represents a numeric count of FD basis vectors of the $i^{th}$ TRP in the $g^{th}$ TRP group.

Optionally, the third indication information is indicated by $\lceil \log_2 G \rceil \text{bits}$; and the fourth indication information is indicated by any one of: $\left\lceil \log_2 (\sum_{i=1}^{I_g} 2L_{g,i}) \right\rceil \text{bits}$, and $\left\lceil \log_2 (\sum_{i=1}^{I_g} K_{g,i}^{NZ}) \right\rceil \text{bits}$, where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $K_{g,i}^{NZ}$ represents a numeric count of non-zero coefficients in a combination coefficient matrix of one transmission layer corresponding to the $i^{th}$ TRP in the $g^{th}$ TRP group.

Optionally, the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner.

Optionally, the coefficient position indication information includes indication information for indicating the position of the strongest combination coefficient in the combination coefficient matrix corresponding to each TRP group; the indication information for indicating the position of the strongest combination coefficient corresponding to a $g^{th}$ TRP group is indicated by $\left\lceil \log_2 (\sum_{i=1}^{I_g} 2L_{g,i}) \right\rceil \text{bits}$, where $I_g$ represents a numeric count of TRPs in the $g^{th}$ TRP group, and $L_{g,i}$ represents a numeric count of SD basis vectors or a numeric count of ports of an $i^{th}$ TRP in the $g^{th}$ TRP group.

Optionally, the interface 1902 is further configured to receive coefficient indication information sent by the terminal device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device, in which the coefficient indication information is not used to indicate the strongest combination coefficient in the combination coefficient matrix corresponding to the third TRP group.

Optionally, the interface 1902 is further configured to receive coefficient indication information sent by the terminal device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information, in which the coefficient indication information is not used to indicate the strongest combination coefficient in the combination coefficient matrix corresponding to the third TRP group.

Optionally, in the coefficient position indication information, the third TRP group is indicated by $\lceil \log_2 G \rceil \text{bits}$, where G represents a numeric count of TRP groups.

Optionally, in the coefficient position indication information, the position of the strongest combination coefficient corresponding to the fourth TRP group in the combination coefficient matrix corresponding to the multiple TRP groups is indicated by $\left\lceil \log_2 (\sum_{i=1, i \neq j}^{G} 2L_{g,i}) \right\rceil \text{bits}$, where G represents a numeric count of TRP groups, $L_{g,i}$ represents a numeric count of SD basis vectors or a numeric count of ports of an $i^{th}$ TRP group, and a $j^{th}$ TRP group is the third TRP group.

Optionally, the coefficient further includes the strongest amplitude and/or the strongest reference amplitude; in which the coefficient position indication information is further used to indicate a position of the strongest amplitude in the combination coefficient matrix corresponding to the multiple TRP groups, and the position of the strongest amplitude represents a TRP group including the strongest amplitude; and/or the coefficient position indication information is further used to indicate a position of the strongest reference amplitude in the combination coefficient matrix corresponding to the multiple TRP groups, and the position of the strongest reference amplitude represents a TRP group including the strongest reference amplitude.

Optionally, the coefficient includes the strongest reference amplitude; the coefficient position indication information is used to indicate a position of the strongest reference amplitude in the combination coefficient matrix corresponding to the multiple TRPs, in which a numeric count of the strongest combination coefficients in the combination coefficient matrix corresponding to the multiple TRPs is multiple.

Optionally, the coefficient position indication information is indicated by $\lceil \log_2 N \rceil \text{bits}$, or by a bitmap of N bits, where N represents a numeric count of TRPs.

Optionally, the coefficient includes the strongest reference amplitude; the coefficient position indication information is used to indicate a position of the strongest reference amplitude in the combination coefficient matrix corresponding to the multiple TRP groups, in which a numeric count of the strongest combination coefficients in the combination coefficient matrix corresponding to the multiple TRP groups is multiple.

Optionally, the coefficient position indication information is indicated by $\lceil \log_2 G \rceil \text{bits}$, or by a bitmap of G bits, where G represents a numeric count of TRP groups.

Optionally, the coefficient includes the strongest amplitude, and a numeric count of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude, in which a numeric count of the strongest combination coefficients in the combination coefficient matrix corresponding to the multiple TRPs is multiple.

Optionally, the coefficient position indication information is indicated by $\lceil \log_2 N \rceil \text{bits}$, where N represents a numeric count of TRPs.

Optionally, the coefficient includes the strongest amplitude, and a numeric count of the strongest amplitude is one; the coefficient position indication information is used to indicate a position of the strongest amplitude in the combination coefficient matrix corresponding to the multiple TRP groups, in which the position of the strongest amplitude represents a second TRP group including the strongest amplitude, in which a numeric count of the strongest combination coefficients in the combination coefficient matrix corresponding to multiple TRP groups is multiple.

Optionally, the coefficient position indication information is indicated by $\lceil \log_2 G \rceil$ bits, where G represents a numeric count of TRP groups.

Optionally, the chip further includes a memory 1903 for storing desired computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

An embodiment of the present disclosure further provides a communication system. The communication system includes the communication device as the terminal device and the communication device as the network device in the above-mentioned embodiments shown in FIG. 17. Alternatively, the communication system includes the communication device as the terminal device and the communication device as the network device in the above-mentioned embodiments shown in FIG. 18.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of the information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above is only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

**Claims**

1. A method for indicating a coefficient, performed by a terminal device and comprising:

   receiving codebook parameter information sent by a network device, wherein the codebook parameter information is used to determine a dimension of a combination coefficient matrix corresponding to multiple transmission reception points (TRPs) or multiple TRP groups; and
   sending coefficient position indication information to the network device,
   wherein the coefficient position indication information is used to indicate a position of a specific coefficient in the combination coefficient matrix.

2. The method of claim 1, wherein the codebook parameter information comprises a numeric count of TRPs/TRP groups, and a numeric count of basis vectors corresponding to one TRP/TRP group or multiple TRPs/TRP groups;

the numeric count of basis vectors comprises at least one of:

> a numeric count of spatial domain (SD) basis vectors;
> a numeric count of frequency domain (FD) basis vectors;
> a numeric count of ports; or
> a numeric count of SD-FD basis vector pairs.

3. The method of claim 1, wherein the coefficient comprises at least one of: a strongest combination coefficient, a strongest reference amplitude, or a strongest amplitude.

4. The method of claim 3, wherein the coefficient comprises one strongest combination coefficient, and the coefficient position indication information is used to indicate a position of the strongest combination coefficient in the combination coefficient matrix corresponding to the multiple TRPs.

5. The method of claim 4, wherein the coefficient position indication information comprises first indication information for indicating a first TRP corresponding to the strongest combination coefficient, and second indication information for indicating the position of the strongest combination coefficient in the combination coefficient matrix corresponding to the first TRP; or
the coefficient position indication information comprises second indication information for indicating the position of the strongest combination coefficient in the combination coefficient matrix corresponding to the first TRP, and the first TRP is predefined or configured by the network device.

6. The method of claim 5, wherein the first indication information is indicated by $\lceil \log_2 N \rceil \text{bits}$;

the second indication information is indicated by $\lceil \log_2 (2L_n M_n) \rceil \text{bits}$,
where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and the $n^{th}$ TRP is the first TRP.

7. The method of claim 5, wherein the first indication information is indicated by $\lceil \log_2 N \rceil \text{bits}$;

the second indication information is indicated by any one of $\lceil \log_2 (2L_n) \rceil \text{ bits}$, and $\lceil \log_2 (K_n^{NZ}) \rceil \text{bits}$,
where N represents a numeric count of TRPs, $L_n$ represents a numeric count of SD basis vectors or a numeric count of ports of an $n^{th}$ TRP, $K_n^{NZ}$ represents a numeric count of non-zero coefficients in a combination coefficient matrix of one transmission layer corresponding to the $n^{th}$ TRP, and the $n^{th}$ TRP is the first TRP.

8. The method of claim 4, wherein the coefficient position indication information is indicated by at least one of:
$\lceil \log_2 (\sum_{n=1}^{N} 2L_n M_n) \rceil \text{bits}$, $\lceil \log_2 (\sum_{n=1}^{N} 2L_n) \rceil \text{bits}$, or $\lceil \log_2 (K_{tot}) \rceil$,
where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, and $K_{tot}$ represents a total number of non-zero coefficients in a combination coefficient matrix of one transmission layer corresponding to the multiple TRPs.

9. The method of claim 3, wherein the coefficient comprises multiple strongest combination coefficients, and the coefficient position indication information is used to indicate a position of the strongest combination coefficient in the combination coefficient matrix corresponding to each TRP,
wherein the multiple strongest combination coefficients correspond to the multiple TRPs in a one-to-one manner.

10. The method of claim 9, wherein the coefficient position indication information comprises indication information for indicating the position of the strongest combination coefficient in the combination coefficient matrix corresponding to each TRP;

> wherein the indication information for indicating the position of the strongest combination coefficient corresponding to an n$^{th}$ TRP is indicated by any one of: $\lceil \log_2(2L_n M_n) \rceil$ bits ,

$\lceil \log_2(2L_n) \rceil$ bits, $\lceil \log_2(K_n^{NZ}) \rceil$ bits , and $\lceil \log_2 K_{n,0} \rceil$ bits ,

where $L_n$ represents a numeric count of SD basis vectors or a numeric count of ports of the n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and $K_{n,0}$ represents a maximum number of non-zero coefficients of each transmission layer corresponding to the n$^{th}$ TRP.

11. The method of claim 9, further comprising:

sending coefficient indication information to the network device, wherein the coefficient indication information is used to indicate a reference amplitude and a differential phase of the strongest combination coefficients in the combination coefficient matrix corresponding to other TRPs; the other TRPs are TRPs in the multiple TRPs except a third TRP;
the third TRP is indicated by the coefficient position indication information, or the third TRP is predefined or configured by the network device,
wherein the coefficient indication information is not used to indicate the strongest combination coefficient in the combination coefficient matrix corresponding to the third TRP.

12. The method of claim 9, further comprising:

sending coefficient indication information to the network device, wherein the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP;
the third TRP is indicated by the coefficient position indication information, or the third TRP is predefined or configured by the network device;
a position of the strongest combination coefficient corresponding to the fourth TRP in the combination coefficient matrix corresponding to the multiple TRPs is indicated by the coefficient position indication information,
wherein the coefficient indication information is not used to indicate the strongest combination coefficient in the combination coefficient matrix corresponding to the third TRP.

13. The method of claim 11 or 12, wherein in the coefficient position indication information, the third TRP is indicated by $\lceil \log_2 N \rceil$ bits ,

where N represents a numeric count of TRPs.

14. The method of claim 12, wherein in the coefficient position indication information, the position of the strongest combination coefficient corresponding to the fourth TRP in the combination coefficient matrix corresponding to the multiple TRPs is indicated by $\lceil \log_2(\sum_{n=1,n\neq j}^{N} 2L_n M_n) \rceil$ bits or $\lceil \log_2 \sum_{n=1,n\neq j}^{N} K_n^{NZ} \rceil$ bits ,

where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and a j$^{th}$ TRP is the third TRP.

15. The method of claim 9, wherein the coefficient further comprises the strongest amplitude and/or the strongest reference amplitude;

wherein the coefficient position indication information is further used to indicate a position of the strongest amplitude in the combination coefficient matrix corresponding to the multiple TRPs, wherein the position of the strongest amplitude represents a TRP comprising the strongest amplitude; and/or
the coefficient position indication information is further used to indicate a position of the strongest reference amplitude in the combination coefficient matrix corresponding to the multiple TRPs, and the position of the strongest reference amplitude represents a TRP comprising the strongest reference amplitude.

16. The method of claim 3, wherein the coefficient comprises one strongest combination coefficient, and the coefficient position indication information is used to indicate a position of the strongest combination coefficient in the combination coefficient matrix corresponding to multiple TRP groups.

17. The method of claim 16, wherein the coefficient position indication information comprises third indication information for indicating a first TRP group corresponding to the strongest combination coefficient, and fourth indication information for indicating the position of the strongest combination coefficient in the combination coefficient matrix corresponding to the first TRP group; or

the coefficient position indication information comprises fourth indication information for indicating the position of the strongest combination coefficient in the combination coefficient matrix corresponding to the first TRP group, and the first TRP group is predefined or configured by the network device.

18. The method of claim 16, wherein the third indication information is indicated by $\lceil \log_2 G \rceil \text{bits}$;

the fourth indication information is indicated by $\left\lceil \log_2 (\Sigma_{i=1}^{I_g} 2L_{g,i} M_{g,i}) \right\rceil \text{bits}$,

where $G$ represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $M_{g,i}$ represents a numeric count of FD basis vectors of the $i^{th}$ TRP in the $g^{th}$ TRP group.

19. The method of claim 16, wherein the third indication information is indicated by $\lceil \log_2 G \rceil \text{bits}$;

the fourth indication information is indicated by any one of: $\left\lceil \log_2 (\Sigma_{i=1}^{I_g} 2L_{g,i}) \right\rceil \text{bits}$, and $\left\lceil \log_2 (\Sigma_{i=1}^{I_g} K_{g,i}^{NZ}) \right\rceil \text{bits}$,

where $G$ represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $K_{g,i}^{NZ}$ represents a numeric count of non-zero coefficients in a combination coefficient matrix of one transmission layer corresponding to the $i^{th}$ TRP in the $g^{th}$ TRP group.

20. The method of claim 3, wherein the coefficient comprises multiple strongest combination coefficients, and the coefficient position indication information is used to indicate a position of the strongest combination coefficient in the combination coefficient matrix corresponding to each TRP group,

wherein the multiple strongest combination coefficients correspond to the multiple TRP groups in a one-to-one manner.

21. The method of claim 20, wherein the coefficient position indication information comprises indication information for indicating the position of the strongest combination coefficient in the combination coefficient matrix corresponding to each TRP group;

the indication information for indicating the position of the strongest combination coefficient corresponding to a $g^{th}$ TRP group is indicated by $\left\lceil \log_2 (\Sigma_{i=1}^{I_g} 2L_{g,i}) \right\rceil \text{bits}$, or $\lceil \log_2 K_{g,0} \rceil \text{bits}$,

where $I_g$ represents a numeric count of TRPs in the $g^{th}$ TRP group, $L_{g,i}$ represents a numeric count of SD basis vectors or a numeric count of ports of an $i^{th}$ TRP in the $g^{th}$ TRP group, and $K_{g,0}$ represents a maximum number of non-zero coefficients of each transmission layer of the $g^{th}$ TRP group.

22. The method of claim 20, further comprising:

sending coefficient indication information to the network device, wherein the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group;

the third TRP group is indicated by the coefficient position indication information, or the third TRP group is predefined or configured by the network device,

wherein the coefficient indication information is not used to indicate the strongest combination coefficient in the combination coefficient matrix corresponding to the third TRP group.

23. The method of claim 20, further comprising:

sending coefficient indication information to the network device, wherein the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group;

the third TRP group is indicated by the coefficient position indication information, or the third TRP group is predefined or configured by the network device;

a position of the strongest combination coefficient corresponding to the fourth TRP group in the combination coefficient matrix corresponding to the multiple TRP groups is indicated by the coefficient position indication information,

wherein the coefficient indication information is not used to indicate the strongest combination coefficient in the combination coefficient matrix corresponding to the third TRP group.

24. The method of claim 22 or 23, wherein in the coefficient position indication information, the third TRP group is indicated by $\lceil \log_2 G \rceil \text{bits}$,

where G represents a numeric count of TRP groups.

25. The method of claim 23, wherein in the coefficient position indication information, the position of the strongest combination coefficient corresponding to the fourth TRP group in the combination coefficient matrix corresponding to the multiple TRP groups is indicated by $\lceil \log_2(\sum_{i=1,i\neq j}^{G} 2L_{g,i}) \rceil \text{bits}$,

where G represents a numeric count of TRP groups, $L_{g,i}$ represents a numeric count of SD basis vectors or a numeric count of ports of an $i^{\text{th}}$ TRP group, and a $j^{\text{th}}$ TRP group is the third TRP group.

26. The method of claim 20, wherein the coefficient further comprises the strongest amplitude and/or the strongest reference amplitude;

wherein the coefficient position indication information is further used to indicate a position of the strongest amplitude in the combination coefficient matrix corresponding to the multiple TRP groups, and the position of the strongest amplitude represents a TRP group comprising the strongest amplitude; and/or

the coefficient position indication information is further used to indicate a position of the strongest reference amplitude in the combination coefficient matrix corresponding to the multiple TRP groups, and the position of the strongest reference amplitude represents a TRP group comprising the strongest reference amplitude.

27. The method of claim 3, wherein the coefficient comprises the strongest reference amplitude;

the coefficient position indication information is used to indicate a position of the strongest reference amplitude in the combination coefficient matrix corresponding to the multiple TRPs,

wherein a numeric count of the strongest combination coefficients in the combination coefficient matrix corresponding to the multiple TRPs is multiple.

28. The method of claim 27, wherein the coefficient position indication information is indicated by $\lceil \log_2 N \rceil \text{bits}$, or by a bitmap of N bits,

where N represents a numeric count of TRPs.

29. The method of claim 3, wherein the coefficient comprises the strongest reference amplitude;

the coefficient position indication information is used to indicate a position of the strongest reference amplitude in the combination coefficient matrix corresponding to the multiple TRP groups,

wherein a numeric count of the strongest combination coefficients in the combination coefficient matrix corresponding to the multiple TRP groups is multiple.

30. The method of claim 29, wherein the coefficient position indication information is indicated by $\lceil \log_2 G \rceil$ bits, or by a bitmap of G bits,
where G represents a numeric count of TRP groups.

31. The method of claim 3, wherein the coefficient comprises the strongest amplitude, and a numeric count of the strongest amplitudes is one;

the coefficient position indication information is used to indicate a position of the strongest amplitude in the combination coefficient matrix corresponding to the multiple TRPs, and the position of the strongest amplitude represents a second TRP comprising the strongest amplitude,
wherein a numeric count of the strongest combination coefficients in the combination coefficient matrix corresponding to the multiple TRPs is multiple.

32. The method of claim 31, wherein the coefficient position indication information is indicated by $\lceil \log_2 N \rceil$ bits,
where N represents a numeric count of TRPs.

33. The method of claim 3, wherein the coefficient comprises the strongest amplitude, and a numeric count of the strongest amplitude is one;

the coefficient position indication information is used to indicate a position of the strongest amplitude in the combination coefficient matrix corresponding to the multiple TRP groups, wherein the position of the strongest amplitude represents a second TRP group comprising the strongest amplitude,
wherein a numeric count of the strongest combination coefficients in the combination coefficient matrix corresponding to multiple TRP groups is multiple.

34. The method of claim 33, wherein the coefficient position indication information is indicated by $\lceil \log_2 G \rceil$ bits,
where G represents a numeric count of TRP groups.

35. A method for indicating a coefficient, performed by a network device and comprising:

sending codebook parameter information to a terminal device, wherein the codebook parameter information is used to determine a dimension of a combination coefficient matrix corresponding to multiple TRPs or multiple TRP groups; and
receiving coefficient position indication information sent by the terminal device,
wherein the coefficient position indication information is used to indicate a position of a specific coefficient in the combination coefficient matrix.

36. The method of claim 35, wherein the codebook parameter information comprises a numeric count of TRPs/TRP groups, and a numeric count of basis vectors corresponding to one TRP/TRP group or multiple TRPs/TRP groups;
the numeric count of basis vectors comprises at least one of:

a numeric count of SD basis vectors;
a numeric count of FD basis vectors;
a numeric count of ports; or
a numeric count of SD-FD basis vector pairs.

37. The method of claim 35, wherein the coefficient comprises at least one of: a strongest combination coefficient, a strongest reference amplitude, or a strongest amplitude.

38. The method of claim 37, wherein the coefficient comprises one strongest combination coefficient, and the coefficient position indication information is used to indicate a position of the strongest combination coefficient in the combination coefficient matrix corresponding to the multiple TRPs.

39. The method of claim 38, wherein the coefficient position indication information comprises first indication information for indicating a first TRP corresponding to the strongest combination coefficient, and second indication information for indicating the position of the strongest combination coefficient in the combination coefficient matrix corresponding to the first TRP; or

the coefficient position indication information comprises second indication information for indicating the position of the strongest combination coefficient in the combination coefficient matrix corresponding to the first TRP, and the first TRP is predefined or configured by the network device.

40. The method of claim 39, wherein the first indication information is indicated by $\lceil \log_2 N \rceil \text{bits}$ ;

the second indication information is indicated by $\lceil \log_2(2L_n M_n) \rceil \text{bits}$ ,
where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, and the n$^{th}$ TRP is the first TRP.

41. The method of claim 39, wherein the first indication information is indicated by $\lceil \log_2 N \rceil \text{bits}$ ;

the second indication information is indicated by any one of $\lceil \log_2(2L_n) \rceil \text{ bits}$ , and $\lceil \log_2(K_n^{NZ}) \rceil \text{bits}$ ,
where N represents a numeric count of TRPs, $L_n$ represents a numeric count of SD basis vectors or a numeric count of ports of an n$^{th}$ TRP, $K_n^{NZ}$ represents a numeric count of non-zero coefficients in a combination coefficient matrix of one transmission layer corresponding to the n$^{th}$ TRP, and the n$^{th}$ TRP is the first TRP.

42. The method of claim 38, wherein the coefficient position indication information is indicated by at least one of:

$\lceil \log_2(\sum_{n=1}^{N} 2L_n M_n) \rceil \text{bits},\ \lceil \log_2(\sum_{n=1}^{N} 2L_n) \rceil \text{bits}$ , or $\lceil \log_2(K_{tot}) \rceil$ ,

where N represents a numeric count of TRPs, $L_n$ represents a numeric count of SD basis vectors or a numeric count of ports of an n$^{th}$ TRP, $M_n$ represents a numeric count of FD basis vectors of the n$^{th}$ TRP, and $K_{tot}$ represents a total number of non-zero coefficients in a combination coefficient matrix of one transmission layer corresponding to the multiple TRPs.

43. The method of claim 37, wherein the coefficient comprises multiple strongest combination coefficients, and the coefficient position indication information is used to indicate a position of the strongest combination coefficient in the combination coefficient matrix corresponding to each TRP,

wherein the multiple strongest combination coefficients correspond to the multiple TRPs in a one-to-one manner.

44. The method of claim 43, wherein the coefficient position indication information comprises indication information for indicating the position of the strongest combination coefficient in the combination coefficient matrix corresponding to each TRP;

wherein the indication information for indicating the position of the strongest combination coefficient corresponding to an n$^{th}$ TRP is indicated by any one of: $\lceil \log_2(2L_n M_n) \rceil \text{ bits}$ ,

$\lceil \log_2(2L_n) \rceil \text{bits},\ \lceil \log_2(K_n^{NZ}) \rceil \text{bits}$ , and $\lceil \log_2 K_{n,0} \rceil \text{bits}$ ,

where $L_n$ represents a numeric count of SD basis vectors or a numeric count of ports of the n$^{th}$ TRP, $M_n$ represents a numeric count of FD basis vectors of the n$^{th}$ TRP, $K_n^{NZ}$ represents a numeric count of non-zero coefficients in a combination coefficient matrix of one transmission layer corresponding to the n$^{th}$ TRP, and $K_{n,0}$ represents a maximum number of non-zero coefficients of each transmission layer corresponding to the n$^{th}$ TRP.

45. The method of claim 43, further comprising:

receiving coefficient indication information sent by the terminal device, wherein the coefficient indication information is used to indicate a reference amplitude and a differential phase of the strongest combination coefficients in the combination coefficient matrix corresponding to other TRPs; the other TRPs are TRPs in the multiple TRPs except a third TRP;

the third TRP is indicated by the coefficient position indication information, or the third TRP is predefined or configured by the network device,

wherein the coefficient indication information is not used to indicate the strongest combination coefficient in the combination coefficient matrix corresponding to the third TRP.

46. The method of claim 43, further comprising:

receiving coefficient indication information sent by the terminal device, wherein the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP;

the third TRP is indicated by the coefficient position indication information, or the third TRP is predefined or configured by the network device;

a position of the strongest combination coefficient corresponding to the fourth TRP in the combination coefficient matrix corresponding to the multiple TRPs is indicated by the coefficient position indication information,

wherein the coefficient indication information is not used to indicate the strongest combination coefficient in the combination coefficient matrix corresponding to the third TRP.

47. The method of claim 45 or 46, wherein in the coefficient position indication information, the third TRP is indicated by

$$\lceil \log_2 N \rceil \text{bits}$$
,

where N represents a numeric count of TRPs.

48. The method of claim 46, wherein in the coefficient position indication information, the position of the strongest combination coefficient corresponding to the fourth TRP in the combination coefficient matrix corresponding to the multiple TRPs is indicated by $\lceil \log_2 (\sum_{n=1,n\neq j}^{N} 2L_n M_n) \rceil \text{bits}$ or $\lceil \log_2 \sum_{n=1,n\neq j}^{N} K_n^{NZ} \rceil \text{bits}$ ,

where N represents a numeric count of TRPs, $L_n$ represents a numeric count of SD basis vectors or a numeric count of ports of an $n^{th}$ TRP, $M_n$ represents a numeric count of FD basis vectors of the $n^{th}$ TRP, $K_n^{NZ}$ represents a numeric count of non-zero coefficients in a combination coefficient matrix of one transmission layer corresponding to the $n^{th}$ TRP, and a $j^{th}$ TRP is the third TRP.

49. The method of claim 43, wherein the coefficient further comprises the strongest amplitude and/or the strongest reference amplitude;

wherein the coefficient position indication information is further used to indicate a position of the strongest amplitude in the combination coefficient matrix corresponding to the multiple TRPs, wherein the position of the strongest amplitude represents a TRP comprising the strongest amplitude; and/or

the coefficient position indication information is further used to indicate a position of the strongest reference amplitude in the combination coefficient matrix corresponding to the multiple TRPs, and the position of the strongest reference amplitude represents a TRP comprising the strongest reference amplitude.

50. The method of claim 37, wherein the coefficient comprises one strongest combination coefficient, and the coefficient position indication information is used to indicate a position of the strongest combination coefficient in the combination coefficient matrix corresponding to multiple TRP groups.

51. The method of claim 50, wherein the coefficient position indication information comprises third indication information for indicating a first TRP group corresponding to the strongest combination coefficient, and fourth indication information for indicating the position of the strongest combination coefficient in the combination coefficient matrix corresponding to the first TRP group; or

the coefficient position indication information comprises fourth indication information for indicating the position of the strongest combination coefficient in the combination coefficient matrix corresponding to the first TRP group, and the first TRP group is predefined or configured by the network device.

52. The method of claim 51, wherein the third indication information is indicated by $\lceil \log_2 G \rceil \text{bits}$;

the fourth indication information is indicated by $\left\lceil \log_2 (\sum_{i=1}^{I_g} 2L_{g,i} M_{g,i}) \right\rceil \text{bits}$,

where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $M_{g,i}$ represents a numeric count of FD basis vectors of the $i^{th}$ TRP in the $g^{th}$ TRP group.

53. The method of claim 51, wherein the third indication information is indicated by $\lceil \log_2 G \rceil \text{bits}$;

the fourth indication information is indicated by any one of: $\left\lceil \log_2 (\sum_{i=1}^{I_g} 2L_{g,i}) \right\rceil \text{bits}$, and

$\left\lceil \log_2 (\sum_{i=1}^{I_g} K_{g,i}^{NZ}) \right\rceil \text{bits}$,

where G represents a numeric count of TRP groups, $I_g$ represents a numeric count of TRPs in a $g^{th}$ TRP group, $L_{g,i}$ represents a numeric count of SD basis vectors or a numeric count of ports of an $i^{th}$ TRP in the $g^{th}$ TRP group, and $K_{g,i}^{NZ}$ represents a numeric count of non-zero coefficients in a combination coefficient matrix of one transmission layer corresponding to the $i^{th}$ TRP in the $g^{th}$ TRP group.

54. The method of claim 37, wherein the coefficient comprises multiple strongest combination coefficients, and the coefficient position indication information is used to indicate a position of the strongest combination coefficient in the combination coefficient matrix corresponding to each TRP group,
wherein the multiple strongest combination coefficients correspond to the multiple TRP groups in a one-to-one manner.

55. The method of claim 54, wherein the coefficient position indication information comprises indication information for indicating the position of the strongest combination coefficient in the combination coefficient matrix corresponding to each TRP group;

the indication information for indicating the position of the strongest combination coefficient corresponding to a $g^{th}$ TRP group is indicated by $\left\lceil \log_2 (\sum_{i=1}^{I_g} 2L_{g,i}) \right\rceil \text{bits}$, or $\lceil \log_2 K_{g,0} \rceil \text{bits}$,
where $I_g$ represents a numeric count of TRPs in the $g^{th}$ TRP group, $L_{g,i}$ represents a numeric count of SD basis vectors or a numeric count of ports of an $i^{th}$ TRP in the $g^{th}$ TRP group, and $K_{g,0}$ represents a maximum number of non-zero coefficients of each transmission layer of the $g^{th}$ TRP group.

56. The method of claim 54, further comprising:

receiving coefficient indication information sent by the terminal device, wherein the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group;
the third TRP group is indicated by the coefficient position indication information, or the third TRP group is predefined or configured by the network device,
wherein the coefficient indication information is not used to indicate the strongest combination coefficient in the combination coefficient matrix corresponding to the third TRP group.

57. The method of claim 54, further comprising:

receiving coefficient indication information sent by the terminal device, wherein the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group;

the third TRP group is indicated by the coefficient position indication information, or the third TRP group is predefined or configured by the network device;

a position of the strongest combination coefficient corresponding to the fourth TRP group in the combination coefficient matrix corresponding to the multiple TRP groups is indicated by the coefficient position indication information,

wherein the coefficient indication information is not used to indicate the strongest combination coefficient in the combination coefficient matrix corresponding to the third TRP group.

58. The method of claim 56 or 57, wherein in the coefficient position indication information, the third TRP group is indicated by $\lceil \log_2 G \rceil \text{bits}$,

where G represents a numeric count of TRP groups.

59. The method of claim 57, wherein in the coefficient position indication information, the position of the strongest combination coefficient corresponding to the fourth TRP group in the combination coefficient matrix corresponding to the multiple TRP groups is indicated by $\left\lceil \log_2 \left( \sum_{i=1, i \neq j}^{G} 2L_{g,i} \right) \right\rceil \text{bits}$,

where G represents a numeric count of TRP groups, $L_{g,i}$ represents a numeric count of SD basis vectors or a numeric count of ports of an $i^{\text{th}}$ TRP group, and a $j^{\text{th}}$ TRP group is the third TRP group.

60. The method of claim 54, wherein the coefficient further comprises the strongest amplitude and/or the strongest reference amplitude;

wherein the coefficient position indication information is further used to indicate a position of the strongest amplitude in the combination coefficient matrix corresponding to the multiple TRP groups, and the position of the strongest amplitude represents a TRP group comprising the strongest amplitude; and/or

the coefficient position indication information is further used to indicate a position of the strongest reference amplitude in the combination coefficient matrix corresponding to the multiple TRP groups, and the position of the strongest reference amplitude represents a TRP group comprising the strongest reference amplitude.

61. The method of claim 37, wherein the coefficient comprises the strongest reference amplitude;

the coefficient position indication information is used to indicate a position of the strongest reference amplitude in the combination coefficient matrix corresponding to the multiple TRPs,

wherein a numeric count of the strongest combination coefficients in the combination coefficient matrix corresponding to the multiple TRPs is multiple.

62. The method of claim 61, wherein the coefficient position indication information is indicated by $\lceil \log_2 N \rceil \text{bits}$, or by a bitmap of N bits,

where N represents a numeric count of TRPs.

63. The method of claim 37, wherein the coefficient comprises the strongest reference amplitude;

the coefficient position indication information is used to indicate a position of the strongest reference amplitude in the combination coefficient matrix corresponding to the multiple TRP groups,

wherein a numeric count of the strongest combination coefficients in the combination coefficient matrix corresponding to the multiple TRP groups is multiple.

64. The method of claim 63, wherein the coefficient position indication information is indicated by $\lceil \log_2 G \rceil \text{bits}$, or by a bitmap of G bits,

where G represents a numeric count of TRP groups.

65. The method of claim 37, wherein the coefficient comprises the strongest amplitude, and a numeric count of the strongest amplitudes is one;

the coefficient position indication information is used to indicate a position of the strongest amplitude in the combination coefficient matrix corresponding to the multiple TRPs, and the position of the strongest amplitude represents a second TRP comprising the strongest amplitude,
wherein a numeric count of the strongest combination coefficients in the combination coefficient matrix corresponding to the multiple TRPs is multiple.

66. The method of claim 65, wherein the coefficient position indication information is indicated by $\lceil \log_2 N \rceil \text{bits}$, where N represents a numeric count of TRPs.

67. The method of claim 37, wherein the coefficient comprises the strongest amplitude, and a numeric count of the strongest amplitude is one;

the coefficient position indication information is used to indicate a position of the strongest amplitude in the combination coefficient matrix corresponding to the multiple TRP groups, wherein the position of the strongest amplitude represents a second TRP group comprising the strongest amplitude,
wherein a numeric count of the strongest combination coefficients in the combination coefficient matrix corresponding to multiple TRP groups is multiple.

68. The method of claim 67, wherein the coefficient position indication information is indicated by $\lceil \log_2 G \rceil$ bits, where G represents a numeric count of TRP groups.

69. A communication device, provided in a terminal device and comprising:

a transceiver unit configured to receive codebook parameter information sent by a network device, wherein the codebook parameter information is used to determine a dimension of a combination coefficient matrix corresponding to multiple TRPs or multiple TRP groups;
the transceiver unit is further configured to send coefficient position indication information to the network device;
the coefficient position indication information is used to indicate a position of a specific coefficient in the combination coefficient matrix.

70. A communication device, provided in a network device and comprising:

a transceiver unit configured to send codebook parameter information to a terminal device, wherein the codebook parameter information is used to determine a dimension of a combination coefficient matrix corresponding to multiple TRPs or multiple TRP groups;
the transceiver unit is further configured to receive coefficient position indication information sent by the terminal device;
the coefficient position indication information is used to indicate a position of a specific coefficient in the combination coefficient matrix.

71. A communication device, comprising:

a processor; and
a memory having stored therein a computer program,
wherein the processor executes the computer program stored in the memory, so that the device performs the method according to any one of claims 1 to 34.

72. A communication device, comprising:

a processor; and
a memory having stored therein a computer program,
wherein the processor executes the computer program stored in the memory, so that the device performs the method according to any one of claims 35 to 68.

73. A communication device, comprising:

a processor; and
an interface circuit configured to receive code instructions and transmit the code instructions to the processor, wherein the processor is configured to run the code instructions to perform the method according to any one of claims 1 to 34.

74. A communication device, comprising:

a processor; and
an interface circuit configured to receive code instructions and transmit the code instructions to the processor, wherein the processor is configured to run the code instructions to perform the method according to any one of claims 35 to 68.

75. A computer-readable storage medium for store instructions that, when executed, cause the method according to any one of claims 1 to 34 to be implemented.

76. A computer-readable storage medium for storing instructions that, when executed, cause the method according to any one of claims 35 to 68 to be implemented.

FIG. 1

FIG. 2

| |
|---|
| receiving codebook parameter information sent by a network device, in which the codebook parameter information is used to determine a dimension of a combination coefficient matrix corresponding to multiple TRPs or multiple TRP groups |

S301

| |
|---|
| sending coefficient position indication information to the network device, in which the coefficient position indication information is used to indicate a position of a specific coefficient in the combination coefficient matrix |

S302

FIG. 3

receiving codebook parameter information sent by a network device, in which the codebook parameter information is used to determine a dimension of a combination coefficient matrix corresponding to multiple TRPs

S401

sending coefficient position indication information to the network device, in which the coefficient includes one strongest combination coefficient, and the coefficient position indication information is used to indicate a position of the strongest combination coefficient in the combination coefficient matrix corresponding to the multiple TRPs

S402

FIG. 4

receiving codebook parameter information sent by a network device, in which the codebook parameter information is used to determine a dimension of a combination coefficient matrix corresponding to multiple TRPs

S501

sending coefficient position indication information to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner

S502

FIG. 5

receiving codebook parameter information sent by a network device, in which the codebook parameter information is used to determine a dimension of a combination coefficient matrix corresponding to multiple TRPs

S511

sending coefficient position indication information to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner

S512

sending coefficient indication information to the network device, in which the coefficient indication information is used to indicate a reference amplitude and a differential phase of the strongest combination coefficients in the combination coefficient matrix corresponding to other TRPs; the other TRPs are TRPs in the multiple TRPs except a third TRP; the third TRP is indicated by the coefficient position indication information, or the third TRP is predefined or configured by the network device, in which the coefficient indication information is not used to indicate the strongest combination coefficient in the combination coefficient matrix corresponding to the third TRP

S513

FIG. 5a

receiving codebook parameter information sent by a network device, in which the codebook parameter information is used to determine a dimension of a combination coefficient matrix corresponding to multiple TRPs

S521

sending coefficient position indication information to the network device, in which the coefficient includes multiple strongest combination coefficients, and the coefficient position indication information is used to indicate a position of the strongest combination coefficient in the combination coefficient matrix corresponding to each TRP, in which the multiple strongest combination coefficients correspond to the multiple TRPs in a one-to-one manner

S522

sending coefficient indication information to the network device, in which the coefficient indication information is used to indicate a reference amplitude and a differential phase of the strongest combination coefficient in the combination coefficient matrix corresponding to a fourth TRP; the fourth TRP is one of other TRPs in the multiple TRPs except a third TRP; the third TRP is indicated by the coefficient position indication information, or the third TRP is predefined or configured by the network device; a position of the strongest combination coefficient corresponding to the fourth TRP in the combination coefficient matrix corresponding to the multiple TRPs is indicated by the coefficient position indication information; in which the coefficient indication information is not used to indicate the strongest combination coefficient in the combination coefficient matrix corresponding to the third TRP

S523

FIG. 5b

receiving codebook parameter information sent by a network device, in which the codebook parameter information is used to determine a dimension of a combination coefficient matrix corresponding to multiple TRP groups

S601

sending coefficient position indication information to the network device, in which the coefficient includes one strongest combination coefficient, and the coefficient position indication information is used to indicate a position of the strongest combination coefficient in the combination coefficient matrix corresponding to the multiple TRP groups

S602

FIG. 6

receiving codebook parameter information sent by a network device, in which the codebook parameter information is used to determine a dimension of a combination coefficient matrix corresponding to multiple TRP groups

S701

sending coefficient position indication information to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner

S702

FIG. 7

receiving codebook parameter information sent by a network device, in which the codebook parameter information is used to determine a dimension of a combination coefficient matrix corresponding to multiple TRP groups

S711

sending coefficient position indication information to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner

S712

sending coefficient indication information to the network device, in which the coefficient indication information is used to indicate a reference amplitude and a differential phase of the strongest combination coefficients in the combination coefficient matrix corresponding to other TRP groups; the other TRP groups are TRP groups in the multiple TRP groups except a third TRP group; the third TRP group is indicated by the coefficient position indication information, or the third TRP group is predefined or configured by the network device; in which the coefficient indication information is not used to indicate the strongest combination coefficient in the combination coefficient matrix corresponding to the third TRP group

S713

FIG. 7a

receiving codebook parameter information sent by a network device, in which the codebook parameter information is used to determine a dimension of a combination coefficient matrix corresponding to multiple TRP groups ⟋ S721

sending coefficient position indication information to the network device, in which the coefficient includes multiple strongest combination coefficients, and the coefficient position indication information is used to indicate a position of the strongest combination coefficient in the combination coefficient matrix corresponding to each TRP group, in which the multiple strongest combination coefficients correspond to the multiple TRP groups in a one-to-one manner ⟋ S722

sending coefficient indication information to the network device, in which the coefficient indication information is used to indicate a reference amplitude and a differential phase of the strongest combination coefficient in the combination coefficient matrix corresponding to a fourth TRP group; the fourth TRP group is one of other TRP groups in the multiple TRP groups except a third TRP group; the third TRP group is indicated by the coefficient position indication information, or the third TRP group is predefined or configured by the network device; a position of the strongest combination coefficient corresponding to the fourth TRP group in the combination coefficient matrix corresponding to the multiple TRP groups is indicated by the coefficient position indication information; in which the coefficient indication information is not used to indicate the strongest combination coefficient in the combination coefficient matrix corresponding to the third TRP group ⟋ S723

FIG. 7b

receiving codebook parameter information sent by a network device, in which the codebook parameter information is used to determine a dimension of a combination coefficient matrix corresponding to multiple TRPs

S801

sending coefficient position indication information to the network device, in which the coefficient includes a strongest reference amplitude; the coefficient position indication information is used to indicate a position of the strongest reference amplitude in the combination coefficient matrix corresponding to the multiple TRPs, in which the number of the strongest combination coefficients in the combination coefficient matrix corresponding to the multiple TRPs is multiple

S802

FIG. 8

receiving codebook parameter information sent by a network device, in which the codebook parameter information is used to determine a dimension of a combination coefficient matrix corresponding to multiple TRP groups

S901

sending coefficient position indication information to the network device, in which the coefficient includes a strongest reference amplitude; the coefficient position indication information is used to indicate a position of the strongest reference amplitude in the combination coefficient matrix corresponding to the multiple TRP groups, in which the number of the strongest combination coefficients in the combination coefficient matrix corresponding to the multiple TRP groups is multiple

S902

FIG. 9

receiving codebook parameter information sent by a network device, in which the codebook parameter information is used to determine a dimension of a combination coefficient matrix corresponding to multiple TRPs $\diagup$ S1001

sending coefficient position indication information to the network device, in which the coefficient includes a strongest amplitude, and the number of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude; in which the number of the strongest combination coefficients in the combination coefficient matrix corresponding to the multiple TRPs is multiple $\diagup$ S1002

FIG. 10

receiving codebook parameter information sent by a network device, in which the codebook parameter information is used to determine a dimension of a combination coefficient matrix corresponding to multiple TRP groups $\diagup$ S1101

sending coefficient position indication information to the network device, in which the coefficient includes a strongest amplitude, and the number of the strongest amplitudes is one; the coefficient position indication information is used to indicate a position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRP groups is multiple $\diagup$ S1102

FIG. 11

sending codebook parameter information to a terminal device, in which the codebook parameter information is used to determine a dimension of a combination coefficient matrix corresponding to multiple TRPs or multiple TRP groups ⟋S1201

↓

receiving coefficient position indication information sent by the terminal device, in which the coefficient position indication information is used to indicate a position of a specific coefficient in the combination coefficient matrix ⟋S1202

FIG. 12

sending codebook parameter information to a terminal device, in which the codebook parameter information is used to determine a dimension of a combination coefficient matrix corresponding to multiple TRPs ⟋S1301

↓

receiving coefficient position indication information sent by the terminal device, in which the coefficient includes a strongest combination coefficient, and the coefficient position indication information is used to indicate a position of the strongest combination coefficient in the combination coefficient matrix corresponding to the multiple TRPs ⟋S1302

FIG. 13

sending codebook parameter information to a terminal device, in which the codebook parameter information is used to determine a dimension of a combination coefficient matrix corresponding to multiple TRP groups ⟋S1401

↓

receiving coefficient position indication information sent by the terminal device, in which the coefficient includes a strongest combination coefficient, and the coefficient position indication information is used to indicate a position of the strongest combination coefficient in the combination coefficient matrix corresponding to the multiple TRP groups ⟋S1402

FIG. 14

sending codebook parameter information to a terminal device, in which the codebook parameter information is used to determine a dimension of a combination coefficient matrix corresponding to multiple TRPs or multiple TRP groups ⟍S1501

receiving coefficient position indication information sent by the terminal device, in which the coefficient includes a strongest reference amplitude; the coefficient position indication information is used to indicate a position of the strongest reference amplitude in the combination coefficient matrix corresponding to the multiple TRPs or the multiple TRP groups, in which the number of the strongest combination coefficients in the combination coefficient matrix corresponding to the multiple TRPs or the multiple TRP groups is multiple ⟍S1502

FIG. 15

sending codebook parameter information to a terminal device, in which the codebook parameter information is used to determine a dimension of a combination coefficient matrix corresponding to multiple TRPs or multiple TRP groups ⟍S1601

receiving coefficient position indication information sent by the terminal device, in which the coefficient includes a strongest amplitude, and the number of the strongest amplitudes is one; the coefficient position indication information is used to indicate a position of the strongest amplitude in the combination coefficient matrix corresponding to the multiple TRPs, and the position of the strongest amplitude represents a second TRP including the strongest amplitude; or the coefficient position indication information is used to indicate a position of the strongest amplitude in the combination coefficient matrix corresponding to the multiple TRP groups, and the position of the strongest amplitude represents a second TRP group including the strongest amplitude; in which the number of the strongest combination coefficients in the combination coefficient matrix corresponding to the multiple TRPs or the multiple TRP groups is multiple ⟍S1602

FIG. 16

communication device

transceiver unit —1701

—170

processing unit —1702

FIG. 17

communication device

interface circuit —1806

processor —1801

—180

antenna —1805

memory —1802

computer program —1803

transceiver —1804

FIG. 18

chip

processor —1901

—190

interface —1902

memory —1903

FIG. 19

## INTERNATIONAL SEARCH REPORT

| International application No. |
|---|
| **PCT/CN2022/123644** |

| A. | CLASSIFICATION OF SUBJECT MATTER |
|---|---|

H04B7/024(2017.01)i;H04B7/06(2006.01)i;H04B7/0456(2017.01)i

According to International Patent Classification (IPC) or to both national classification and IPC

| B. | FIELDS SEARCHED |
|---|---|

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; VEN; CNKI; ENTXTC; 3GPP: 码本, 组合系数矩阵, 系数, 位置, 指示, 索引, 最强, 幅度, 基向量, 一个, codebook, multi-TRPs, multi-panels, strongest coefficient, SCI, one, index, location, CJT, per TRP

| C. | DOCUMENTS CONSIDERED TO BE RELEVANT |
|---|---|

| Category* | Citation of document, with indication, where appropriate, of the relevant passages | Relevant to claim No. |
|---|---|---|
| X | MODERATOR (SAMSUNG). "Moderator Summary#3 on Rel-18 CSI Enhancements: ROUND 3" *3GPP TSG RAN WG1 #109-e R1-2205362*, 2022-05-17 (2022-05-17), pp. 1-15 and 22 | 1-76 |
| X | CN 113454926 A (QUALCOMM INC.) 2021-09-28 (2021-09-28) description, paragraphs [0037]-[0177] | 1-76 |
| X | CN 111525947 A (TELECOMMUNICATIONS SCIENCE AND TECHNOLOGY RESEARCH INSTITUTE CO., LTD.) 2020-08-11 (2020-08-11) description, paragraphs [0002]-[0399] | 1-76 |
| A | CN 110383710 A (SAMSUNG ELECTRONICS CO., LTD.) 2019-10-25 (2019-10-25) entire document | 1-76 |
| A | CN 110832789 A (LG ELECTRONICS INC.) 2020-02-21 (2020-02-21) entire document | 1-76 |
| A | CN 111756417 A (TELECOMMUNICATIONS TECHNOLOGY RESEARCH INSTITUTE CO., LTD.) 2020-10-09 (2020-10-09) entire document | 1-76 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2023** | **20 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| | International application No. |
|---|---|
| | **PCT/CN2022/123644** |

**C.    DOCUMENTS CONSIDERED TO BE RELEVANT**

| Category* | Citation of document, with indication, where appropriate, of the relevant passages | Relevant to claim No. |
|---|---|---|
| A | WO 2022064465 A1 (LENOVO SINGAPORE PTE LTD.) 2022-03-31 (2022-03-31) entire document | 1-76 |

Form PCT/ISA/210 (second sheet) (July 2022)

## INTERNATIONAL SEARCH REPORT
### Information on patent family members

International application No.

**PCT/CN2022/123644**

| Patent document cited in search report | | | Publication date (day/month/year) | Patent family member(s) | | | Publication date (day/month/year) |
|---|---|---|---|---|---|---|---|
| CN | 113454926 | A | 28 September 2021 | WO | 2020173402 | A1 | 03 September 2020 |
| | | | | EP | 3931981 | A1 | 05 January 2022 |
| | | | | EP | 3931981 | A4 | 23 November 2022 |
| | | | | US | 2022109480 | A1 | 07 April 2022 |
| | | | | WO | 2020172768 | A1 | 03 September 2020 |
| CN | 111525947 | A | 11 August 2020 | KR | 20210116590 | A | 27 September 2021 |
| CN | 110383710 | A | 25 October 2019 | EP | 3526909 | A1 | 21 August 2019 |
| | | | | EP | 3526909 | A4 | 23 October 2019 |
| | | | | WO | 2018164537 | A1 | 13 September 2018 |
| | | | | KR | 20190118567 | A | 18 October 2019 |
| | | | | KR | 102476580 | B1 | 12 December 2022 |
| | | | | US | 2018262253 | A1 | 13 September 2018 |
| | | | | US | 10250313 | B2 | 02 April 2019 |
| CN | 110832789 | A | 21 February 2020 | JP | 2022000963 | A | 04 January 2022 |
| | | | | WO | 2018174636 | A2 | 27 September 2018 |
| | | | | WO | 2018174636 | A3 | 15 November 2018 |
| | | | | KR | 20210153748 | A | 17 December 2021 |
| | | | | KR | 102364258 | B1 | 17 February 2022 |
| | | | | JP | 2020511899 | A | 16 April 2020 |
| | | | | JP | 6942813 | B2 | 29 September 2021 |
| | | | | US | 2020083938 | A1 | 12 March 2020 |
| | | | | US | 11271625 | B2 | 08 March 2022 |
| | | | | US | 2022006497 | A1 | 06 January 2022 |
| | | | | KR | 20190120372 | A | 23 October 2019 |
| | | | | KR | 102338306 | B1 | 10 December 2021 |
| | | | | EP | 3605868 | A2 | 05 February 2020 |
| | | | | EP | 3605868 | A4 | 16 December 2020 |
| CN | 111756417 | A | 09 October 2020 | None | | | |
| WO | 2022064465 | A1 | 31 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022109543 W